# EUROPEAN PATENT SPECIFICATION

(11) **EP 1 527 141 B1**
(45) Date of publication and mention of the grant of the patent: **27.01.2010**
(21) Application number: 03725403.4
(22) Date of filing: 16.05.2003
(51) Int. Cl.: C09D 11/00, C09B 45/14, C09B 45/16, C09B 45/18, C09B 45/20

(54) **PROCESSES, COMPOSITIONS AND COMPOUNDS**
VERFAHREN, ZUSAMMENSETZUNGEN UND VERBINDUNGEN
PROCEDES, COMPOSITIONS ET COMPOSES

(30) Priority: 27.07.2002 GB 0217443; 27.07.2002 GB 0217444; 27.07.2002 GB 0217446; 27.07.2002 GB 0217442
(43) Date of publication of application: 04.05.2005
(73) Proprietor: FUJIFILM Imaging Colorants Limited, Blackley, Manchester M9 8ZS (GB)
(72) Inventor: WRIGHT, Gavin, Manchester M9 8ZS (GB); JOHNSON, Kevin, Lancashire PR25 1UB (GB); RAGGATT, Mairi, Elizabeth, Oxon, OX10 6NF (GB); PATEL, Prakash, Manchester M9 8ZS (GB)
(74) Representative: Mayall, John
(86) International application number: PCT/GB2003/002106
(87) International publication number: WO 2004/011560

(56) References cited:
- EP-A- 1 270 676

## Description

This invention relates to compounds, to inks and to their use in ink jet printing ("IJP"). IJP is a non-impact printing technique in which droplets of ink are ejected through a fine nozzle onto a substrate without bringing the nozzle into contact with the substrate.

There are many demanding performance requirements for compounds and inks used in IJP. For example they desirably provide sharp, non-feathered images having good water-fastness, light-fastness and optical density. The inks are often required to dry quickly when applied to a substrate to prevent smudging, but they should not form a crust over the tip of an ink jet nozzle because this will stop the printer from working. The inks should also be stable to storage over time without decomposing or forming a precipitate which could block the fine nozzle.

WO 01/48090 relates to metal chelate azo compounds which comprise a naphthol component and heterocyclic groups. However, WO 01/48090 does not disclose such compounds further substituted by a triazole ring.

EP 1,270,676, published in 2003, describes certain metal chelated azo dyes and their use in a PM-750-C ink jet printer from Seiko Epson Corporation. See Examples 2 to 11.

Certain metal chelates have been used in spectrophotometric studies, as described in (i) Analytica Chimica Acta (1981), 131(1), 277-280; (ii) Izvestiya Akademii Nauk Tadzhikskoi SSR, Otdelenie Fiziko-Matematicheskikh I Geologo-Khimicheskikh Nauk (1981), (1), 45-51; and (iii) in Synth. React. Inorg. Met. Org. Chem (a) 19(9), 983-996 (1989), see page 994; (b) 23(3), 337-346 (1993), see page 345; (c) 18(7), 634-656 (1988), see page 654; and (d) 26(3), 493-507 (1996), see page 500 and 501.

Triazo heterocyclic disperse dyes for the conventional dyeing of polyester are known from Revue Roumaine de Chemie, (1996), 41 (11-12), 971-977.

Triazole dyes are known from Chemicky Prumysl (1982), 32(6), 300-7.

US 4,207,104 discloses certain non-diffusible dye releasing compounds used in silver halide emulsion layers.

JP48-89932 describes certain chromium and cobalt chelates for use in the field of conventional dyeing of certain textile fibres. See page 175 and 177. Also see Examples 7-9.

There is a need for compounds which meet the demanding performance requirements in IJP and, in particular, having a good combination of high chroma (i.e. brightness), hight light-fastness and fastness to oxidising gasses (e.g. ozone).

According to a first aspect of the present invention there is provided a process for printing an image on a substrate comprising applying thereto by means of a thermal ink jet printer a metal chelate compound of the Formula (1) and salts thereof: 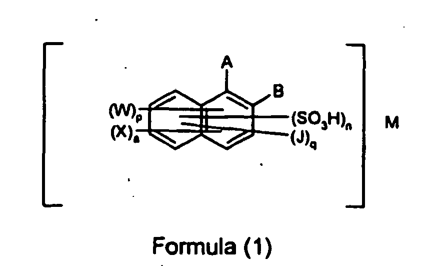 wherein:
- one of A and B: is OH and the other is an azotriazole group;
- each W: independently is a carboxy or carbonamido group;
- each X: independently is a substituent other than H, sulphonamido, carboxy, sulpho and carbonamido;
- J: is a sulphonamido group;
- M: is a metal or boron;
- a, q, p and n: are each independently 0, 1, 2, 3 or 4; and
- (p+q+a+n): is 0, 1, 2, 3 or 4.

Preferably n is 1, 2 or 3, more preferably 1 or 2.

Preferred azotriazole groups are of the Formula (2a), (2b), (2c), (2d) or (2e): 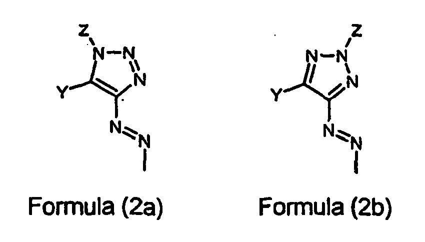 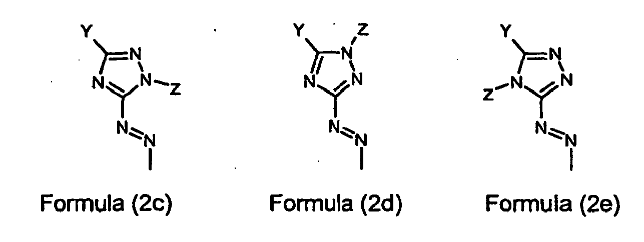 wherein:
- Z: is H, -OH, -Br, -Cl, -F, -CN, -NO₂, -PO₃H₂, -SO₃H, -CO₂H, optionally substituted phosphoramide, optionally substituted alkyl, optionally substituted alkenyl, optionally substituted alkynyl, optionally substituted aryl, optionally substituted aralkyl, -SR¹, -SO₂R¹, -SO₂NR²R³, -SOR¹, -OR¹, -C(O)R¹, -C(O)OR¹, -C(O)NR²R³, -NR²R³, -NHCOR¹; and
- Y: is CF₃ or any one of the groups defined for Z; and
wherein:
- R¹, R² and R³: are each independently H, optionally substituted alkyl, optionally substituted alkenyl, optionally substituted alkynyl, optionally substituted aryl or optionally substituted aralkyl; or
- R² and R³: together with the nitrogen to which they are attached form an optionally substituted 5- or 6- membered ring.

When Y or Z is optionally substituted phosphoramide the phosphoramide is preferably substituted by optionally substituted alkyl, optionally substituted aryl or optionally substituted aralkyl. Preferred substituents include for example methyl, ethyl, n-propyl, iso-propyl, hydroxyethyl, optionally substituted phenyl or optionally substituted benzyl.

When Y or Z is optionally substituted alkyl, the alkyl group is preferably optionally substituted C₁₋₄-alkyl, more preferably C₁₋₄-alkyl optionally substituted by halo, hydroxy, carboxy, sulpho or cyano. Examples include methyl, ethyl, n-propyl, iso-propyl, trifluoromethyl, hydroxyethyl, cyanoethyl, sulphopropyl and carboxyethyl. However, when Y or Z is optionally substituted alkyl it is especially preferred that the alkyl group is methyl, ethyl or trifluoromethyl.

When Y or Z is optionally substituted alkenyl, Y or Z is preferably optionally substituted C₂-C₄ alkenyl.

When Y or Z is optionally substituted alkynyl, Y or Z is preferably optionally substituted C₂-C₆ alkynyl.

When Y or Z is optionally substituted aryl the aryl group is preferably optionally substituted phenyl, optionally substituted naphthyl or optionally substituted heteroaryl. It is especially preferred that when Y is optionally substituted aryl it is optionally substituted phenyl or optionally substituted heteroaryl.

Preferred optional substituents on Y when Y is optionally substituted aryl include sulpho, carboxy, nitro, cyano, halo (preferably chloro), alkoxy (preferably C₁₋₆-alkoxy), alkyl ((preferably C₁₋₆-alkyl) optionally substituted by halogen (preferably fluoro), hydroxy, carboxy, phosphoric acid and sulpho. Especially preferred optional substituents on Y when Y is optionally substituted aryl are selected from C₁₋₄-alkyl, carboxy, phosphoric acid and sulpho. However, it is most preferred that when Y is optionally substituted aryl that the aryl group is substituted by carboxy.

Preferred optional substituents on Z when Z is optionally substituted aryl include sulpho, carboxy, nitro, cyano, halo (preferably chloro), alkoxy (preferably C₁₋₆-alkoxy), alkyl (preferably C₁₋₆-alkyl) optionally substituted by halogen (preferably fluoro), hydroxy, carboxy, phosphoric acid and sulpho. Especially preferred optional substituents on Z as optionally substituted aryl are selected from carboxy or halogen (preferably chloro).

When Y or Z is optionally substituted aralkyl the aralkyl group is preferably optionally substituted benzyl.

However, Y in Formulae (2a), (2b), (2c), (2d) or (2e) is preferably H, thiol, carboxy, halo (preferably chloro), alkyl ((preferably C₁₋₆-alkyl) optionally substituted by hydroxy, carboxy, halo (preferably fluoro) or sulpho. It is especially preferred that Y in Formulae (2a) to (2e) is H, C₁₋₄-alkyl or carboxy or sulpho. However, it is most especially preferred that Y is H or CO₂H.

Z in Formulae (2a) to (2e) is preferably H, ethylester or alkyl (preferably C₁₋₄-alkyl) optionally substituted by hydroxy, carboxy, halo (preferably fluoro) or sulpho. It is especially preferred that Z in Formulae (2a) to (2e) is H or C₁₋₄-alkyl. However, it is most especially preferred that Z is H.

In one embodiment Z is H and Y is H or CO₂H.

R¹, R² and R³ are each independently preferably H, optionally substituted C₁₋₄-alkyl or optionally substituted aryl, more preferably H, C₁₋₄-alkyl optionally substituted by hydroxy, carboxy, sulpho or cyano or phenyl optionally substituted by hydroxy, carboxy, sulpho, nitro, trifluoromethyl or cyano. Examples of groups represented by R¹, R² and R³ include methyl, ethyl, n-propyl, iso-propyl, hydroxyethyl, cyanoethyl, sulphopropyl, carboxyethyl or carboxyphenyl. It is especially preferred however that R¹, R² and R³ are H, optionally substituted C₁₋₄-alkyl for example, trifluoromethyl, hydroxyethyl or cyanoethyl, or optionally substituted aryl for example phenyl optionally substituted by carboxy; or R² and R³ together with the nitrogen to which they are attached form a 5- or 6- membered ring (preferably morpholine, piperidine or piperazine).

The optional substituent X is preferably -OH, -Br, -Cl, -F, -CF₃, -CN, -NO₂, -PO₃H₂, optionally substituted alkyl, optionally substituted alkenyl, optionally substituted alkynyl, optionally substituted aryl, optionally substituted aralkyl, -SR¹, -SO₂R¹, -SOR¹, -OR¹, -C(O)R¹, -C(O)OR⁵, or -NR³R⁴;
wherein:
- R¹, R³ and R⁴: are each independently H, optionally substituted alkyl, optionally substituted alkenyl, optionally substituted alkynyl, optionally substituted aryl or optionally substituted aralkyl; or
- R³ and R⁴: together with the nitrogen to which they are attached form an optionally substituted 5- or 6- membered ring; and
- R⁵: is any one of the groups defined for R¹ other than H.

When X is optionally substituted alkyl it is preferably optionally substituted C₁₋₄-alkyl, more preferably C₁₋₄-alkyl optionally substituted by halogen, hydroxy, carboxy, sulpho or cyano. Examples include ethyl, n-propyl, iso-propyl, hydroxyethyl, cyanoethyl, sulpho, propyl and carboxyethyl. However, when X is optionally substituted C₁₋₄-alkyl it is especially preferred that it is substituted by cyano or halogen (preferably fluoro).

When X is optionally substituted alkenyl, it is preferably optionally substituted C₂-C₄ alkenyl.

When X is optionally substituted alkynyl, it is preferably optionally substituted C₂-C₆ alkynyl.

When X is optionally substituted aryl it is preferably optionally substituted phenyl or optionally substituted naphthyl. It is especially preferred that when Y is optionally substituted aryl it is optionally substituted phenyl.

Preferred optional substituents on X when X is optionally substituted aryl include:
sulpho, carboxy, halogen (preferably chloro) alkoxy (preferably C₁₋₆-alkoxy) or alkyl (preferably C₁₋₆-alkyl) optionally substituted by halogen, nitro, cyano, hydroxy, carboxy, phosphoric acid or sulpho.

When X is optionally substituted aralkyl it is preferably optionally substituted by benzyl.

It is especially preferred that X is an electron withdrawing group for example nitro, cyano or trifluoromethyl.

It is most especially preferred that X is CN.

The optionally substituted sulphonamido group J is preferably of the Formula SO₂NR⁶R⁷, wherein R⁶ and R⁷ are each independently H, optionally substituted alkyl, optionally substituted alkenyl, optionally substituted alkynyl, optionally substituted aryl, optionally substituted aralkyl; or

R⁶ and R⁷ together with the nitrogen to which they are attached form an optionally substituted 5- or 6- membered ring.

When R⁶ or R⁷ is optionally substituted alkyl each is preferably optionally substituted C₁₋₄-alkyl, more preferably C₁₋₄-alkyl optionally substituted by halogen, hydroxy, carboxy, sulpho or cyano. Examples include ethyl, n-propyl, iso-propyl, hydroxyethyl, cyanoethyl, sulpho, propyl and carboxyethyl. However, when either of R¹⁰ and R¹¹ is optionally substituted C₁₋₄-alkyl it is especially preferred that each is substituted by cyano or halogen (preferably fluoro).

When R⁶ or R⁷ is optionally substituted alkenyl, each is preferably optionally substituted C₂-C₄ alkenyl.

When R⁶ or R⁷ is optionally substituted alkynyl, each is preferably optionally substituted C₂-C₆ alkynyl.

When R⁶ or R⁷ is optionally substituted aryl each is preferably optionally substituted phenyl or optionally substituted naphthyl. It is especially preferred that when R⁶ or R⁷ is optionally substituted aryl each is optionally substituted phenyl.

Preferred optional substituents on R⁶ or R⁷ when R⁶ or R⁷ is optionally substituted aryl include: sulpho, carboxy, nitro, cyano, halogen (preferably chloro), alkoxy (preferably C₁₋₆-alkoxy) or alkyl (preferably C₁₋₆-alkyl) optionally substituted by halogen, (preferably fluoro), hydroxy, carboxy, phosphoric acid or sulpho.

When R⁶ or R⁷ is optionally substituted aralkyl each is preferably optionally substituted by benzyl.

R⁶ and R⁷ are each most preferably independently H, or optionally substituted aryl, most preferably optionally substituted phenyl or optionally substituted naphthyl. Especially preferred optional substituents on R⁶ or R⁷ when R⁶ or R⁷ are optionally substituted aryl include C₁₋₄-alkyl, carboxy, phosphoric acid or sulpho. However, it is most especially preferred that one of R⁶ and R⁷ is H and the other is optionally substituted aryl, preferably an aryl group carrying a carboxy group.

When W is a carbonamido group it is preferably of the formula -C(O)NR⁶R⁷ wherein R⁶ and R⁷ independently are as hereinbefore defined.

W is most preferably however a carboxylic acid group of the formula CO₂H or salt thereof or a carbonamido group of the formula CONR⁶R⁷ wherein one of R⁶ and R⁷ is H and the other is optionally substituted aryl, preferably optionally substituted phenyl wherein the phenyl group carries one or more water-solubilising groups. Examples of such water-solubilising groups include phosphonic acid, carboxy and sulpho.

M preferably comprises boron or one or more of the following metals: nickel, chromium, cobalt, copper, zinc, iron or manganese. The metal is preferably able to coordinate to the portion of the compounds shown in square brackets in the ratio 1:1, 2:1, 2:2, 2:3 respectively. However, it is particularly preferred that M is nickel because this results in good chroma properties for the resultant compound. It is also preferred that M is able to co-ordinate to the portion in square brackets in the ratio 1:1 and 2:1.

### First Preferred Embodiment

In a first preferred embodiment of the first aspect of present invention p is 1, 2, 3 or 4; a, q and n are each independently 0, 1, 2, 3 or 4; and (p+q+a+n) is 1, 2, 3 or 4.

Preferences specific to compounds of the first preferred embodiment of the first aspect of the present invention:
It is preferred that p is 1, 2 or 3, more preferably 1 or 2.
It is preferred that n is 0,1 or 2, more preferably 1 or 2.
It is preferred that q is 0, 1 or 2, more preferably 0 or 1.
It is preferred that a is 0,1 or 2, more preferably 0 or 1, especially 0.

Preferably the compounds of the first preferred embodiment of the first aspect of present invention comprise one or more water-solubilising groups, for example, sulpho, carboxy or phosphoric acid groups, more preferably at least one sulpho group.

Preferably (p+q+a+n) is 1, 2, 3 or 4, more preferably 2 or 3.

### Second Preferred Embodiment

In a second preferred embodiment of the first aspect of the present invention the compound of Formula (1) is a metal chelate compound of Formula (1a) or a salt thereof: 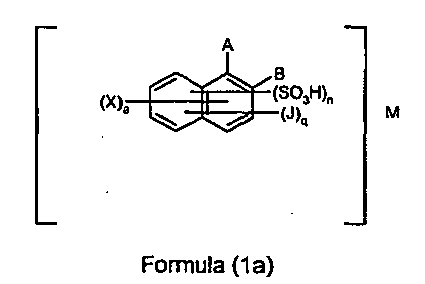 wherein:
- n and a: are each independently 0, 1, 2, 3 or 4;
- q: is 1, 2, 3 or 4;
- (a+q+n): is 1, 2, 3 or 4; and
A, B, X, J and M are as hereinbefore defined.

Preferences specific to compounds of the second preferred embodiment of the first aspect of the present invention:
It is preferable that n is 0, 1 or 2, more preferably 1 or 2 and especially 1.
It is preferred that a is 0, 1, 2 or 3, more preferably 0, 1 or 2, especially 0 or 1, more especially 0.
It is preferred that q is 1 or 2.

Preferably the value of (a+q+n) is 2 or 3.

Preferably the compound of Formula (1a) comprises one or more water-solubilising groups, for example such as sulpho, carboxy or phosphoric acid groups.

It is especially preferred that the compound of Formula (1a) is a metal chelate compound of the Formula (1a-1) or (1a-2): 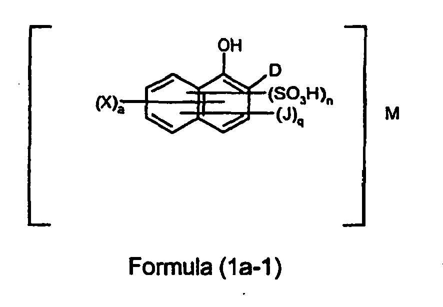 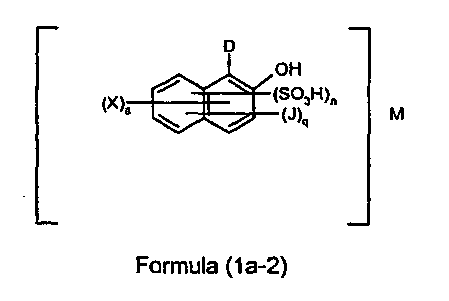 wherein:
- D: is an azotriazole group, preferably of the Formula (2a), (2b), (2c), (2d) or (2e) as hereinbefore defined;
- q: is 1 or 2;
- n: is 1 or 2;
- a: is 0 or 1;
- M: is a metal, preferably nickel; and
- J and X: are as hereinbefore defined.

Preferably (a+q+n) is 2 or 3.

When the metal chelate compound is of Formula (1a-1), it is preferred that there is one sulphonamido group at the 4-position on the naphthylene ring and one sulphonamido group at the 8-position on the naphthylene ring, relative to D being at the 2-position on the naphthylene ring.

When the metal chelate compound is of Formula (1a-2), it is preferred that there is at least one sulphonamido group at the 3-position on the naphthylene ring or one sulphonamido group at the 6-position on the naphthylene ring, relative to D being at the 1-position on the naphthylene ring.

In view of the foregoing preferences the compound of Formula (1a) is preferably a metal chelate compound of the Formula (1a-3) or (1a-4) or a salt thereof: 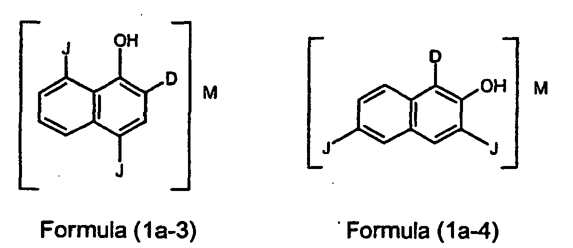 wherein:
D, M and J are as hereinbefore defined.

In Formula (1a-3) and (1a-4) D is preferably of Formulae (2a), (2b), (2c), (2d) or (2e) as hereinbefore defined.

It is especially preferred that for the compound of Formula (1a-3) and (1a-4) J is SO₂NR⁶R⁷ wherein one of R⁶ or R⁷ is H and the other is optionally substituted aryl, more especially an aryl group carrying a carboxy group. However, it is most preferred that one of R⁶ or R⁷ is H and the other is a carboxy phenyl group.

### Third Preferred Embodiment

In a third preferred embodiment of the first aspect of present invention the compound of Formula (1) is a metal chelate compound of Formula (1 b) or a salt thereof: 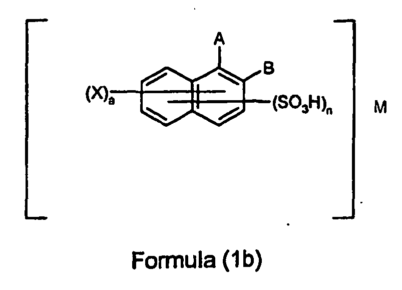 wherein:
- a: is 1, 2, 3 or 4;
- n: is 0, 1, 2, 3 or 4;
- (a + n): is 1, 2, 3 or 4; and
A, B, X and M are as hereinbefore defined.

Preferences specific to compounds of Formula (1b) are as follows:
It is preferred that n is 0, 1 or 2, more preferably 1 or 2.

It is preferred that a is 1, 2 or 3 more preferably 1 or 2 and especially 1.

Preferably the value of (a + n) is 2, 3 or 4, more preferably 2 or 3, especially 3.
Preferably the compounds of Formula (1 b) comprise one or more water solubilising groups, for example a sulpho, carboxy or phosphoric acid group. More preferably the compound of Formula (1 b) carries two sulpho groups.

It is especially preferred that the compound of Formula (1b) is a metal chelate compound of the Formula (1 b-1) or (1 b-2): 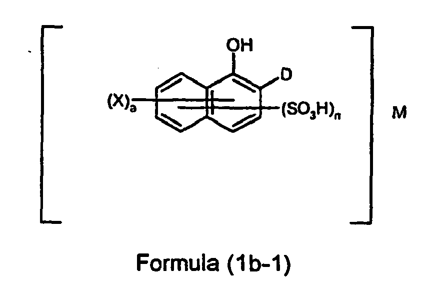 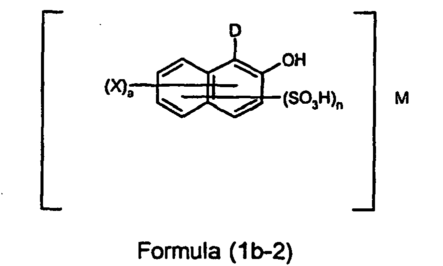 wherein:
- D: is an azotriazole group, preferably of Formula (2a), (2b), (2c), (2d) or (2e) as hereinbefore defined;
X is -OH, -Br, -Cl, -F, -CF₃, -CN, -NO₂, -PO₃H₂, optionally substituted alkyl, optionally substituted alkenyl, optionally substituted alkynyl, optionally substituted aryl, optionally substituted aralkyl,-SR¹, -SO₂R¹, -SOR¹, -OR¹, -C(O)R¹, -C(O)OR⁵, or -NR³R⁴;
wherein:
R¹, R³ and R⁴ are each independently H, optionally substituted alkyl, optionally substituted alkenyl, optionally substituted alkynyl, optionally substituted aryl or optionally substituted aralkyl; or
R³ and R⁴ together with the nitrogen to which they are attached form an optionally substituted 5 or 6 membered ring; and
R⁵ is any one of the groups defined for R¹ other than H.

- M: is a metal, preferably nickel;
- a: is 1 or 2; preferably 1; and
- n: is 1 or 2.

### Fourth Preferred Embodiment

In a fourth preferred embodiment of the first aspect of the present invention the compound of Formula (1) is a metal chelate compound of Formula (1 c) or a salt thereof: 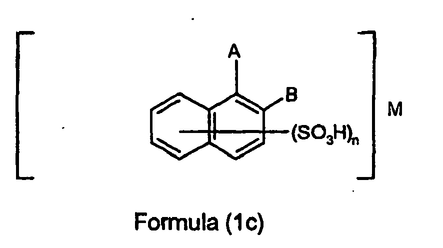 wherein:
- n: is 0 to 4; and
A, B and M are as hereinbefore defined.

Preferences specific to compounds of Formula (1 c) are as follows :
It is preferable that n is 0, 1, 2 or 3 more preferably 1, 2 or 3, especially 1 or 2.

It is especially preferred that the compound of Formula (1c) is a metal chelate compound of the Formula (1c-1) or (1c-2): 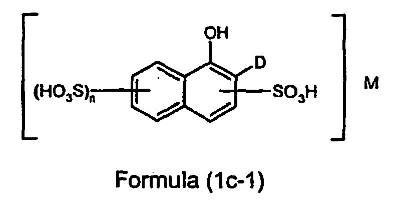 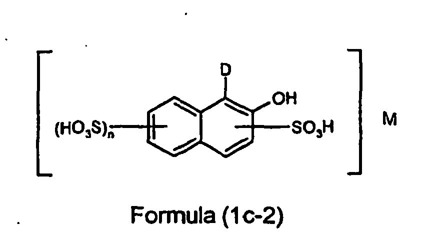 wherein D is an azotriazole group, preferably of Formula (2a), (2b), (2c), (2d) or (2e) as hereinbefore defined; n is 1 or 2; and M is nickel.

When the metal chelate compound is of Formula (1c-1), it is preferred that there is one sulphonic acid group at the 4-position on the naphthylene and one sulphonic acid group at the 8-position on the naphthylene ring, relative to D being at the 2-position on the naphthylene ring.

When the metal chelate compound is of Formula (1c-2), it is preferred that there is one sulphonic acid group at the 3-position on the naphthylene ring and one sulphonic acid group at the 7-position on the naphthylene ring, relative to D being at the 1-position.

In view of the foregoing preferences the compound of Formula (1 c) is preferably a metal chelate compound of the Formula (1c-3) or (1c-4) or a salt thereof: 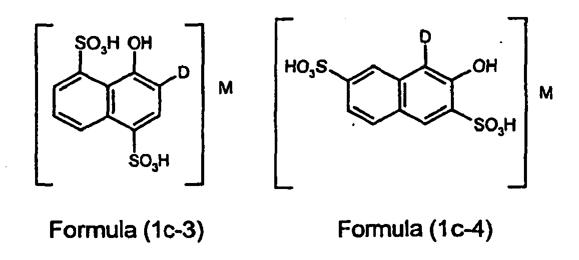 wherein:
D is a group of Formula (2a), (2b), (2c), (2d) or (2e) as hereinbefore defined and preferred, M is a metal, more preferably nickel.

When D is a group of Formula (2a), (2b), (2c), (2d) or (2e), Y is preferably H or CO₂H and Z is preferably H.

The compounds of the second, third and fourth embodiments are preferred over the compounds of the first preferred embodiment due to their superior combination of good chroma, light-fastness and fastness to oxidising gasses. These compounds are particularly preferred when M is nickel.

It is especially preferred that the compounds of the present invention are magenta in colour. Preferably the compounds of the invention have a chroma of at least 50 when printed on plain paper.

The compounds used in the first aspect of the present invention provide prints which exhibit a high light-fastness and good optical density when incorporated into inks for ink jet printing. The compounds used in the first aspect of the present invention are also highly soluble which improves operability and reduces crusting and nozzle blockage when inks containing the compounds are used in an ink jet printer.

Compounds used in the first aspect of the present invention are preferably free from fibre reactive groups. The term fibre reactive group is well known in the art and is described for example in EP 0356014 A1. Fibre reactive groups are capable, under suitable conditions, of reacting with the hydroxyl groups present in cellulosic fibres or with the amino groups present in natural fibres to form a covalent linkage between the fibre and the dye. As examples of fibre reactive groups preferably not present in the compounds of the first aspect of the present invention there may be mentioned aliphatic sulphonyl groups which contain a sulphate ester group in the beta-position to the sulphur atom, e.g. beta-sulphato-ethylsulphonyl groups, alpha, beta-unsaturated acyl radicals of aliphatic carboxylic acids, for example acrylic acid, alpha-chloro-acrylic acid, alphabromoacrylic acid, propiolic acid, maleic acid and mono- and dichloro maleic; also the acyl radicals of acids which contain a substituent which reacts with cellulose in the presence of an alkali, e.g. the radical of a halogenated aliphatic acid such as chloroacetic acid, betachloro and beta-bromopropionic acids and alpha, beta-dichloro- and dibromopropionic acids or radicals of vinylsulphonyl- or beta-chloroethylsulphonyl- or beta-sulphatoethyl-sulphonyl-endo- methylene cyclohexane carboxylic acids. Other examples of cellulose reactive groups are tetrafluorocyclobutyl carbonyl, trifluoro-cyclobutenyl carbonyl, tetrafluorocyclobutylethenyl carbonyl, trifluoro-cyclobutenylethenyl carbonyl; activated halogenated 1,3-dicyanobenzene radicals; and heterocyclic radicals which contain 1, 2 or 3 nitrogen atoms in the heterocyclic ring and at least one cellulose reactive substituent on a carbon atom of the ring.

The compounds used in the first aspect of the present invention may be in the free acid or salt form. Preferred salts are water-soluble, for example alkali metal salts, especially lithium, sodium, potassium, ammonium, substituted ammonium and mixed salts thereof. Preferred alkali metal salts are those with sodium or lithium ammonium and substituted alkyl ammonium salts.

Preferred ammonium and substituted ammonium salts have cations of the formula ⁺NV₄ wherein each V independently is H or optionally substituted alkyl, or two groups represented by V are H or optionally substituted alkyl and the remaining two groups represented by V, together with the N atom to which they are attached, form a 5- or 6-membered ring (preferably a morpholinyl, pyridinyl or piperidinyl ring).

Preferably each V independently is H or C₁₋₄-alkyl, more preferably H, CH₃ or CH₃CH₂, especially H.

Examples of cations include ⁺NH₄, morpholinium, piperidinium, pyridinium, (CH₃)₃N⁺H, (CH₃)₂N⁺H₂, H₂N⁺(CH₃)(CH₂CH₃), CH₃N⁺H₃, CH₃CH₂N⁺H₃, H₂N⁺(CH₂CH₃)₂, CH₃CH₂CH₂N⁺H₃, (CH₃)₂CHN⁺H₃, N⁺(CH₃)₄, N⁺(CH₂CH₃)₄, N-methyl pyridinium, N,N-dimethyl piperidinium and N,N-dimethyl morpholinium.

It is especially preferred that the compound is in the form of a sodium, lithium, potassium, ammonium, or substituted ammonium salt because we have found that these salts provide prints which exhibit a high light-fastness when incorporated into an ink jet printing ink.

Preferably the metal chelate compound is not a copper or nickel chelate of any of Ligands a to e or any salt thereof:

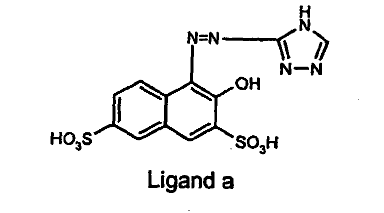

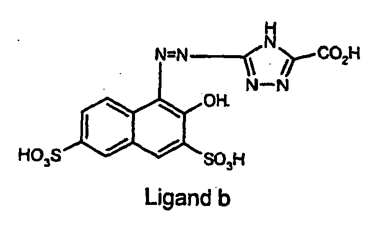

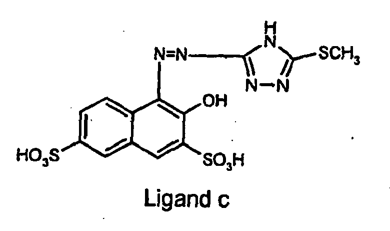

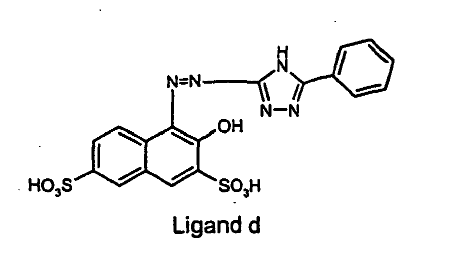

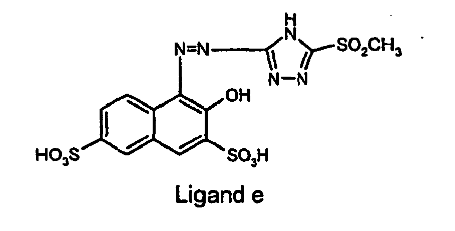

Preferably the metal chelate compound is not a chrome chelate of Ligand f or any salt thereof:

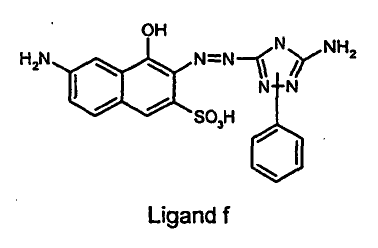

Preferably the metal chelate compound is not a cobalt chelate of Ligands g or h or any salt thereof:

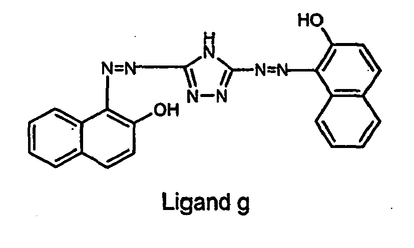

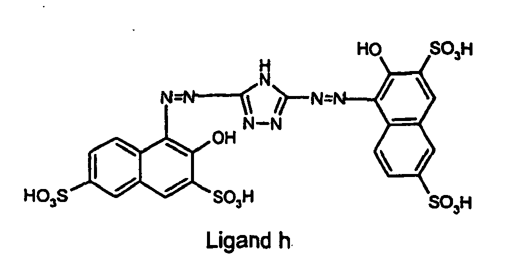

Preferably the metal chelate compound is not a chrome chelate of Ligand i or j or any salt thereof:

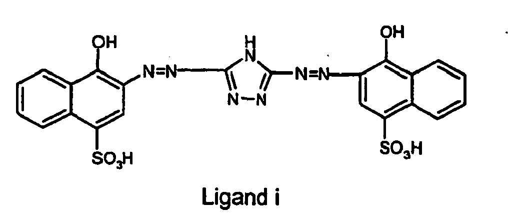

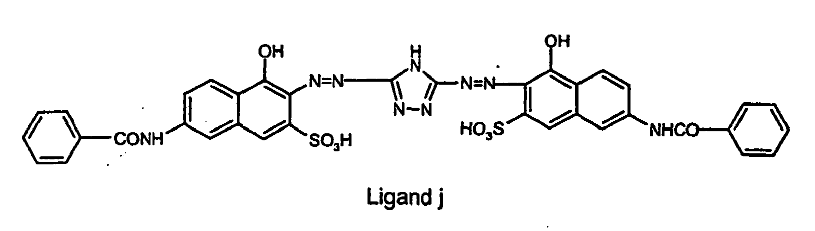

Preferably the metal chelate compound is not a metal chelate of Ligand k, l or m or any salt thereof:

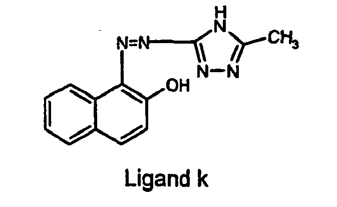

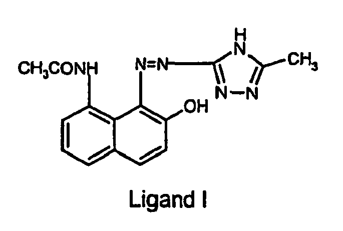

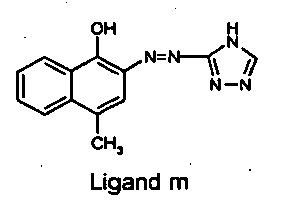

Preferably the metal chelate compound is not a metal chelate of any of the above Ligands f to m inclusive, more preferably a to m inclusive, or any salt thereof.

The compounds used in the first aspect of the present invention may be prepared using conventional techniques for the preparation of metal chelate compounds. For example a suitable method comprises adding together a solution of a metal salt to a solution of a compound of Formula (3): 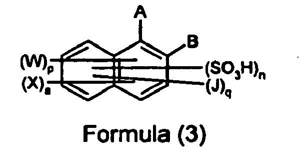 wherein;
A, B, J, X, W, n, a, p and q are as hereinbefore defined in relation to Formula (1).

The product of the above process may be converted to a salt by conventional techniques as hereinbefore described. Alternatively the product may be isolated in its free acid form by acidifying the reaction mixture, preferably using a mineral acid, for example hydrochloric acid and when the product precipitates as a solid it may be separated from the mixture by filtration. Unwanted anions may be and preferably are removed from the product of the process by dialysis, osmosis, ultrafiltration or a combination thereof. Alternatively, the product solution is subjected to the above purification directly without isolation of the product.

The compounds of Formula (3) may be prepared, for example, by by diazotising a compound of the formula A¹-NH₂ to give a diazonium salt and coupling the resultant diazonium salt with a compound of the Formula (3a): 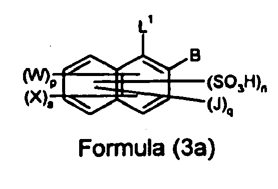 wherein A' is a triazole group, one of L¹ or B is OH and the other is H, and J, X, W, n, p and q are as hereinbefore defined.

The diazotisation is preferably performed at a temperature below 6°C, more preferably at a temperature in the range -10°C to 5°C. Preferably the diazotisation is performed in water, preferably at a pH below 7. Dilute mineral acid, e.g. HCl or H₂SO₄, are often used to achieve the desired acidic conditions.

The present invention also covers mixtures comprising two or more compounds of the first aspect of the present invention or salts thereof. Furthermore, the compounds of the first aspect of the present invention may be mixed with commercially available dyes, especially those listed in the International Colour Index to adjust the shade or other properties as desired.

According to a second aspect of the present invention there is provided a composition comprising:
(a) one or more compound as defined in the first aspect of the present invention; and
(b) one or more water-soluble xanthene, azo or bisazo dye other than as defined in the first aspect of the present invention;
provided that the compound as defined in the first aspect of the present invention is not a copper or nickel chelate of Ligands a to e as hereinbefore defined or any salt thereof.

The water-soluble dye is preferably a water-soluble magenta dye, for example, a xanthene dye, an azo or bis azo dye, more preferably an anionic azo or bis azo dye and especially an azo or bis azo dye which contains one or more groups selected from sulphonate, carboxylate and thiocarboxylate groups.

Preferred water-soluble magenta dyes include C.I. Acid Red 50, 52, 87, 91, 92, 95, 249 and 289; C.I. Direct Violet 106 and 107; compounds 100 to 107, 200 and 201 described on pages 8 and 9 of WO96/24636; compounds 1 to 24 shown described on columns 4 to 10 in US 5,542,970; compounds 1 to 55 described on pages 7 to 17 of EP-A-682 088; compounds 1 to 14 shown in Example 1 to 6 of EP-A-194,885; compounds 1 to 24 described on pages 8 to 13 of EP-A-717 089; the compounds described in examples 1 to 16 in columns 5 to 11 of US 5,262,527; and the dyes described in Examples 1 to 21 in WO 94/16021.

Especially preferred water-soluble magenta dyes for use in the composition according to the second aspect of the invention include C.I. Acid Red 52, C.I. Acid Red 289 or a dye of the Formula (4), (5) and (6) and salts thereof:

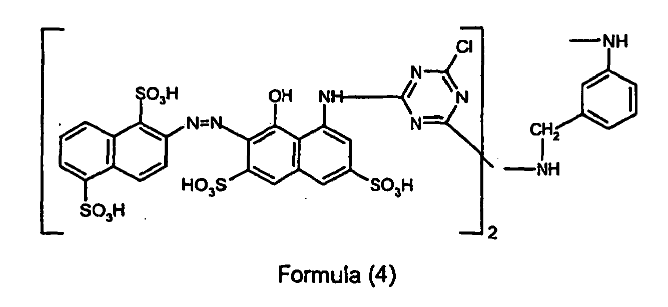

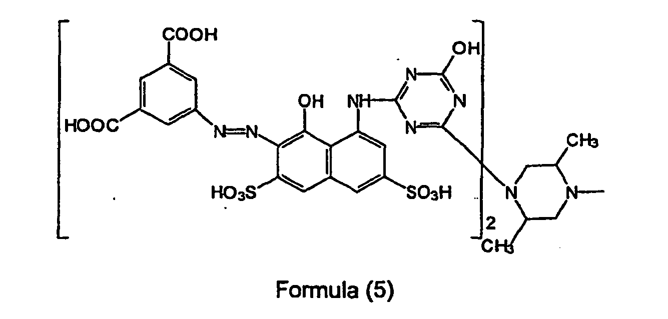

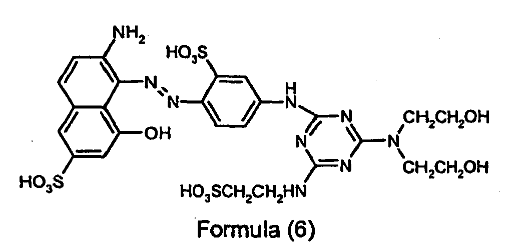

The dye of Formula (4) may be prepared using the method described in Example 1 of EP 0 559 310. The dye of the Formula (5) may be prepared using the method described in Example 3 of PCT publication number WO 94/16021. The dye of Formula (6) may be prepared using the method described in Example 1 of WO 96/24636.

The composition according to the second aspect of the present invention preferably comprises:
(a) from 1 to 99, more preferably from 3 to 70 and especially from 5 to 50 parts in total of the compound(s) according to the first aspect of the invention; and
(b) from 99 to 1, more preferably from 30 to 97 parts and especially 95 to 50 parts in total of the water-soluble magenta dye(s);
wherein the parts are by weight and the sum of the parts (a) + (b) = 100.

The composition may contain a single dye of Formula (1) as defined in the first aspect of the present invention or a mixture thereof. Similarly, the composition may contain a single water-soluble magenta dye or a mixture of two or more water-soluble magenta dyes.

The compounds of Formula (1) as defined in the first aspect of the present invention and compositions according to the second aspect of the present invention may be, and preferably are, purified to remove undesirable impurities before they are incorporated into inks for ink jet printing. Conventional techniques may be employed for purification, for example ultrafiltration, reverse osmosis and/or dialysis.

A third aspect of the present invention provides a metal chelate compound of the Formula (1) as hereinbefore defined and salts thereof, wherein the azotriazole group is of the Formula (2a), (2b), (2c), (2d) or (2e) as hereinbefore defined, provided that the compound is not any of the following:
(h) a copper (II) chelate of 3-carboxy-1,2,4-triazole-(5-azo-2)-1,8-dihydroxynaphthalene-3,6-disulphonic acid;
(i) a copper (II) chelate of 2,7-bis-(5,3-carboxy-1,2,4-triazole-azo)-1,8-dihydroxynaphthalene-3,6-disulpoonic acid;
(j) a copper (II), nickel (II) or cobalt (II) chelate of 3-carboxy-1,2,4-triazole-(5-azo-2)-1-hydroxy-8-aminonaphthalene-3,6-disulphonic acid;
(g) a copper (II) chelate of 3-carboxy-1,2,4-triazole-(5-azo-1)-p-anisidide-2-hydroxy-3-naphthoic acid; or
(b) a copper (II) or nickel (II) chelate of 3-carboxy-1,2,4-triazole-(5-azo-1)-2-hydroxy-naphthalene-3,6-disulphonic acid.

The third aspect of the present invention also provides a compound of Formula (1a), as hereinbefore defined, or a salt thereof.

The third aspect of the present invention also provides a compound of Formula (1a-2), as hereinbefore defined, or a salt thereof.

The third aspect of the present invention also provides a compound of Formula (1a-3) or (1a-4), as hereinbefore defined, or a salt thereof.

The third aspect of the present invention also provides a metal chelate compound of Formula (1c-1), as hereinbefore defined, or a salt thereof, excluding the nickel (II) chelate of 3-carboxy-1,2,4-triazole-(5-azo-2)-1-hydroxy-8-aminonaphthalene-3,6-disulphonic acid. Preferably this compound has one sulphonic acid group at the 4-position on the naphthylene ring and one sulphonic acid group at the 8-position on the naphthylene ring, relative to D being at the 2-position on the naphthylene ring.

The third aspect of the present invention also provides a metal chelate compound of Formula (1c-2), as hereinbefore defined, or a salt thereof, provided that there is one sulphonic acid group at the 3-position on the naphthylene ring and one sulphonic acid group at the 7-position on the naphthylene ring, relative to D being at the 1-position.

The third aspect of the present invention also provides a metal chelate compound of Formula (1 c-3) or (1c-4), as hereinbefore defined, or a salt thereof.

In the compounds according to the third aspect of the present invention the azotriazole groups are preferably of the Formula (2a), (2b), (2c), (2d) or (2e) as hereinbefore defined.

In the compounds according to the third aspect of the present invention M is preferably nickel.

In the compounds according to the third aspect of the present invention M is preferably able to coordinate with the portion in square brackets in the ratio 1:1 or 1:2.

According to a fourth aspect of the present invention there is provided an ink comprising:
(a) a compound according to the third aspect of the present invention, or a composition according to the second aspect of the invention; and
(b) a liquid medium.

Preferably component (a) of the ink is or comprises one of the preferred compounds or compositions as hereinbefore described in relation to the third or second aspect of the invention.

The fourth aspect of the present invention further provides an ink comprising:
(a) a liquid medium comprising a non-ionic surfactant; and
(b) a compound as defined in the first aspect of the present invention;
provided that the compound as defined in the first aspect of the present invention is not a copper or nickel chelate of any of Ligands a to e as hereinbefore defined or any salt thereof. In this ink the compound is preferably as defined in the third aspect of the present invention.

The liquid medium preferably comprises:
(i) water;
(ii) a mixture of water and an organic solvent; or
(iii) an organic solvent free from water.

The number of parts by weight of component (a) of the ink is preferably from 0.01 to 30, more preferably 0.1 to 20, especially from 0.5 to 15, and more especially from 1 to 5 parts. The number of parts by weight of component (b) is preferably from 99.99 to 70, more preferably from 99.9 to 80, especially from 99.5 to 85, and more especially from 99 to 95 parts. The number of parts (a) + (b) is 100 and all parts mentioned herein are by weight.

Preferably component (a) is completely dissolved in component (b). Preferably component (a) has a solubility in component (b) at 20°C of at least 10%. This allows the preparation of concentrates which may be used to prepare more dilute inks and reduces the chance of the compound(s) of component (a) of the ink precipitating if evaporation of the liquid medium occurs during storage.

When the liquid medium comprises a mixture of water and an organic solvent, the weight ratio of water to organic solvent is preferably from 99:1 to 1:99, more preferably from 99:1 to 50:50 and especially from 95:5 to 80:20.

It is preferred that the organic solvent present in the mixture of water and organic solvent is a water-miscible organic solvent or a mixture of such solvents. Preferred water-miscible organic solvents include C₁₋₆-alkanols, preferably methanol, ethanol, n-propanol, isopropanol, n-butanol, sec-butanol, tert-butanol, n-pentanol, cyclopentanol and cyclohexanol; linear amides, preferably dimethylformamide or dimethylacetamide; ketones and ketone-alcohols, preferably acetone, methyl ether ketone, cyclohexanone and diacetone alcohol; water-miscible ethers, preferably tetrahydrofuran and dioxane; diols, preferably diols having from 2 to 12 carbon atoms, for example pentane-1,5-diol, ethylene glycol, propylene glycol, butylene glycol, pentylene glycol, hexylene glycol and thiodiglycol and oligo- and poly-alkyleneglycols, preferably diethylene glycol, triethylene glycol, polyethylene glycol and polypropylene glycol; triols, preferably glycerol and 1,2,6-hexanetriol; mono-C₁₋₄-alkyl ethers of diols, preferably mono-C₁₋₄-alkyl ethers of diols having 2 to 12 carbon atoms, especially 2-methoxyethanol, 2-(2-methoxyethoxy)ethanol, 2-(2-ethoxyethoxy)-ethanol, 2-[2-(2-methoxyethoxy)ethoxy]ethanol, 2-[2-(2-ethoxyethoxy) ethoxy]-ethanol and ethyleneglycol monoallylether; cyclic amides, preferably 2-pyrrolidone, N-methyl-2-pyrrolidone, N-ethyl-2-pyrrolidone, caprolactam and 1,3-dimethylimidazolidone; cyclic esters, preferably caprolactone; sulphoxides, preferably dimethyl sulphoxide and sulpholane. Preferably the liquid medium comprises water and 2 or more, especially from 2 to 8, water-miscible organic solvents.

Especially preferred water-soluble organic solvents are cyclic amides, especially 2-pyrrolidone, N-methyl-pyrrolidone and N-ethyl-pyrrolidone; diols, especially 1,5-pentane diol, ethyleneglycol, thiodiglycol, diethyleneglycol and triethyleneglycol; and mono- C₁₋₄-alkyl and C₁₋₄-alkyl ethers of diols, more preferably mono- C₁₋₄-alkyl ethers of diols having 2 to 12 carbon atoms, especially 2-methoxy-2-ethoxy-2-ethoxyethanol.

A preferred liquid medium comprises:
(a) from 75 to 95 parts water; and
(b) from 25 to 5 parts in total of one or more solvents selected from diethylene glycol, 2-pyrrolidone, thiodiglycol, N-methylpyrrolidone, cyclohexanol, caprolactone, caprolactam and pentane-1,5-diol;
wherein the parts are by weight and the sum of the parts (a) and (b) = 100.

Another preferred liquid medium comprises:
(a) from 60 to 80 parts water;
(b) from 2 to 20 parts diethylene glycol; and
(c) from 0.5 to 20 parts in total of one or more solvents selected from 2-pyrrolidone, N-methylpyrrolidone, cyclohexanol, caprolactone, caprolactam, pentane-1,5-diol and thiodiglycol;
wherein the parts are by weight and the sum of the parts (a), (b) and (c) = 100.

Examples of further suitable ink media comprising a mixture of water and one or more organic solvents are described in US 4,963,189, US 4,703,113, US 4,626,284 and EP 4,251,50A.

When the liquid medium comprises an organic solvent free from water, (i.e. less than 1% water by weight) the solvent preferably has a boiling point of from 30° to 200°C, more preferably of from 40° to 150°C, especially from 50 to 125°C. The organic solvent may be water-immiscible, water-miscible or a mixture of such solvents. Preferred water-miscible organic solvents are any of the hereinbefore described water-miscible organic solvents and mixtures thereof. Preferred water-immiscible solvents include, for example, aliphatic hydrocarbons; esters, preferably ethyl acetate; chlorinated hydrocarbons, preferably CH₂Cl₂; and ethers, preferably diethyl ether; and mixtures thereof.

When the liquid medium comprises a water-immiscible organic solvent, preferably a polar solvent is included because this enhances solubility of the dye in the liquid medium. Examples of polar solvents include C₁₋₄-alcohols. In view of the foregoing preferences it is especially preferred that where the liquid medium is an organic solvent free from water it comprises a ketone (especially methyl ethyl ketone) and/or an alcohol (especially a C₁₋₄-alkanol, such as ethanol or propanol).

The organic solvent free from water may be a single organic solvent or a mixture of two or more organic solvents. It is preferred that when the medium is an organic solvent free from water it is a mixture of 2 to 5 different organic solvents. This allows a medium to be selected which gives good control over the drying characteristics and storage stability of the ink.

Ink media comprising an organic solvent free from water are particularly useful where fast drying times are required and particularly when printing onto hydrophobic and non-absorbent substrates, for example plastics, metal and glass.

An especially preferred ink comprises:
(a) from 1 to 10 parts in total of a compound according to the third aspect of the present invention or composition according to the second aspect of the invention;
(b) from 2 to 60, more preferably 5 to 40 parts of water-soluble organic solvent; and
(c) from 30 to 97, more preferably 40 to 85 parts water;
wherein all parts are by weight and the sum of the parts (a) + (b) + (c) = 100.

When the liquid medium in the ink comprises a mixture of water and an organic solvent; or an organic solvent free from water, component (a) of the ink may comprise a compound as hereinbefore defined in relation to the first aspect of the invention.

Preferred low melting solid media have a melting point in the range from 60°C to 125°C. Suitable low melting point solids include long chain fatty acids or alcohols, preferably those with C₁₈₋₂₄ chains, and sulphonamides. The compound of the first aspect of the present invention may be dissolved in the low melting point solid or may be finely dispersed in it.

The inks according to the present invention may also contain additional components conventionally used in ink jet printing inks, for example viscosity and surface tension modifiers, corrosion inhibitors, biocides, kogation reducing additives, anti-cockle agents to reduce paper curling and surfactants which may be ionic or non-ionic.

The pH of the ink is preferably from 4 to 11, more preferably from 7 to 10.

The viscosity of the ink at 25°C is preferably less than 50cP, more preferably less than 20 cP and especially less than 5cP.

When the inks according to the invention are used as ink jet printing inks, the ink preferably has a concentration of less than 500 parts per million, more preferably less than 100 parts per million of halide ions. It is especially preferred that the ink has less than 100, more preferably less than 50 parts per million of divalent and trivalent metals, wherein parts refer to parts by weight relative to the total weight of the ink. We have found that purifying the inks to reduce the concentration of these undesirable ions reduces nozzle blockage in ink jet printing heads, particularly in thermal ink jet printers.

The ink used in the process according to the first aspect of the present invention is preferably as defined in the fourth aspect of the present invention.

The ink jet printer preferably applies the ink to the substrate in the form of droplets which are ejected through a small orifice onto the substrate.

The substrate is preferably paper, plastic, a textile, metal or glass, more preferably paper, an overhead projector slide or a textile material, especially paper.

Preferred papers are plain or treated papers which may have an acid, alkaline or neutral character. Examples of commercially available papers include, HP Premium Coated Paper, HP Photopaper (all available from Hewlett Packard Inc.), Stylus Pro 720 dpi Coated Paper, Epson Photo Quality Glossy Film, Epson Photo Quality Glossy Paper (available from Seiko Epson Corp.), Canon HR 101 High Resolution Paper, Canon GP 201 Glossy Paper, Canon HG 101 High Gloss Film (all available from Canon Inc.), Wiggins Conqueror paper (available from Wiggins Teape Ltd), Xerox Acid Paper and Xerox Alkaline paper, Xerox Acid Paper (available from Xerox).

A fifth aspect of the present invention provides a substrate, preferably a paper, an overhead projector slide or a textile material, printed with an ink according to the fourth aspect of the present invention or by means of the process according to the first aspect of the present invention.

According to a sixth aspect of the present invention there is provided an ink jet printer cartridge comprising a chamber and ink, wherein the ink is present in the chamber and the ink contains a compound according to the third aspect of the present invention or a composition according to the second aspect of the present invention. Preferably the ink is an ink according to the fourth aspect of the present invention.

According to a seventh aspect of the present invention there is provided an ink jet printer containing an ink jet printer cartridge, wherein the ink jet printer cartridge is as defined in the sixth aspect of the present invention.

The invention is further illustrated by the following Examples in which all parts and percentages are by weight unless otherwise stated.

### Example 1

### Preparation of Compound (1) wherein M is nickel

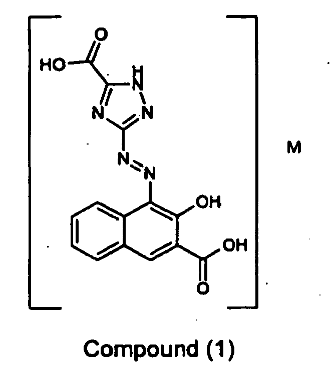

Stage (a):
   3-amino-1,2,4-triazole-5-carboxylic acid hydrate (1.28g, 0.01mol) was suspended in water (50ml) and dissolved by the addition of 2M NaOH to pH 8. Sodium nitrite (0.76g, 0.011mol) was added and the solution stirred until the sodium nitrite had dissolved. The mixture was then added dropwise to a cooled mix of ice-water (30g) and concentrated HCl (3.0ml) at 0-5°C, the mixture was stirred for 30 minutes at 0-5°C and then excess nitrous acid was removed by adding sulphamic acid. The diazo suspension was added slowly to a solution of 3-hydroxy-naphthalene-2-carboxylic acid (1.88g, 0.01mol) in water (100ml) at pH 7-8 (2N NaOH) cooled below 5°C. The reaction mixture was then stirred at 0-5°C for one hour, the product was precipitated by acidification to pH 4 with 2N HCl and collected by filtration. The product was washed with water and then dried in a vacuum desiccator to give 2.8g of an orange solid.
stage (b):
   A solution of nickel acetate tetrahydrate (1.43g, 0.0057mol) in water (10ml) was added dropwise to the product from stage (a) (2.5g, 0.0076mol) dissolved in water (100ml) at pH 7 (2N NaOH). The reaction mixture was stirred for 2 hours at ambient temperature, dialysed using SpectraPor membrane tubing (molecular weight cut off 3500) to low conductivity (<100µs). Compound (1) was obtained by evaporation under reduced pressure to afford a dark crystalline solid (3.5g).

### Examples 2 to 11

Compounds (2) to (11) described in Table 1 were prepared using an analogous process to that described in Example 1 except that in stage (a) the Naphthol (N) shown in Table 1 was used in place of 3-hydroxy-naphthalene-2-carboxylic acid.

**Table 1**

| Example | Naphthol (N) | Compound name |
|---|---|---|
| 2 | 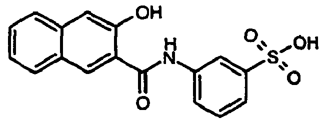 | Nickel chelate of [5-[2-hydroxy-3-(3-sulfophenylcarbamoyl)-naphthalen-1-ylazo]-2H-[1,2,4]triazole-3-carboxylic acid]. ("Compound (2)"). Analysis by mass spectrometry found m/z 537 (M-H)⁻. |
| 3 | 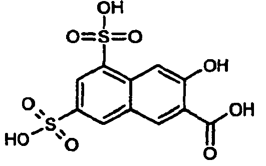 | Nickel chelate of [5-(3-carboxy-2-hydroxy-6,8-disulfonaphthalen-1-ylazo]-2H-[1,2,4]triazole-3-carboxylic acid]. ("Compound (3)"). |
| 4 | 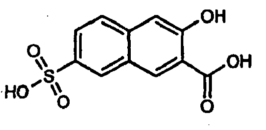 | Nickel chelate of [5-(3-carboxy-2-hydroxy-6-sulfonaphthalen-1-ylazo]-2H-[1,2,4]triazole-3-carboxylic acid]. ("Compound (4)"). |
| 5 | 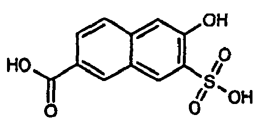 | Nickel chelate of [5-(6-carboxy-2-hydroxy-3-sulfonaphthalen-1-ylazo]-2H-[1,2,4]triazole-3-carboxylic acid]. ("Compound (5)"). Analysis by mass spectrometry found m/z 869 (M-H)⁻. |
| 6 | 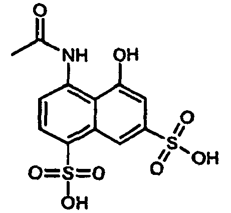 | Nickel chelate of [5-(8-acetylamino-1-hydroxy-3,5-disulfo-naphthalen-2-ylazo)-2H-[1,2,4]triazole-3-carboxylic acid]. ("Compound (6)") Analysis by mass spectrometry found m/z 555 (M-H)⁻. |
| 7 | 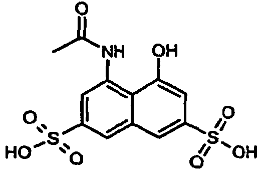 | Nickel chelate of [5-(8-acetylamino-1-hydroxy-3,6-disulfo-naphthalen-2-ylazo)-2H-[1,2,4]triazole-3-carboxylic acid]. ("Compound (7)") Analysis by mass spectrometry found m/z 555 (M-H)⁻. |
| 8 | 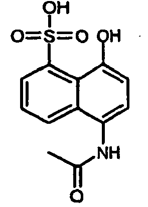 | Nickel chelate of [5-(4-acetylamino-1-hydroxy-8-sulfo-naphthalen-2-ylazo)-2H-[1,2,4]triazole-3-carboxylic acid]. ("Compound (8)") Analysis by mass spectrometry found m/z 895 (M-H)⁻. |
| 9 | 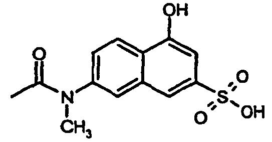 | Nickel chelate of [5-[6-(acetyl-methylamino)-1-hydroxy-3-sulfo-naphthalen-2-ylazo]-2H-[1,2,4]triazole-3-carboxylic acid]. ("Compound (9)") |
| 10 | 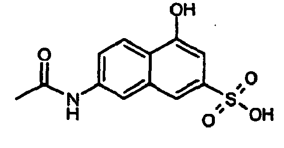 | Nickel chelate of [5-(6-acetylamino-1-hydroxy-3-sulfo-naphthalen-2-ylazo)-2H-[1,2,4]triazole-3-carboxylic acid]. ("Compound (10)") Analysis by mass spectrometry found m/z 475 (M-H)⁻. |
| 11 | 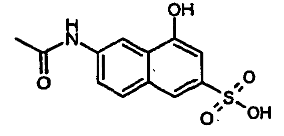 | Nickel chelate of [5-(7-acetylamino-1-hydroxy-3-sulfo-naphthalen-2-ylazo)-2H-[1,2,4]triazole-3-carboxylic acid]. ("Compound (11)") |

### Example 12

### Preparation of Compound (12) wherein M is nickel

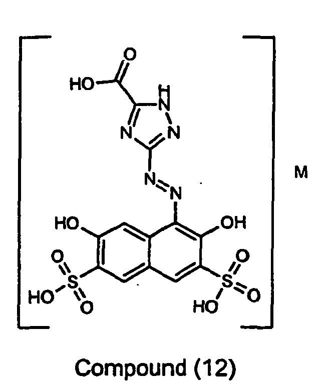

Stage (a):
   3-amino-1,2,4-triazole-5-carboxylic acid hydrate (3.84g, 0.03mol) was suspended in water (180ml) and dissolved by the addition of 2M NaOH to pH 8. Sodium nitrite (2.27g, 0.033mol) was added and the solution stirred until the sodium nitrite had dissolved.
   The mixture was then added dropwise to a cooled mix of ice-water (150g) and concentrated HCl (10ml) at 0-5°C, the mixture was stirred for 30 minutes at 0-5°C and then excess nitrous acid was removed by adding sulphamic acid. The diazo suspension was added slowly to a suspension of 2,7-dihydroxynaphthalene-3,6-disulfonic acid disodium salt (10.9g, 0.03mol) in water (450ml) at pH 7-8 (2N NaOH) cooled below 5°C. The reaction mixture was then stirred at 0-5°C for one further hour, the product was precipitated by acidification to pH 4 with 2N HCl and collected by filtration. The product was washed with 15% brine and then dried in a vacuum desiccator to give 11.4g of an orange solid (85% yield).
Stage (b):
   A solution of nickel acetate tetrahydrate (2.30g, 0.0093mol) in water (20ml) was added dropwise to the product from stage (a) (5.0g, 0.0093mol) dissolved in water (100ml) at pH 7-8 (2N NaOH). The reaction mixture was stirred for 2hours at 50-60°C, dialysed using SpectraPor membrane tubing (molecular weight cut off 3500) to low conductivity (<100µs). Compound (12) was obtained by evaporation as a dark crystalline solid (4.2g).

### Example 13

### Preparation of Compound (13) wherein M is nickel

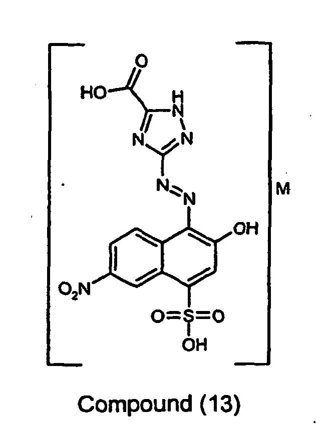

Compound (13) was prepared using an analogous process to that described in Example 12 except that in stage (a) 3-hydroxy-7-nitro-naphthalene-1-sulfonic acid was used in place of 2,7-dihydroxynaphthalene-3,6-disulfonic acid.

### Examples 14 and 15

Compounds (14) and (15) of the Formula (A) described in Table 2 were prepared using an analogous process to that described in Example 12 except that in stage (a) in place of 2,7-dihydroxynaphthalene-3,6-disulfonic acid was used the Naphthol (N) shown in Table 2 and the coupling reaction was performed at pH 10-10.5. M is nickel and X is ethoxy and hydroxy respectively.

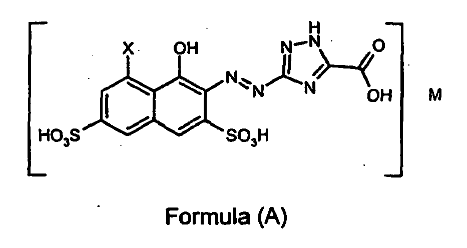

**Table 2**

| Compound | Naphthol (N) | Dye name |
|---|---|---|
| (14) | 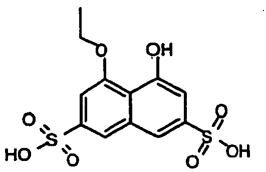 | Nickel chelate of [5-(8-ethoxy-1-hydroxy-3,6-disulfo-naphthalen-2-ylazo)-2H-[1,2,4]triazole-3-carboxylic acid]. Analysis by mass spectrometry found m/z 1085 (M-H)⁻. |
| (15) | 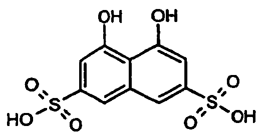 | Nickel chelate of [5-(1,8-dihydroxy-3,6-disulfo-naphthalen-2-ylazo)-2H-[1,2,4]triazole-3-carboxylic acid]. |

### Example 16

### Preparation of Compound (16) wherein M is nickel

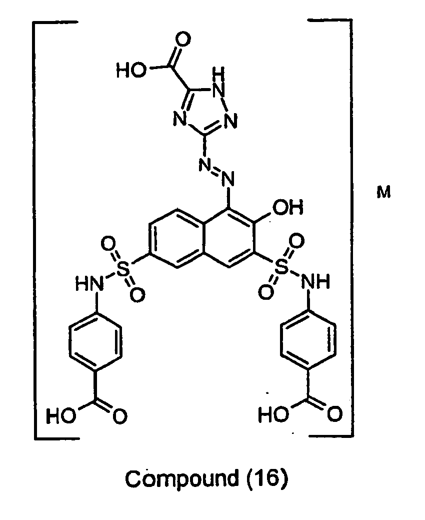

### Stage (a): Preparation of 2-acetoxynaphthalene-3-6-disulphonic acid

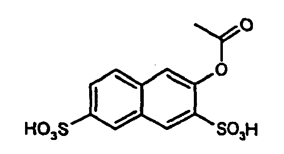

Acetic anhydride (350 ml, 3.8mol) was added dropwise to a suspension of 2-hydroxynaphthalene-3,6-disulphonic acid di sodium salt (87g, 0.25mol) in *N*,*N* dimethylacetamide (350ml). The reaction mixture was stirred at 125°C for 24 hours, cooled to room temperature and added to acetone (2500ml). The product was filtered off, washed with acetone (3 x 100ml) and dried to give 95.2g of a cream coloured solid.

### Stage (b): Preparation of 3,6-bis-(4-carboxy-phenylsulfamoyl)-2-hydroxy-naphthalene

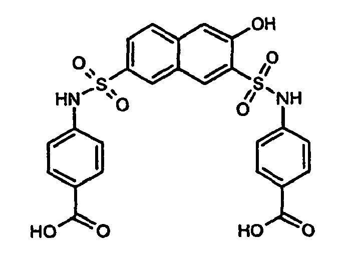

POCl₃ (50ml, 0.538mol) was added dropwise to a suspension of the product from stage (a) (50g, 0.128mol) in acetonitrile (250ml) at reflux. The reaction mixture was stirred for 3 hours at 70°C, cooled, added to ice / water (4000ml) and the naphthalene disulfonyl chloride extracted with dichloromethane (4 x 300ml). The combined extracts were dried with MgSO₄, evaporated under reduced pressure and the residue dissolved in N,N-dimethylacetamide (400 ml). 4-Aminobenzoic acid (34.3g, 0.25mol) was added to the above solution, the reaction mixture was stirred overnight at room temperature and then added to water (3000ml). The pH was then lowered to 0.5 with concentrated H₂SO₄ and the precipitated product extracted from ethyl acetate (4 x 300ml). The combined extracts were washed with 1N HCl (600ml), dried with MgSO₄ and evaporated under reduced pressure. The residue was dissolved in water (1000ml) at pH 12 (2N NaOH) and then stirred for 1 hour at 50-60°C. The solution was allowed to cool, the pH lowered to pH 4 with concentrated HCl and the product filtered off and dried to give 41.5g (53% yield) of a tan coloured solid.

### Stage (c):

3-amino-1,2,4-triazole-5-carboxylic acid hydrate (1.28g, 0.01mol) was suspended in water (50ml) and dissolved by the addition of 2M NaOH to pH 8. Sodium nitrite (0.76g, 0.011mol) was added and the solution stirred until the sodium nitrite had dissolved. The mixture was then added dropwise to a cooled mix of ice-water (30g) and concentrated HCl (3.0ml) at 0-5°C, the mixture was stirred for 30 minutes. at 0-5°C and then excess nitrous acid was removed by adding sulphamic acid. The diazo suspension was added slowly to a solution of the product from stage (b) (5.42g, 0.01mol) in water (100ml) at pH 7-8 (2N NaOH) cooled below 5 °C. The reaction mixture was then stirred at 0-5°C for one further hour, the product was precipitated by acidification to pH 4 with 2N HCl and collected by filtration. The product was then washed with water and dried in a vacuum desiccator to give 6.4g of an orange solid.

### Stage (d): Preparation of Compound (16)

A solution of nickel acetate tetrahydrate (1.38g, 0.0055mol) in water (10ml) was added dropwise to the product from stage (c) (5.0g, 0.0073mol) dissolved in water (100ml) at pH 7 (2N NaOH). The reaction mixture was stirred for 2 hours at ambient temperature, dialysed using SpectraPor membrane tubing (molecular weight cut off 3500) to low conductivity (<100µs). The product was obtained by evaporation under reduced pressure to afford a dark crystalline solid (6g). Analysis by mass spectrometry found m/z 1419. Requires M* = 1420.

### Examples 17 to 20

Compounds (17) to (20) described in Table 3 of the Formula (B) wherein M is nickel were prepared using an analogous process to that described in Example 16 except that in stage (b) the amino compound shown in Table 3 was used in place of 4-aminobenzoic acid.

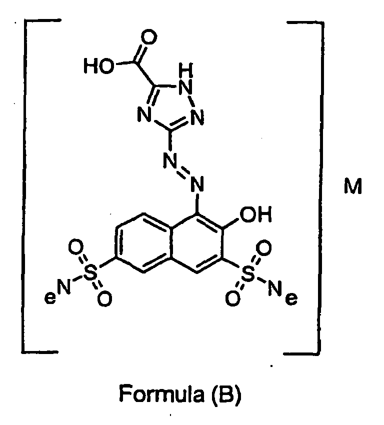

**Table 3**

| Example | Amino compound (Nₑ-H) | Mass Spectra Analysis | Compound |
|---|---|---|---|
| 17 | 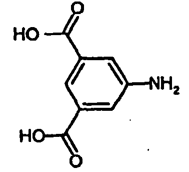 | m/z 824 (M-H)⁻ | (17) |
| 18 | 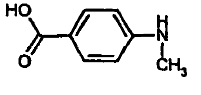 | m/z 147 (M-H)⁻ | (18) |
| 19 | 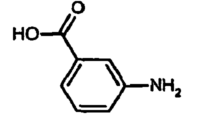 | Not measured | (19) |
| 20 | 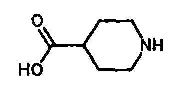 | m/z 720 (M-H)⁻ | (20) |

### Example 21

Compound (21) wherein M is nickel was prepared using an analogous process to that described in Example 16 except that in stage (b) 5-aminoisophthalic acid was used in place of 4-aminobenzoic acid in a 1:1 molar ratio (5-aminoisophthalic acid : disulfonyl chloride).

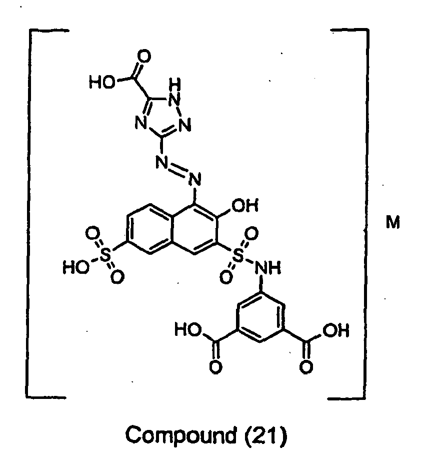

### Examples 22 and 23

Compounds (22) and (23) wherein M is nickel described in Table 4 of the Formula (C) were prepared using an analogous process to that described in Example 1 except that in stage (c) the amino triazole compound shown in Table 4 was used in place of 3-amino-1,2,4-triazole-5-carboxylic acid.

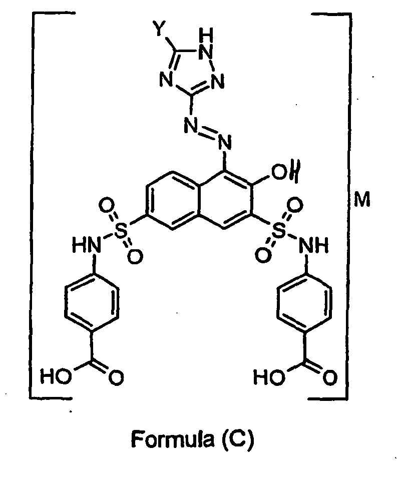

**Table 4**

| Example | Amino Triazole | Dye name |
|---|---|---|
| 22 | 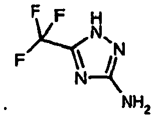 | Nickel chelate of 5-[3,6-bis-(4-carboxyphenylsulfamoyl)-2-hydroxy-naphthalen-1-ylazo]-4H-[1,2,4]triazole-3-trifluoromethyl. ("Compound (22)"). Analysis by mass spectrometry found m/z 1465 (M-H)⁻. |
| 23 | 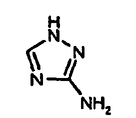 | Nickel chelate of 5-[3,6-bis-(4-carboxyphenylsulfamoyl)-2-hydroxy-naphthalen-1-ylazo]-4H-[1,2,4]triazole. ("Compound (23)"). Analysis by mass spectrometry found m/z 1329 (M-H)⁻. |

### Example 24

### Preparation of Compound (24) wherein M is nickel

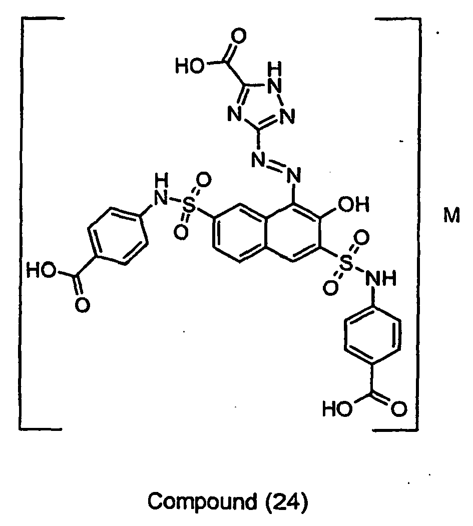

### Stage (a): Preparation of 3-hydroxynaphthalene-2.6-disulfonic acid

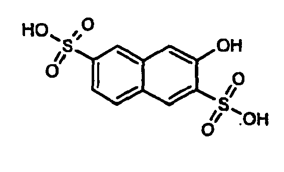

7-Hydroxynaphthalene-2-sulfonic acid (250g, 1.16mol) was added in portions to a mixture of concentrated H₂SO₄ (950g) and water (50g). The mixture was stirred at 110 - 120°C for 3 hours, cooled to room temperature, added to a mixture of ice and water (5000ml) and the product precipitated by the addition of sodium chloride. The slurry was warmed to 90°C to dissolve the product, stirred for 1 hour at this temperature and then allowed to cool. The product was filtered off and the damp product dissolved in water (3000ml) at pH 10 by the addition of concentrated sodium hydroxide solution. The solution was then filtered to remove a small amount of insoluble material. The pH of the filtrate was lowered to 7 with concentrated HCl and the product precipitated by the addition sodium chloride. The product was filtered off and dried in a vacuum oven to give 117g of a cream coloured solid (68% yield).

### Stage (b):

Compound (24) was prepared using an analogous process to that described in Example 16 except that in stage (a) 3-hydroxynaphthalene-2,6-disulfonic acid was used in place of 2-hydroxynaphthalene-3,6-disulphonic acid. Analysis by mass spectrometry found m/z 1417 (M-H)⁻.

### Example 25

### Preparation of Compound (25) wherein M is nickel

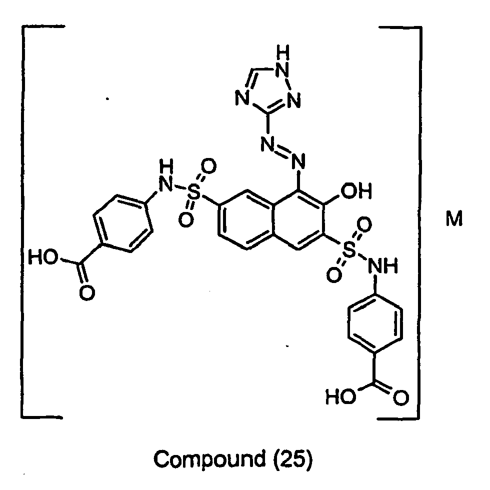

Compound (25) was prepared using an analogous process to that described in Example 16 except that in stage (a) 3-hydroxynaphthalene-2,6-disulfonic acid was used in place of 2-hydroxynaphthalene-3,6-disulphonic acid and in stage (c) 3-amino-1,2,4-triazole was used in place of 3-amino-1,2,4-triazole-5-carboxylic acid.

### Example 26

Preparation of Compound (26) wherein M is nickel

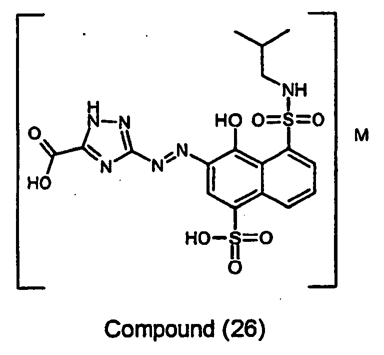

### Stage a:

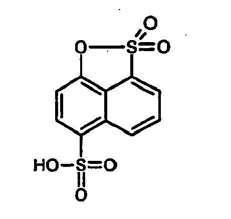

1,8-Naphthosultone (25g, 0.119mol) was added in portions to concentrated H₂SO₄ (75ml). The mixture was then stirred at 80°C for 1 hour allowed to cool and then added slowly to ice-water (150ml) maintaining the temperature below 40°C. Sodium sulphate (46g) was added to the reaction mixture, the resulting suspension was stirred for 10 minutes and then collected by filtration. The damp product was dissolved in water (150ml) by warming to 45-50°C and then precipitated by adding sodium chloride (35g) and allowing to cool. The product was collected by filtration and dried in a vacuum oven at 40°C to give 40g of a cream solid (86% yield).

### Stage (b):

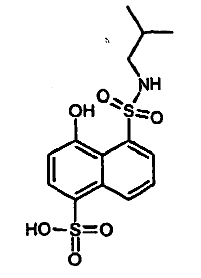

The product from stage (a) (10g, 0.035mol) was added in portions to isobutylamine (25ml). The reaction mixture was stirred for 30 minutes at 40-50°C, evaporated under reduced pressure and the residue slurried in acetone (200ml). The product was collected by filtration and dried to give 6g of a pale green powder.

### Stage (c):

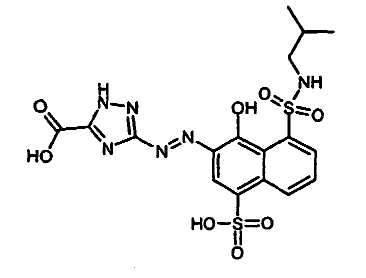

3-amino-1,2,4-triazole-5-carboxylic acid hydrate (1.28g, 0.01mol) was suspended in water (50ml) and dissolved by the addition of 2M NaOH to pH 8. Sodium nitrite (0.76g, 0.11 mol) was added and the solution stirred until the sodium nitrite had dissolved.

The mixture was then added dropwise to a cooled mix of ice-water (30g) and concentrated HCl (3.0ml) at 0-5°C, the mixture was stirred for 30 minutes at 0-5°C and then excess nitrous acid was removed by adding sulphamic acid. The diazo suspension was added slowly to a solution of the product from stage (b) (3.6g, 0.01mol) in water (100ml) at pH 10-10.5 (2N NaOH) cooled below 5°C. The reaction mixture was then stirred at 0-5°C for 1 hour, the product was precipitated by acidification to pH 4 with 2N HCl and collected by filtration. The product was washed with water and then dried in a vacuum desiccator to give 4.2g of an orange solid.

### Stage (d): Preparation of Compound (26)

Compound (26) was prepared using an analogous process to that described in Example 16, stage (d) except that in place of the product from Example 16, stage (c) there was used the product from Example 26, stage (c). Analysis by mass spectrometry found m/z 1051 (M-H)⁻.

### Example 27

Preparation of Compound (27) wherein M is nickel

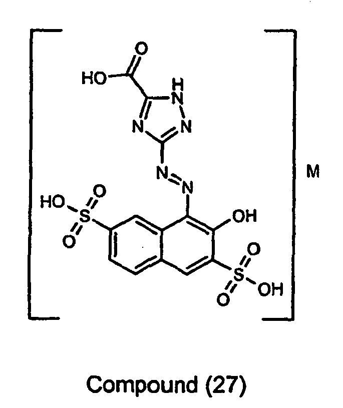

### Stage (a):

3-hydroxynaphthalene-2,6-disulfonic acid was prepared by the method described in Example 24, Stage (a).

### Stage (b):

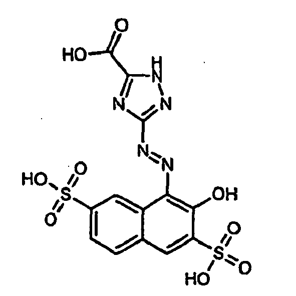

3-amino-1,2,4-triazole-5-carboxylic acid hydrate (3.84g, 0.03mol) was suspended in water (180ml) and dissolved by the addition of 2M NaOH to pH 8. Sodium nitrite (2.27g, 0.033mol) was added and the solution stirred until the sodium nitrite had dissolved.

The mixture was then added dropwise to a cooled mix of ice-water (150g) and concentrated HCl (10ml) at 0-5°C, the mixture was stirred for 30 minutes at 0-5°C and then excess nitrous acid was removed by adding sulphamic acid. The diazo suspension was added slowly to a solution of 3-hydroxynaphthalene-2,6-disulfonic acid (13.4g, 0.03mol) in water (300ml) at pH 7-8 (2N NaOH) and cooled below 5°C. The reaction mixture was then stirred at 0-5°C for one further hour, the product was precipitated by acidification to pH 4 with 2N HCl and collected by filtration. The product was washed with 15% brine solution and then dried in a vacuum desiccator to give 20g of an orange solid (60% yield).

### Stage (c): Preparation of Compound (27)

A solution of nickel acetate tetrahydrate (2.5g, 0.01mol) in water (20ml) was added dropwise to the product from stage (b) (7.43g, 0.01 mol) dissolved in water (100ml) at pH 7-8 (2N NaOH). The reaction mixture was stirred for 2 hours at 20°C, dialysed using SpectraPor membrane tubing (molecular weight cut off 3500) to low conductivity (<100µs). Compound (27) was obtained by evaporation under reduced pressure to afford a dark solid (5g). Analysis by mass spectrometry found m/z 499 (M-H)⁻. Requires M⁺=500.

### Examples 28 to 31

Compounds (28) to (31) of the Formula (D) were prepared using an analogous process to that described in Example 27 except that in stage (c) a metal salt as shown in Table 5 was used in place of nickel acetate.

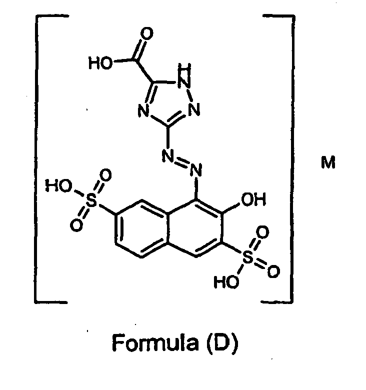

**Table 5**

| Example | Compound | Metal salt | M | Mass spectra analysis |
|---|---|---|---|---|
| 28 | (28) | Copper acetate | Cu | m/z 504 (M-H)⁻ |
| 29 | (29) | Chromium acetate | Cr | m/z 934 (M-H)⁻ |
| 30 | (30) | Zinc acetate | Zn | m/z 947 (M-H)⁻ |
| 31 | (31) | Cobalt acetate | Co | m/z 941 (M-H)⁻ |

### Example 32 to 34

Compounds (32) to (34) of the Formula (E) described in Table 6 were prepared using an analogous process to that described in Example 27 except that in stage (b) in place of 3-amino-1,2,4-triazole-5-carboxylic acid there was used the triazole compound shown in Table 2. The name of the resultant Compound is shown in the third column of Table 6. M is nickel.

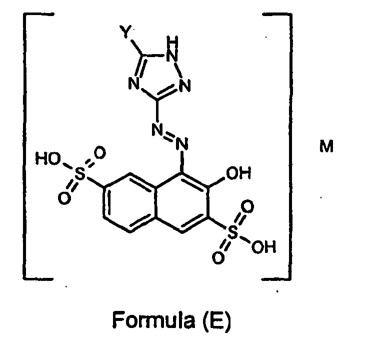

**Table 6**

| Example | Triazole | Y | Compound name |
|---|---|---|---|
| 32 | 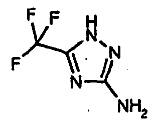 | CF₃ | Nickel chelate of [3-hydroxy-4-(5-trifluomethyl-1H-[1,2,4]triazole-3-ylazo)-naphthalene-2,7-disulfonic acid ("Compound (32)"). Analysis by mass spectrometry found m/z 989 (M-H)⁻. |
| 33 | 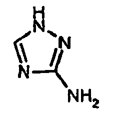 | H | Nickel chelate of [3-hydroxy-4-(1H-[1,2,4]triazole-3-ylazo)-naphthalene-2,7-disulfonic acid. ("Compound (33)"). Analysis by mass spectrometry found m/z 853 (M-H)⁻. |
| 34 | 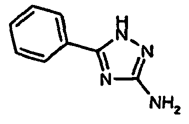 | C₆H₅ | Nickel chelate of [3-hydroxy-4-(5-phenyl-1H-[1,2,4]triazole-3-ylazo)-naphthalene-2,7-disulfonic acid. ("Compound (34)"). Analysis by mass spectrometry found m/z 1007 (M-H)⁻. |

### Example 35

Compound (35) of the Formula (F) described in Table 7 was prepared using an analogous process to that described in Example 27 except that in stage (b) in place of 3-hydroxynaphthalene-2,6-disulfonic acid there was used 2-hydroxynaphthalene-3,6-disulfonic acid.

Compounds (36) and (37) of the Formula (F) described in Table 7 were prepared using an analogous process to that described in Example 27 except that in stage (b) in place of 3-hydroxynaphthalene-2,6-disulfonic acid there was used 2-hydroxynaphthalene-3,6-disulfonic acid and in place of 3-amino-1,2,4-triazole-5-carboxylic acid there was used the amino triazole compound shown in Table 3.

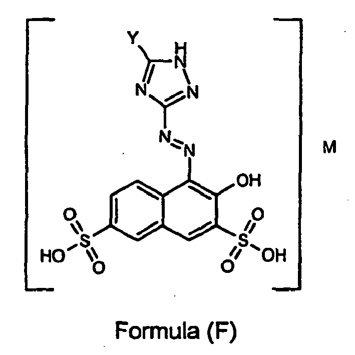

**Table 7**

| Example | Triazole | Y | Dye name |
|---|---|---|---|
| 35 | 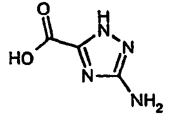 | CO₂H | Nickel chelate of [5-(2-hydroxy-3,6-disulfonaphthalen-1-ylazo)-2H-[1,2,4]triazole-3-carboxylic acid]. ("Compound (35)"). Analysis by mass spectrometry found m/z 941 (M-H)⁻. |
| 36 | 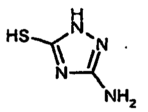 | SH | Nickel chelate of [3-hydroxy-4-(5-mercapto-1H-[1,2,4]triazole-3-ylazo)-naphthalene-2,7-disulfonic acid]. ("Compound (36)"). |
| 37 | 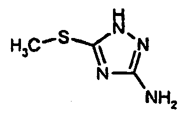 | SCH₃ | Nickel chelate of [3-hydroxy-4-(5-methylsulfanyl-1H-[1,2,4]triazole-3-ylazo)-naphthalene-2,7-disulfonic acid]. ("Compound (37)"). Analysis by mass spectrometry found m/z 501 (M-H)⁻. |

### Example 38

### Compound (38) wherein M is Copper:

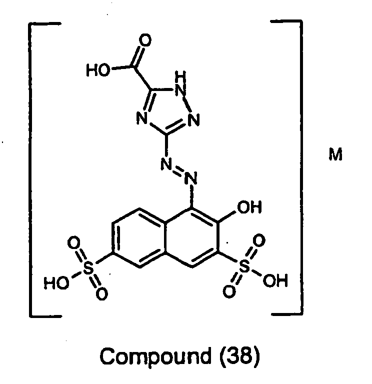

Compound (38) was prepared using an analogous process to that described in Example 27 except that in stage (b) 2-hydroxynaphthalene-3,6-disulfonic acid was used in place of 3-hydroxynaphthalene-2,6-disulfonic acid and in stage (c) copper acetate was used in place of nickel acetate.

### Example 39

Preparation of Compound (39) wherein M is nickel:

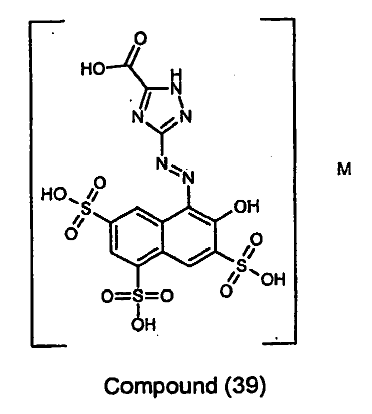

### Stage (a):

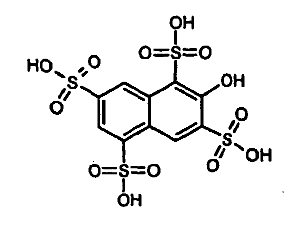

The product of Example 27 stage (a) (5g), (0.016mol) was added in portions during the course of 30 minutes to 27% oleum (10ml) with stirring at room temperature. A second portion of 27% oleum (10ml) was added and the reaction mixture stirred overnight at room temperature. The reaction mixture was then stirred for 3.5 hours at 120°C, cooled and the product collected by filtration using a sintered funnel and washed with concentrated H₂SO₄ (5ml). The crude product was dissolved in water (20ml) and precipitated by the addition of sodium chloride. The solid was collected by filtration and dried to give a pale pink solid.

### Stage (b): Preparation of Compound (40) wherein M is nickel:

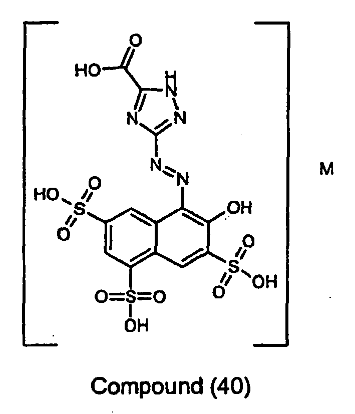

The Compound (40) was prepared using an analogous process to that described in Example 27 except that in stage (b) 2-hydroxy-naphthalene-1,3,5,7-tetrasulphonic acid was used in place of 3-hydroxynaphthalene-2, 6-disulfonic acid. Analysis by mass spectrometry found m/z 579 (M-H)⁻.

### Example 41

Preparation of Compound (41) wherein M is nickel:

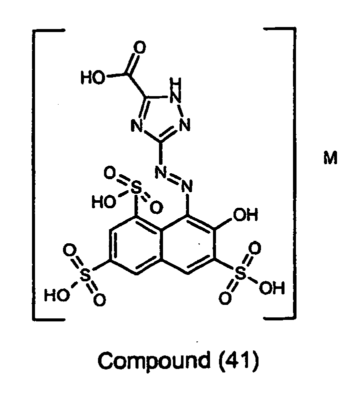

Compound (41) was prepared using an analogous process to that described in Example 27 except that in stage (b) 7-hydroxynaphthalene-1,3,6-triulfonic acid was used in place of 3-hydroxynaphthalene-2,6-disulfonic acid. Analysis by mass spectrometry found m/z 1101 (M-H)⁻_{.}

### Example 42

Preparation of Compound (42) wherein M is nickel:

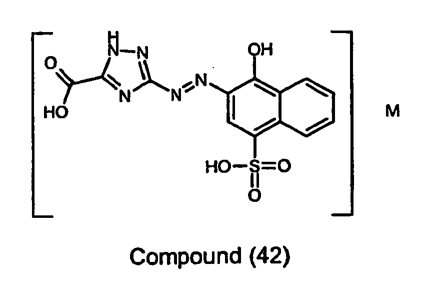

### Stage (a): Preparation of:

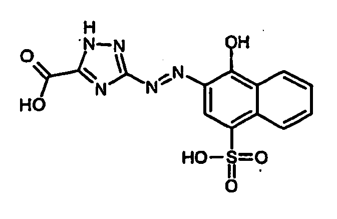

3-amino-1,2,4-triazole-5-carboxylic acid hydrate (1.28g, 0.01mol) was suspended in water (50ml) and dissolved by the addition of 2M NaOH to pH 8. Sodium nitrite (0.76g, 0.11mol) was added and the solution stirred until the sodium nitrite had dissolved.

The mixture was then added dropwise to a cooled mix of ice-water (30g) and concentrated HCl (3.0ml) at 0-5°C, the mixture was stirred for 30 minutes at 0-5°C and then excess nitrous acid was removed by adding sulphamic acid. The diazo suspension was added slowly to a solution of 4-hydroxy-naphthalene-1-sulfonic acid sodium salt (2.46g, 0.01mol) in water (100ml) at pH 10-10.5 (2N NaOH) and cooled below 5°C. The reaction mixture was then stirred at 0-5°C for one further hour, the product was precipitated by acidification to pH 4 with 2N HCl and collected by filtration. The product was washed with water and then dried in a vacuum desiccator to give 2.9g of an orange solid.

### Stage (b): Preparation of Compound (42):

A solution of nickel acetate tetrahydrate (1.3g, 0.005mol) in water (10ml) was added dropwise to the product from stage (a) (1.9g, 0.005mol) dissolved in water (100ml) at pH 7-8 (2N NaOH). The reaction mixture was stirred for 2 hours at 20°C, dialysed using SpectraPor membrane tubing (molecular weight cut off 3500) to low conductivity (<100µs). The product was obtained by evaporation under reduced pressure to afford a dark solid (1.7g). Analysis by mass spectrometry found m/z 781 (M-H)⁻.

### Examples 43 and 44

Compounds (43) and (44) described in Table 8 of the Formula (G) were prepared using an analogous process to that described in Example 42 except that in stage (b) the metal salt (M) shown in Table 8 was used in place of nickel acetate.

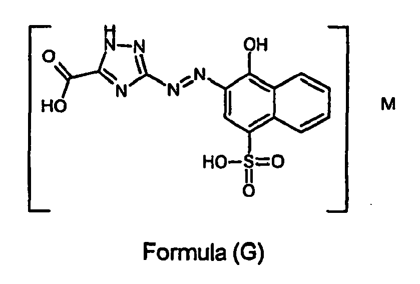

**Table 8**

| Example | Compound | Metal salt | M | Mass spectra analysis. |
|---|---|---|---|---|
| 43 | (43) | Cobalt acetate | Co | m/z 781 (M-H)⁻ |
| 44 | (44) | Chromium acetate | Cr | m/z 827 (M-H)⁻ |

### Example 45

Preparation of Compound (45) wherein M is nickel:

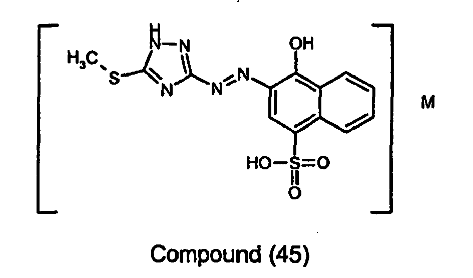

Compound (45) was prepared using an analogous process to that described in Example 42 except that in stage (a) 3-amino-5-methylthio-1 ,2,4-triazole was used in place of 3-amino-1,2,4-triazole-5-carboxylic acid. Analysis by mass spectrometry found m/z 785 (M-H)⁻.

### Example 46

Preparation of Compound (46) wherein M is nickel:

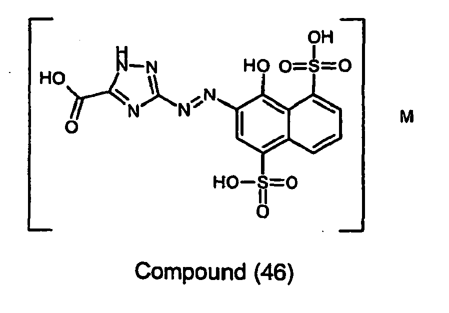

### Stage (a):

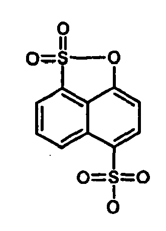

1,8-Naphthosultone (25.0g, 0.119mol) was added in portions to concentrated sulphuric acid (75ml), the reaction mixture was then stirred for 2 hours at 80°C and then added to a mixture of ice (70g) and water (20ml). Anhydrous sodium sulfate (46g) was added in portions to the reaction mixture at 30°C, the product was collected by filtration and then dissolved in water (120ml) at 50°C. The product was precipitated by the addition of sodium chloride (25%w/v), stirred at 40°C for 1 hour and then collected by filtration. The solid was dried in a vacuum oven to give 30g of a pink solid (76%).

### Stage (b) - Preparation of 4-hydroxy-1,5-disulphonaphthalene:

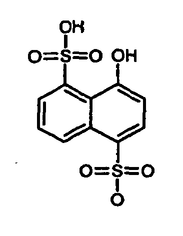

The product from stage (a) (30g) was dissolved in water (200ml) at pH 11 by the addition of 2N sodium hydroxide. The solution was stirred at room temperature for 2hrs to complete the hydrolysis and the solution of the product used in the next stage without isolation.

### Stage (c):

Compound (46) was prepared using an analogous process to that described in Example 42 except that in the process of Example 42, stage (a) 4-hydroxy-1,5-disulphonaphthalene was used in place of 4-hydroxy-naphthalene-1-sulfonic acid. Analysis by mass spectrometry found m/z 941 (M-H)⁻.

### Examples 47 and 48

Compounds (47) and (48) described in Table 9 of the Formula (H) were prepared using an analogous process to that described in Example 42 except that in stage (a) 4-hydroxy-naphthalene-1,5-disulfonic acid was used in place of 4-hydroxy-naphthalene-1-sulfonic acid and in place of 3-amino-1,2,4-triazole-5-carboxylic acid the amino triazole compound shown in Table 9 was used.

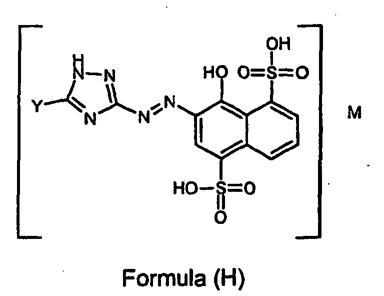

**Table 9**

| Example | Y | Triazole | Dye name |
|---|---|---|---|
| 47 | -CF₃ | 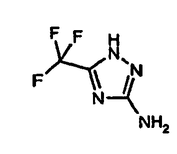 | Nickel chelate of [4-hydroxy-3-(5-trifluoromethyl-1H-[1,2,4]triazole-3-ylazo)-naphthalene-1,5-disulfonic acid]. ("Compound (47)"). Analysis by mass spectrometry found m/z 989 (M-H)⁻. |
| 48 | -H | 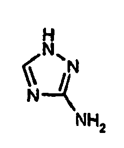 | Nickel chelate of [4-hydroxy-3-(1H-[1,2,4]triazol-3-ylazo)-naphthalene-1,5-disulfonic acid]. ("Compound (48)"). Analysis by mass spectrometry found m/z 853 (M-H)⁻. |

### Example 49

Preparation of Compound (49) wherein M is nickel:

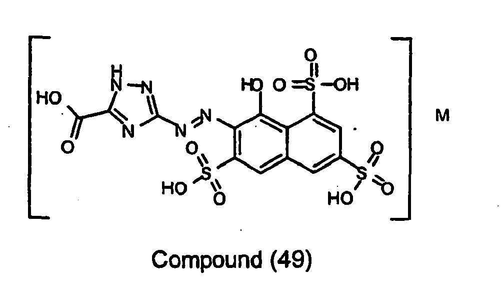

Compound (49) was prepared using an analogous process to that described in Example 42 except that in stage (a) 8-hydroxynaphthalene-1,3,6-trisulfonic acid was used in place of 4-hydroxynaphthalene-1-sulfonic acid. Analysis by mass spectrometry found m/z 1157 (M-H)⁻,

### Example 50

Preparation of Compound (50) wherein M is nickel:

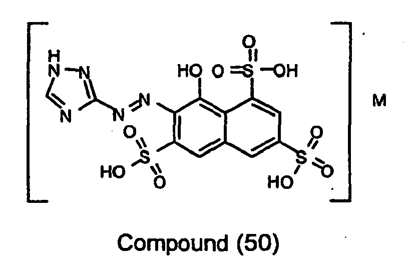

Compound (50) was prepared using an analogous process to that described in Example 42 except that in stage (a) 8-hydroxy-naphthalene-1,3,6-trisulfonic acid was used in place of 4-hydroxy-naphthalene-1-sulfonic acid and 3-amino-1,2,4-triazole was used in place of 3-amino-1,2,4-triazole-5-carboxylic acid. Analysis by mass spectrometry found m/z 534 (M-H)⁻_{.}

### Example 51 - Comparison of Compound (27) with Comparative Dye 1

The Compound described in EP 1,241,232 A1, page 19, Example 2-2 (hereinafter Comparative Dye 1") was prepared having the following structure wherein M is nickel:

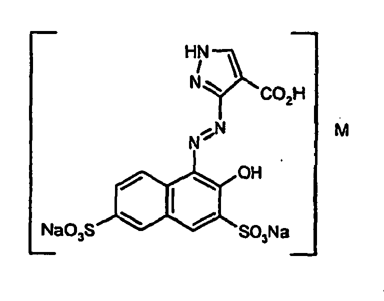

In addition the Compound (27) from Example 27 above was prepared.

Inks were prepared containing each compound and the inks were printed onto HP Plain Paper. The resultant prints prepared from Compound (27) were bright and had good light fastness and ozone fastness. In contrast the prints prepared from Comparative Dye 1 were very dull, with ozone fastness poorer than Compound (27) and light-fastness similar to or slightly worse than Compound (27).

### Example 52 - Comparison of Compound (23) with Comparative Dye 2

The dye described in EP 1,241,232 A1, page 25, Example 4-1 (hereinafter "Comparative Dye 2") was prepared having the following structure:

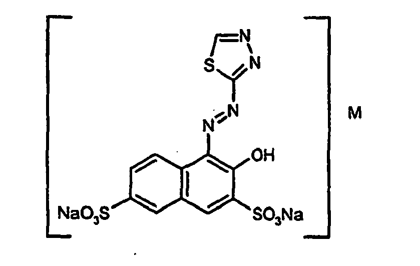

In addition Compound (23) from Example 23 was prepared.

Inks were prepared containing each compound and the inks were printed onto HP Plain Paper. The resultant prints Compound (23) were bright and had good light fastness and ozone fastness. In contrast the resultant prints prepared from Comparative Dye 2 were very dull , with poorer ozone fastness and light-fastness than Compound (23).

### Inks

The inks described in Tables I, II, III, IV, V, VI, VII and VIII may be prepared wherein the Compound described in the first column is the Compound made in the above example of the same number. Numbers quoted in the second column onwards refer to the number of parts of the relevant ingredient and all parts are by weight. The inks may be applied to paper by thermal.

The following abbreviations are used in Tables I , II, III, IV, V, VI, VII and VIII:
PG = propylene glycol
DEG = diethylene glycol
NMP = N-methyl pyrollidone
DMK = dimethylketone
IPA = isopropanol
MEOH = methanol
2P = 2-pyrollidone
MIBK = methylisobutyl ketone
P12 = propane-1,2-diol
BDL = butane-2,3-diol
CET= cetyl ammonium bromide
PHO = Na₂HPO₄ and
TBT = tertiary butanol
TDG = thiodiglycol

**TABLE I**

| Compound | Dye Content | Water | PG | DEG | NMP | DMK | NaOH | Na Stearate | IPA | MEOH | 2P | MIBK |
|---|---|---|---|---|---|---|---|---|---|---|---|---|
| 1 | 2.0 | 80 | 5 | | 6 | 4 | | | | | 5 | |
| 2 | 3.0 | 90 | | 5 | 5 | | 0.2 | | | | | |
| 3 | 10.0 | 85 | 3 | | 3 | 3 | | | | 5 | 1 | |
| 4 | 2.1 | 91 | | 8 | | | | | | | | 1 |
| 5 | 3.1 | 86 | 5 | | | | | 0.2 | 4 | | | 5 |
| 6 | 1.1 | 81 | | | 9 | | 0.5 | 0.5 | | | 9 | |
| 7 | 2.5 | 60 | 4 | 15 | 3 | 3 | | | 6 | 10 | 5 | 4 |
| 8 | 5 | 65 | | 20 | | | | | 10 | | | |
| 9 | 2.4 | 75 | 5 | 4 | | 5 | | | | 6 | | 5 |
| 10 | 4.1 | 80 | 3 | 5 | 2 | 10 | | 0.3 | | | | |
| 11 | 3.2 | 65 | | 5 | 4 | 6 | | | 5 | 4 | 6 | 5 |
| 10 | 5.1 | 96 | | | | | | | | 4 | | |
| 11 | 10.8 | 90 | 5 | | | | | | 5 | | | |
| 9 | 10.0 | 80 | 2 | 6 | 2 | 5 | | | 1 | | 4 | |
| 8 | 1.8 | 80 | | 5 | | | | | | | 15 | |
| 6 | 2.6 | 84 | | | 11 | | | | | | 5 | |
| 7 | 3.3 | 80 | 2 | | | 10 | | | | 2 | | 6 |
| 5 | 12.0 | 90 | | | | 7 | 0.3 | | 3 | | | |
| 4 | 5.4 | 69 | 2 | 20 | 2 | 1 | | | | | 3 | 3 |
| 3 | 6.0 | 91 | | | 4 | | | | | | 5 | |

**TABLE II**

| Compound | Dye Content | Water | PG | DEG | NMP | CET | TBT | TDG | BDL | PHO | 2P | PI2 |
|---|---|---|---|---|---|---|---|---|---|---|---|---|
| 1 | 3.0 | 80 | 15 | | | 0.2 | | | | | 5 | |
| 2 | 9.0 | 90 | | 5 | | | | | | 1.2 | | 5 |
| 1 | 1.5 | 85 | 5 | 5 | | 0.15 | 5.0 | 0.2 | | | | |
| 5 | 2.5 | 90 | | 6 | 4 | | | | | 0.12 | | |
| 4 | 3.1 | 82 | 4 | 8 | | 0.3 | | | | | | 6 |
| 6 | 0.9 | 85 | | 10 | | | | | 5 | 0.2 | | |
| 5 | 8.0 | 90 | | 5 | 5 | | | 0.3 | | | | |
| 9 | 4.0 | 70 | | 10 | 4 | | | | 1 | | 4 | 11 |
| 2 | 2.2 | 75 | 4 | 10 | 3 | | | | 2 | | 6 | |
| 11 | 10.0 | 91 | | | 6 | | | | | | 3 | |
| 1 | 9.0 | 76 | | 9 | 7 | | 3.0 | | | 0.95 | 5 | |
| 3 | 5.0 | 78 | 5 | 11 | | | | | | | 6 | |
| 7 | 5.4 | 86 | | | 7 | | | | | | 7 | |
| 2 | 2.1 | 70 | 5 | 5 | 5 | 0.1 | 0.2 | 0.1 | 5 | 0.1 | 5 | |
| 1 | 2.0 | 90 | | 10 | | | | | | | | |
| 6 | 2 | 88 | | | | | | 10 | | | | |
| 10 | 5 | 78 | | | 5 | | | 12 | | | 5 | |
| 8 | 8 | 70 | 2 | | 8 | | | 15 | | | 5 | |
| 2 | 10 | 80 | | | | | | 8 | | | 12 | |
| 1 | 10 | 80 | | 10 | | | | | | | | |

**TABLE III**

| Compound | Dye Content | Water | PG | DEG | NMP | DMK | NaOH | Na Stearate | IPA | MEOH | 2P | MIBK |
|---|---|---|---|---|---|---|---|---|---|---|---|---|
| 12 | 2.0 | 80 | 5 | | 6 | 4 | | | | | 5 | |
| 13 | 3.0 | 90 | | 5 | 5 | | 0.2 | | | | | |
| 14 | 10.0 | 85 | 3 | | 3 | 3 | | | | 5 | 1 | |
| 15 | 2.1 | 91 | | 8 | | | | | | | | 1 |
| 12 | 3.1 | 86 | 5 | | | | | 0.2 | 4 | | | 5 |
| 13 | 1.1 | 81 | | | 9 | | 0.5 | 0.5 | | | 9 | |
| 14 | 2.5 | 60 | 4 | 15 | 3 | 3 | | | 6 | 10 | 5 | 4 |
| 15 | 5 | 65 | | 20 | | | | | 10 | | | |
| 12 | 2.4 | 75 | 5 | 4 | | 5 | | | | 6 | | 5 |
| 13 | 4.1 | 80 | 3 | 5 | 2 | 10 | | 0.3 | | | | |
| 12 | 3.2 | 65 | | 5 | 4 | 6 | | | 5 | 4 | 6 | 5 |
| 13 | 5.1 | 96 | | | | | | | | 4 | | |
| 14 | 10.8 | 90 | 5 | | | | | | 5 | | | |
| 15 | 10.0 | 80 | 2 | 6 | 2 | 5 | | | 1 | | 4 | |
| 12 | 1.8 | 80 | | 5 | | | | | | | 15 | |
| 13 | 2.6 | 84 | | | 11 | | | | | | 5 | |
| 14 | 3.3 | 80 | 2 | | | 10 | | | | 2 | | 6 |
| 15 | 12.0 | 90 | | | | 7 | 0.3 | | 3 | | | |
| 12 | 5.4 | 69 | 2 | 20 | 2 | 1 | | | | | 3 | 3 |
| 13 | 6.0 | 91 | | | 4 | | | | | | 5 | |

**TABLE IV**

| Compound | Dye Content | Water | PG | DEG | NMP | CET | TBT | TDG | BDL | PHO | 2P | PI2 |
|---|---|---|---|---|---|---|---|---|---|---|---|---|
| 12 | 3:0 | 80 | 15 | | | 0.2 | | | | | 5 | |
| 13 | 9.0 | 90 | | 5 | | | | | | 1.2 | | 5 |
| 14 | 1.5 | 85 | 5 | 5 | | 0.15 | 5.0 | 0.2 | | | | |
| 15 | 2.5 | 90 | | 6 | 4 | | | | | 0.12 | | |
| 12 | 3.1 | 82 | 4 | 8 | | 0.3 | | | | | | 6 |
| 13 | 0.9 | 85 | | 10 | | | | | 5 | 0.2 | | |
| 14 | 8.0 | 90 | | 5 | 5 | | | 0.3 | | | | |
| 15 | 4.0 | 70 | | 10 | 4 | | | | 1 | | 4 | 11 |
| 12 | 2.2 | 75 | 4 | 10 | 3 | | | | 2 | | 6 | |
| 13 | 10.0 | 91 | | | 6 | | | | | | 3 | |
| 12 | 9.0 | 76 | | 9 | 7 | | 3.0 | | | 0.95 | 5 | |
| 13 | 5.0 | 78 | 5 | 11 | | | | | | | 6 | |
| 14 | 5.4 | 86 | | | 7 | | | | | | 7 | |
| 15 | 2.1 | 70 | 5 | 5 | 5 | 0.1 | 0.2 | 0.1 | 5 | 0.1 | 5 | |
| 14 | 2.0 | 90 | | 10 | | | | | | | | |
| 12 | 2 | 88 | | | | | | 10 | | | | |
| 13 | 5 | 78 | | | 5 | | | 12 | | | 5 | |
| 12 | 8 | 70 | 2 | | 8 | | | 15 | | | 5 | |
| 12 | 10 | 80 | | | | | | 8 | | | 12 | |
| 12 | 10 | 80 | | 10 | | | | | | | | |

**TABLE V**

| Compound | Dye Content | Water | PG | DEG | NMP | DMK | NaOH | Na Stearate | IPA | MEOH | 2P | MIBK |
|---|---|---|---|---|---|---|---|---|---|---|---|---|
| 16 | 2.0 | 80 | 5 | | 6 | 4 | | | | | 5 | |
| 17 | 3.0 | 90 | | 5 | 5 | | 0.2 | | | | | |
| 18 | 10.0 | 85 | 3 | | 3 | 3 | | | | 5 | 1 | |
| 19 | 2.1 | 91 | | 8 | | | | | | | | 1 |
| 20 | 3.1 | 86 | 5 | | | | | 0.2 | 4 | | | 5 |
| 21 | 1.1 | 81 | | | 9 | | 0.5 | 0.5 | | | 9 | |
| 22 | 2.5 | 60 | 4 | 15 | 3 | 3 | | | 6 | 10 | 5 | 4 |
| 23 | 5 | 65 | | 20 | | | | | 10 | | | |
| 24 | 2.4 | 75 | 5 | 4 | | 5 | | | | 6 | | 5 |
| 25 | 4.1 | 80 | 3 | 5 | 2 | 10 | | 0.3 | | | | |
| 26 | 3.2 | 65 | | 5 | 4 | 6 | | | 5 | 4 | 6 | 5 |
| 16 | 5.1 | 96 | | | | | | | | 4 | | |
| 16 | 10.8 | 90 | 5 | | | | | | 5 | | | |
| 17 | 10.0 | 80 | 2 | 6 | 2 | 5 | | | 1 | | 4 | |
| 18 | 1.8 | 80 | | 5 | | | | | | | 15 | |
| 19 | 2.6 | 84 | | | 11 | | | | | | 5 | |
| 21 | 3.3 | 80 | 2 | | | 10 | | | | 2 | | 6 |
| 20 | 12.0 | 90 | | | | 7 | 0.3 | | 3 | | | |
| 22 | 5.4 | 69 | 2 | 20 | 2 | 1 | | | | | 3 | 3 |
| 23 | 6.0 | 91 | | | 4 | | | | | | 5 | |

**TABLE VI**

| Compound | Dye Content | Water | PG | DEG | NMP | CET | TBT | TDG | BDL | PHO | 2P | PI2 |
|---|---|---|---|---|---|---|---|---|---|---|---|---|
| 16 | 3.0 | 80 | 15 | | | 0.2 | | | | | 5 | |
| 17 | 9.0 | 90 | | 5 | | | | | | 1.2 | | 5 |
| 18 | 1.5 | 85 | 5 | 5 | | 0.15 | 5.0 | 0.2 | | | | |
| 19 | 2.5 | 90 | | 6 | 4 | | | | | 0.12 | | |
| 20 | 3.1 | 82 | 4 | 8 | | 0.3 | | | | | | 6 |
| 21 | 0.9 | 85 | | 10 | | | | | 5 | 0.2 | | |
| 22 | 8.0 | 90 | | 5 | 5 | | | 0.3 | | | | |
| 23 | 4.0 | 70 | | 10 | 4 | | | | 1 | | 4 | 11 |
| 24 | 2.2 | 75 | 4 | 10 | 3 | | | | 2 | | 6 | |
| 25 | 10.0 | 91 | | | 6 | | | | | | 3 | |
| 26 | 9.0 | 76 | | 9 | 7 | | 3.0 | | | 0.95 | 5 | |
| 16 | 5.0 | 78 | 5 | 11 | | | | | | | 6 | |
| 18 | 5.4 | 86 | | | 7 | | | | | | 7 | |
| 22 | 2.1 | 70 | 5 | 5 | 5 | 0.1 | 0.2 | 0.1 | 5 | 0.1 | 5 | |
| 20 | 2.0 | 90 | | 10 | | | | | | | | |
| 24 | 2 | 88 | | | | | | 10 | | | | |
| 26 | 5 | 78 | | | 5 | | | 12 | | | 5 | |
| 16 | 8 | 70 | 2 | | 8 | | | 15 | | | 5 | |
| 17 | 10 | 80 | | | | | | 8 | | | 12 | |
| 16 | 10 | 80 | | 10 | | | | | | | | |

**TABLE VII**

| Compound | Dye Content | Water | PG | DEG | NMP | DMK | NaOH | Na Stearate | IPA | MEOH | 2P | MIBK |
|---|---|---|---|---|---|---|---|---|---|---|---|---|
| 27 | 2.0 | 80 | 5 | | 6 | 4 | | | | | 5 | |
| 28 | 3.0 | 90 | | 5 | 5 | | 0.2 | | | | | |
| 29 | 10.0 | 85 | 3 | | 3 | 3 | | | | 5 | 1 | |
| 30 | 2.1 | 91 | | 8 | | | | | | | | 1 |
| 31 | 3.1 | 86 | 5 | | | | | 0.2 | 4 | | | 5 |
| 32 | 1.1 | 81 | | | 9 | | 0.5 | 0.5 | | | 9 | |
| 33 | 2.5 | 60 | 4 | 15 | 3 | 3 | | | 6 | 10 | 5 | 4 |
| 34 | 5 | 65 | | 20 | | | | | 10 | | | |
| 35 | 2.4 | 75 | 5 | 4 | | 5 | | | | 6 | | 5 |
| 36 | 4.1 | 80 | 3 | 5 | 2 | 10 | | 0.3 | | | | |
| 37 | 3.2 | 65 | | 5 | 4 | 6 | | | 5 | 4 | 6 | 5 |
| 38 | 5.1 | 96 | | | | | | | | 4 | | |
| 39 | 10.8 | 90 | 5 | | | | | | 5 | | | |
| 40 | 10.0 | 80 | 2 | 6 | 2 | 5 | | | 1 | | 4 | |
| 41 | 1.8 | 80 | | 5 | | | | | | | 15 | |
| 42 | 2.6 | 84 | | | 11 | | | | | | 5 | |
| 43 | 3.3 | 80 | 2 | | | 10 | | | | 2 | | 6 |
| 44 | 12.0 | 90 | | | | 7 | 0.3 | | 3 | | | |
| 45 | 5.4 | 69 | 2 | 20 | 2 | 1 | | | | | 3 | 3 |
| 46 | 6.0 | 91 | | | 4 | | | | | | 5 | |

**TABLE VIII**

| Compound | Dye Content | Water | PG | DEG | NMP | CET | TBT | TDG | BDL | PHO | 2P | PI2 |
|---|---|---|---|---|---|---|---|---|---|---|---|---|
| 47 | 3.0 | 80 | 15 | | | 0.2 | | | | | 5 | |
| 48 | 9.0 | 90 | | 5 | | | | | | 1.2 | | 5 |
| 49 | 1.5 | 85 | 5 | 5 | | 0.15 | 5.0 | 0.2 | | | | |
| 30 | 2.5 | 90 | | 6 | 4 | | | | | 0.12 | | |
| 31 | 3.1 | 82 | 4 | 8 | | 0.3 | | | | | | 6 |
| 27 | 0.9 | 85 | | 10 | | | | | 5 | 0.2 | | |
| 33 | 8.0 | 90 | | 5 | 5 | | | 0.3 | | | | |
| 34 | 4.0 | 70 | | 10 | 4 | | | | 1 | | 4 | 11 |
| 35 | 2.2 | 75 | 4 | 10 | 3 | | | | 2 | | 6 | |
| 36 | 10.0 | 91 | | | 6 | | | | | | 3 | |
| 27 | 9.0 | 76 | | 9 | 7 | | 3.0 | | | 0.95 | 5 | |
| 38 | 5.0 | 78 | 5 | 11 | | | | | | | 6 | |
| 39 | 5.4 | 86 | | | 7 | | | | | | 7 | |
| 46 | 2.1 | 70 | 5 | 5 | 5 | 0.1 | 0.2 | 0.1 | 5 | 0.1 | 5 | |
| 41 | 2.0 | 90 | | 10 | | | | | | | | |
| 27 | 2 | 88 | | | | | | 10 | | | | |
| 28 | 5 | 78 | | | 5 | | | 12 | | | 5 | |
| 27 | 8 | 70 | 2 | | 8 | | | 15 | | | 5 | |
| 27 | 10 | 80 | | | | | | 8 | | | 12 | |
| 27 | 10 | 80 | | 10 | | | | | | | | |

## Claims

1. A process for printing an image on a substrate comprising applying thereto by means of a thermal ink jet printer an ink containing a metal chelate compound of the Formula (1) or salt thereof: 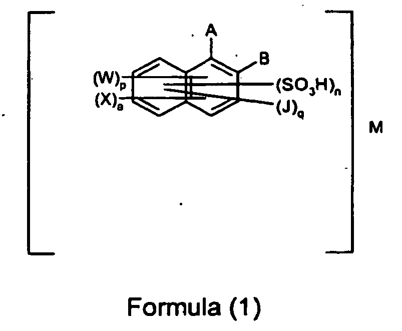 wherein:
one of A and B is OH and the other is an azotriazole group;
each W independently is a carboxy or carbonamido group;
each X independently is a substituent other than H, sulphonamido, carboy, sulpho and carbonamido;
J is a sulphonamido group;
M is a metal or boron;
a, p, q and n are each independently 0, 1, 2, 3 or 4; and
(p+q+a+n) is 0, 1, 2, 3 or 4.

2. A process according to claim 1 wherein:
p is 1, 2, 3 or 4;
a, q and n are each independently 0, 1, 2, 3 or 4; and
(p+q+a+n) is 1, 2, 3 or 4.

3. A process according to claim 1 wherein the compound is of Formula (1a) or a salt thereof: 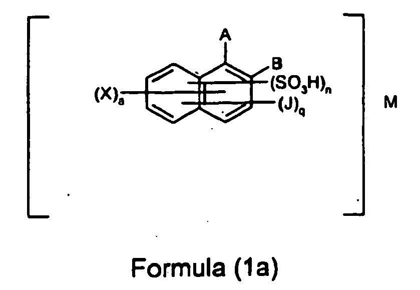 wherein:
n and a are each independently 0, 1, 2, 3 or 4;
q is 1, 2, 3 or 4;
(a+q+n) is 1, 2, 3 or 4; and
A, B, X, J and M are as defined in claim 1.

4. A process according to claim 1 wherein the compound is of Formula (1b) or a salt thereof: 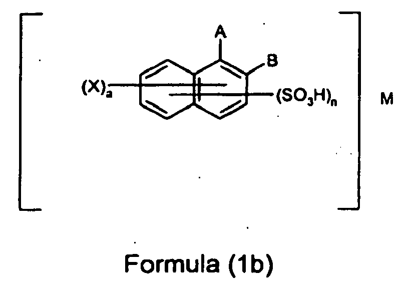 wherein:
a is 1, 2, 3 or 4;
n is 0, 1, 2, 3 or 4;
(a + n) is 1, 2, 3 or 4; and
A, B, X and M are as defined in claim 1.

5. A process according to claim 1 wherein the compound is of Formula (1c) or a salt thereof: 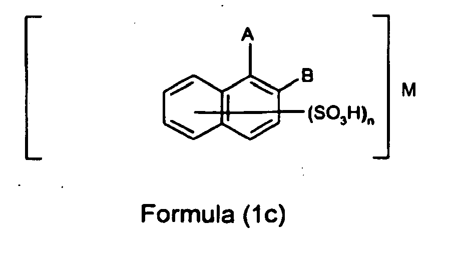 wherein:
n is 0 to 4; and
A, B and M are as defined in claim 1.

6. A process according to any one of the preceding claims wherein the azotriazole group is of the Formula (2a), (2b), (2c), (2d) or (2e): 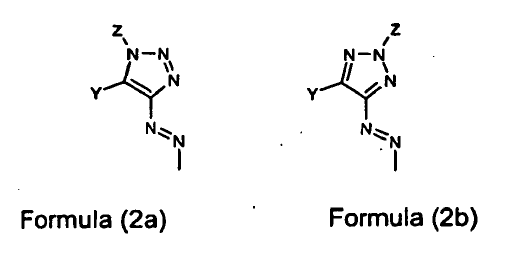 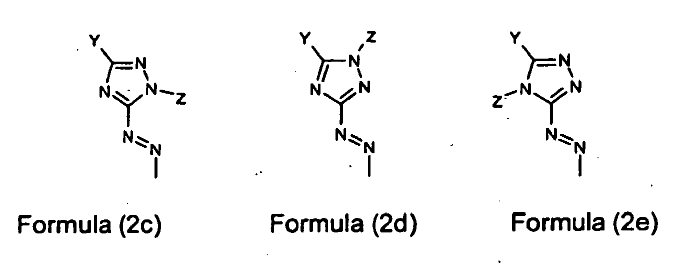 wherein:
Z is H, -OH, -Br, -CI, -F, -CN, -NO₂, -PO₃H₂, -SO₃H, -CO₂H, optionally substituted phosphoramide, optionally substituted alkyl, optionally substituted alkenyl, optionally substituted alkynyl, optionally substituted aryl, optionally substituted aralkyl, -SR¹, -SO₂R¹, -SO₂NR²R³, -SOR¹, -OR¹,-C(O)R¹, -C(O)OR¹, -C(O)NR²R³, -NR²R³, -NHCOR¹; and
Y is CF₃ or any one of the groups defined for Z; and
wherein:
R¹, R² and R³ are each independently H, optionally substituted alkyl, optionally substituted alkenyl, optionally substituted alkynyl, optionally substituted aryl or optionally substituted aralkyl; or
R² and R³ together with the nitrogen to which they are attached form an optionally substituted 5- or 6- membered ring.

7. A process according to any one of the preceding claims wherein M is nickel.

8. A process according to claim 6 wherein Z is H and Y is CO₂H or H.

9. A process according to claim 6 wherein Z is H, Y is CO₂H or H and M is nickel.

10. A process according to claim 3, 4 or 5 wherein M is nickel and the azotriazole group is of the Formula (2a), (2b), (2c), (2d) or (2e): 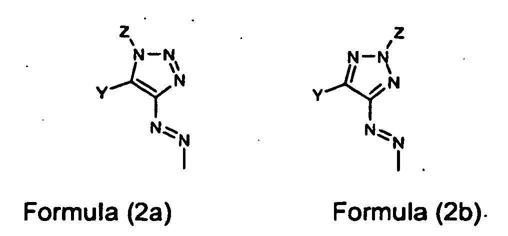 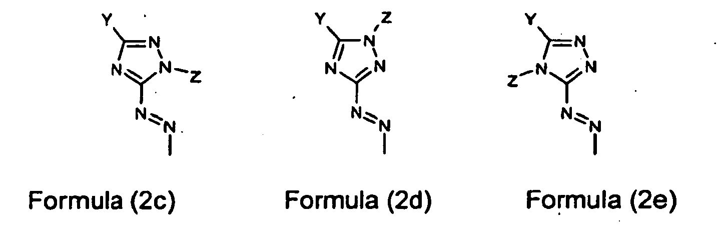 wherein Z is H and Y is CO₂H or H.

11. A process according to any one of claims 1 to 10 wherein the metal chelate compound is not a copper or nickel chelate of any of Ligands a to e or any salt thereof:

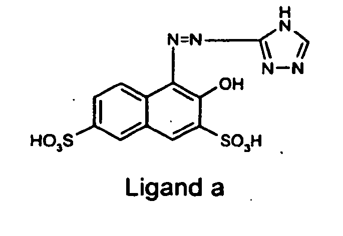

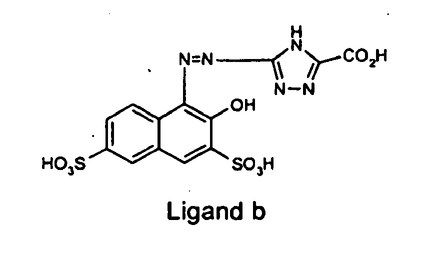

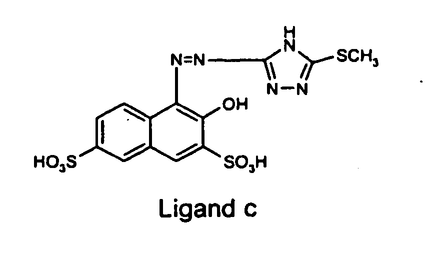

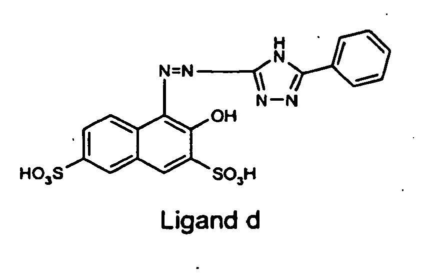

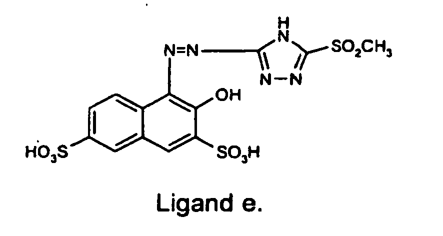

12. A process according to claim 1 or 2 wherein (p+q+a+n) is 2 or 3.

13. A process according to any one of the preceding claims wherein the ink jet printer applies the ink to the substrate in the form of droplets which are ejected through a small orifice onto the substrate.

14. A composition comprising:
(a) one or more metal chelate compounds of the Formula (1) or salt thereof: 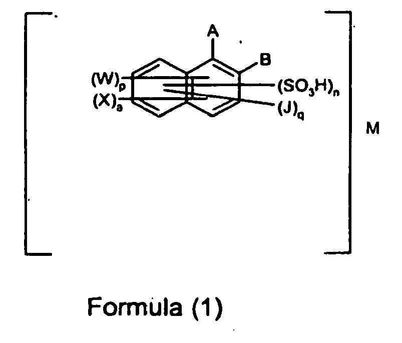 wherein:
one of A and B is OH and the other is an azotriazole group;
each W independently is a carboxy or carbonamido group;
X independently is a substituent other than H, sulphonamido, carboxy, sulpho and carbonamido;
J is a sulphonamido group;
M is a metal or boron;
a, p, q and n are each independently 0, 1, 2, 3 or 4; and
(p+q+a+n) is 0, 1, 2, 3 or 4; and
(b) one or more water-soluble xanthene, azo or bis azo dye other than a compound according to (a);
provided that the compound of Formula (1) is not a copper or nickel chelate of any of Ligands a to e or any salt thereof:

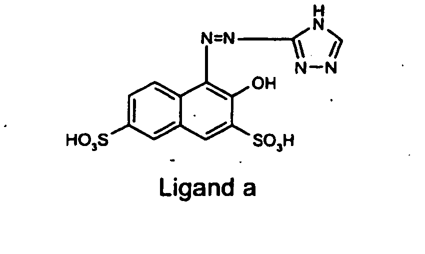

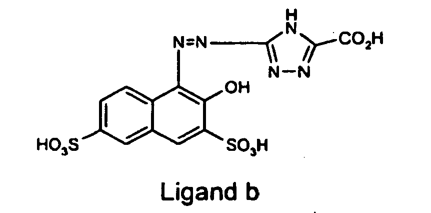

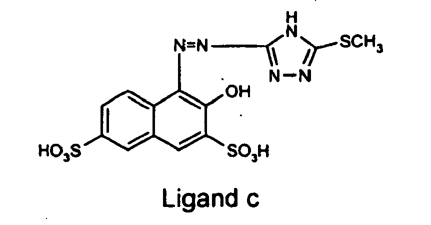

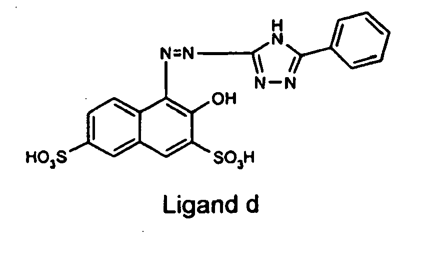

15. A composition according to claim 14 wherein the water-soluble dye represented by (b) is a water-soluble magenta dye.

16. A metal chelate compound of the Formula (1) and salts thereof:
wherein:
each W independently is a carboxy or carbonamido group;
each X independently is a substituent other than H, sulphonamido, carboxy, sulpho and carbonamido;
J is a sulphonamido group;
M is a metal or boron;
a, q, p and n are each independently 0, 1, 2, 3 or 4; and
(p+q+a+n) is 0, 1, 2, 3 or 4;
one of A and B is OH and the other is an azotriazole group of the Formula (2a), (2b), (2c), (2d) or (2e): 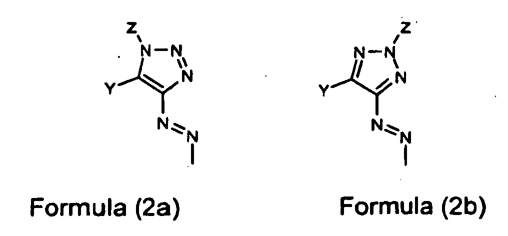 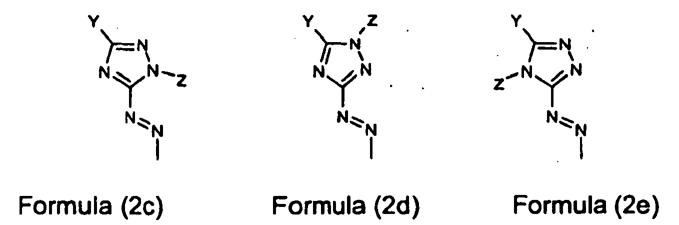 wherein:
Z is H; and
Y is CO₂H;
provided that the compound is not any of the following:
(h) a copper (II) chelate of 3-carboxy-1,2,4-triazole-(5-azo-2)-1,8-dihydroxynaphthalene-3,6-disulphonic acid;
(i) a copper (II) chelate of 2,7-bis-(5,3-carboxy-1,2,4-triazole-azo)-1,8-dihydroxynaphthalene-3,6-disulphonic acid;
(j) a copper (II), nickel (II) or cobalt (II) chelate of 3-carboxy-1,2,4-triazole-(5-azo-2)-1-hydroxy-8-aminonaphthalene-3,6-disulphonic acid;
(g) a copper (II) chelate of 3-carboxy-1,2,4-triazole-(5-azo-1)-p-anisidide-2-hydroxy-3-naphthoic acid; or
(b) a copper (II) or nickel (II) chelate of 3-carboxy-1,2,4-triazole-(5-azo-1)-2-hydroxy-naphthalene-3,6-disulphonic acid.

17. A compound of Formula (1 a) or a salt thereof: 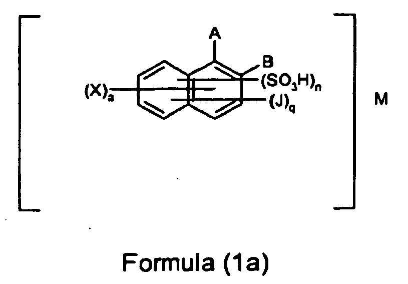 wherein:
n and a are each independently 0, 1, 2, 3 or 4;
q is 1, 2, 3 or 4;
(a+q+n) is 1, 2, 3 or 4;
one of A and B is OH and the other is an azotriazole group;
each X independently is a substituent other than H, sulphonamido, carboxy, sulpho and carbonamido;
J is a sulphonamido group; and
M is a metal or boron.

18. A compound according to claim 17 of the Formula (1a-2) or a salt thereof: 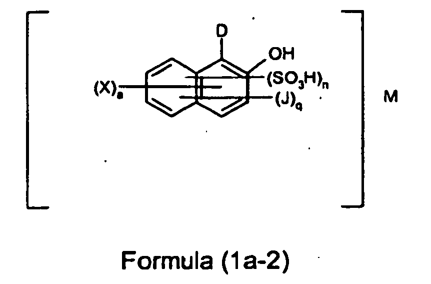 wherein:
D is an azotriazole group;
q is 1 or 2;
n is 1 or 2;
a is 0 or 1;
M is a metal; and
X and J are as defined in claim 17.

19. A compound according to claim 17 of the Formula (1a-3) or (1a-4) or a salt thereof: 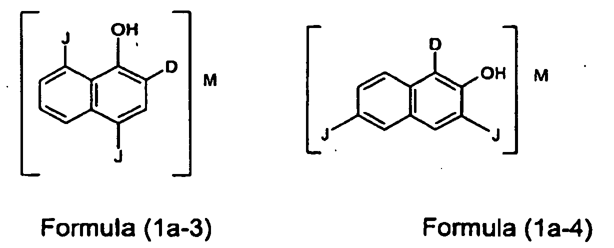 wherein:
D is an azotriazole group and M and J are as defined in claim 17.

20. A metal chelate compound of Formula (1c-1) or salt thereof. 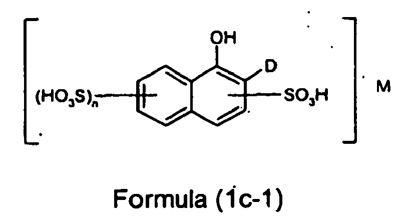 wherein:
D is an azotriazole group;
n is 1 or 2; and
M is nickel;
excluding the nickel (II) chelate of 3-carboxy-1,2,4-triazole-(5-azo-2)-1-hydroxy-8-aminonaphthalene-3,6-disulphonic acid.

21. A compound according to claim 20 which has one sulphonic acid group at the 4-position on the naphthylene ring and one sulphonic acid group at the 8-position on the naphthylene ring, relative to D being at the 2-position on the naphthylene ring.

22. A metal chelate compound of Formula (1 c-2): 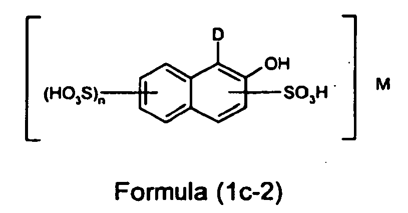 wherein:
D is an azotriazole group;
n is 1 or 2; and
M is nickel;
provided that there is one sulphonic acid group at the 3-position on the naphthylene ring and one sulphonic acid group at the 7-position on the naphthylene ring, relative to D being at the 1-position.

23. A metal chelate compound of Formula (1c-3) or (1c-4) or a salt thereof: 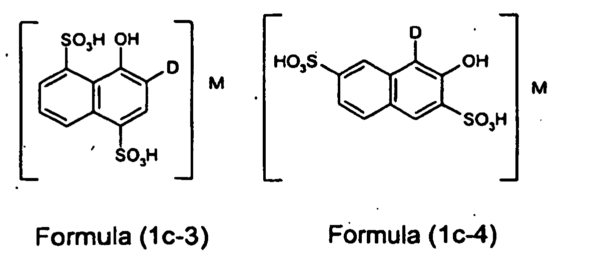 wherein M is a metal and D is an azotriazole group of Formula (2a), (2b), (2c), (2d) or (2e): 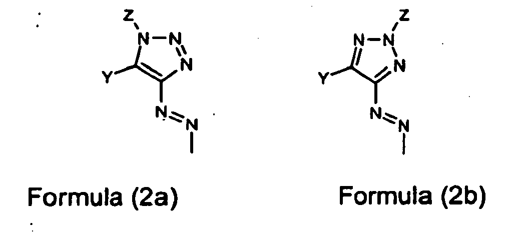 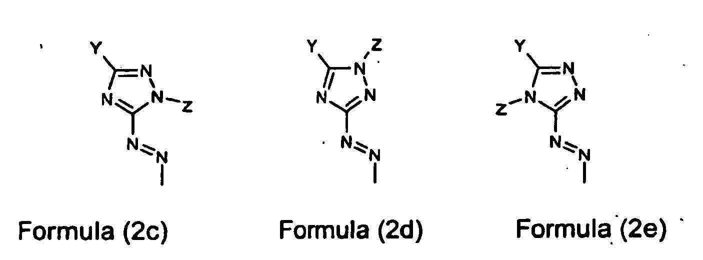 wherein Z is H and Y is CO₂H or H.

24. A compound according to any one of claims 17 to 22 wherein the azotriazole group is of the Formula (2a), (2b), (2c), (2d) or (2e): 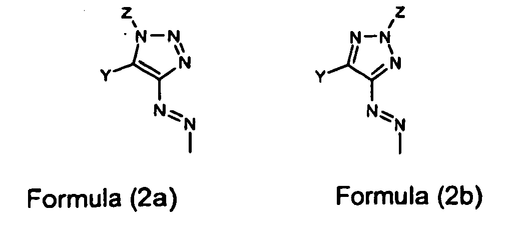 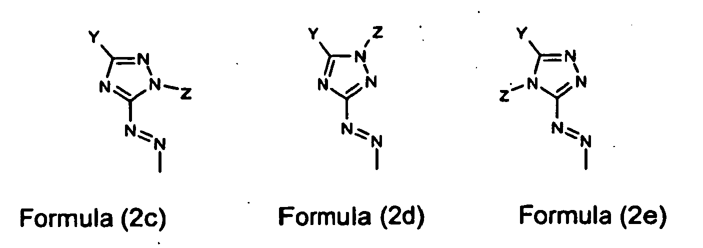 wherein Z is H and Y is CO₂H or H.

25. A compound according to any one of claims 16 to 24 wherein M is nickel.

26. A compound according to any one of claims 16 to 25 wherein M is able to coordinate with the portion in square brackets in the ratio 1:1 or 1:2.

27. An ink comprising:
(a) a compound according to any one of claims 16 to 26, or a composition according to claim 15; and
(b) a liquid medium.

28. An ink comprising:
(a) a liquid medium comprising a non-ionic surfactant; and
(b) a metal chelate compound of the Formula (1) or salt thereof: 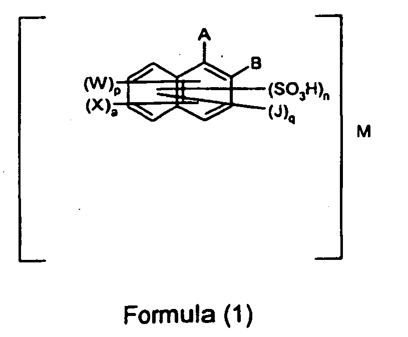
wherein:
one of A and B is OH and the other is an azotriazole group;
each W independently is a carboxy or carbonamido group;
each X independently is a substituent other than H, sulphonamido, carboxy, sulpho and carbonamido;
J is a sulphonamido group;
M is a metal or boron;
a, p, q and n are each independently 0, 1, 2, 3 or 4; and
(p+q+a+n) is 0, 1, 2, 3 or 4
provided that the compound of Formula (1) is not a copper or nickel chelate of any of Ligands a to e or any salt thereof:

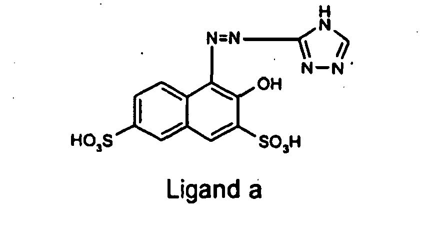

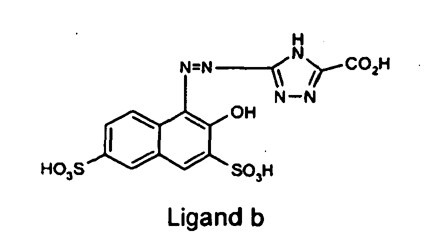

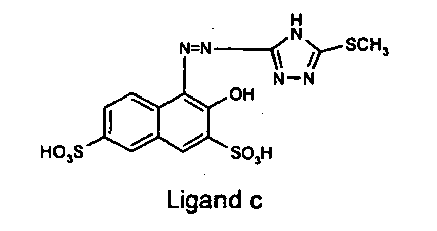

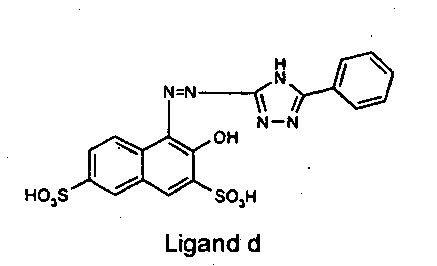

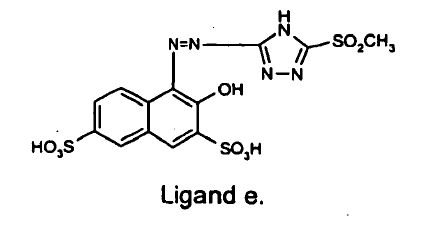

29. An ink according to claim 28 wherein the compound of Formula (1) is as defined in any one of claims 16 to 26.

30. A substrate printed with an ink according to claim 27, 28 or 29, or by means of the process according to claim 1.

31. An ink jet printer cartridge comprising a chamber and ink, wherein the ink is present in the chamber and the ink contains a compound according to any one of claims 16 to 26.

32. An ink jet printer containing an ink jet printer cartridge, wherein the ink jet printer cartridge is as defined in claim 31.

## Patentansprüche

1. Verfahren zur druckmäßigen Bebilderung eines Substrats, bei dem man dieses mit einer Tinte, enthaltend eine Metallchelatverbindung der Formel (1) oder ein Salz davon: 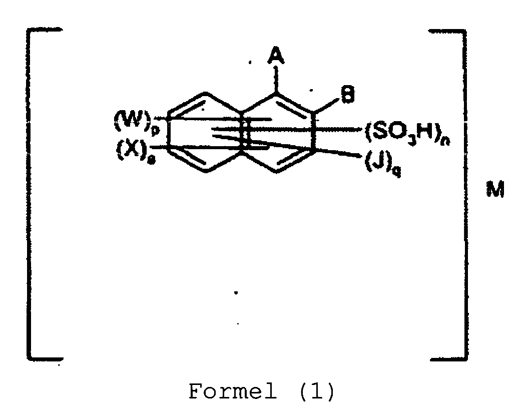 in der die Formelglieder jeweils folgende Bedeutung haben:
A und B ist zum einen OH und zum anderen eine Azotriazolgruppe;
W ist jeweils Carboxy- oder unabhängig voneinander eine Carbonamidogruppe;
X ist jeweils verschiedener Carboxy, Sulfo unabhängig voneinander ein von H Substituent, Sulfonamido, und Carbonamido;
J ist eine Sulfonamidogruppe;
M ist ein Metall oder Bor;
a, p, q und n sind jeweils unabhängig voneinander
0, 1, 2, 3 oder 4; und
(p+q+a+n) ist 0, 1, 2, 3 oder 4,
mittels eines Thermofarbstrahldruckers beaufschlagt.

2. Verfahren nach Anspruch 1, bei dem
p 1, 2, 3 oder 4;
a, q und n jeweils unabhängig voneinander 0, 1, 2, 3 oder 4; und
(p+q+a+n) 1, 2, 3 oder 4 sind.

3. Verfahren nach Anspruch 1, bei dem die Verbindung der Formel (1a) oder einem Salz davon: 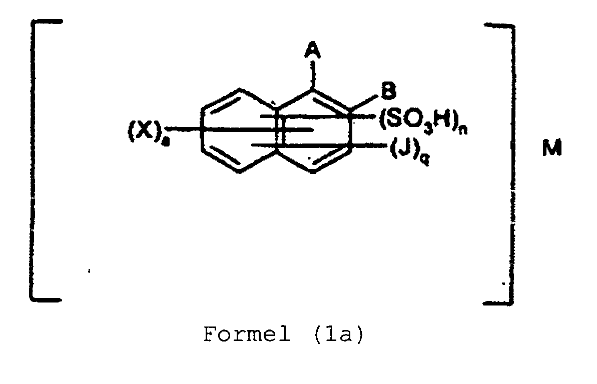 wobei
n und a jeweils unabhängig voneinander 0, 1, 2, 3 oder 4;
q 1, 2, 3 oder 4;
(a+q+n) 1, 2, 3 oder 4 sind und
A, B, X, J und M die in Anspruch 1 genannte Bedeutung haben,
entspricht.

4. Verfahren nach Anspruch 1, bei dem die Verbindung der Formel (1b) oder einem Salz davon: 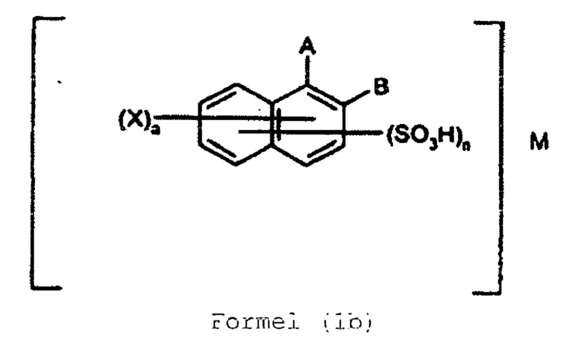 wobei
a 1, 2, 3 oder 4;
n 0, 1, 2, 3 oder 4;
(a+n) 1, 2, 3 oder 4 ist und
A, B, X und M die in Anspruch 1 genannte Bedeutung haben,
entspricht.

5. Verfahren nach Anspruch 1, bei dem die Verbindung der Formel (1c) oder einem Salz davon: 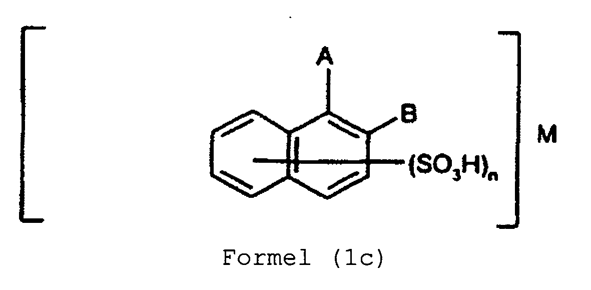 wobei
n 0 bis 4 ist und
A, B und M die in Anspruch 1 genannte Bedeutung haben,
entspricht.

6. Verfahren nach einem der vorhergehenden Ansprüche, bei dem die Azotriazolgruppe der Formel (2a), (2b), (2c), (2d) oder (2e) entspricht: 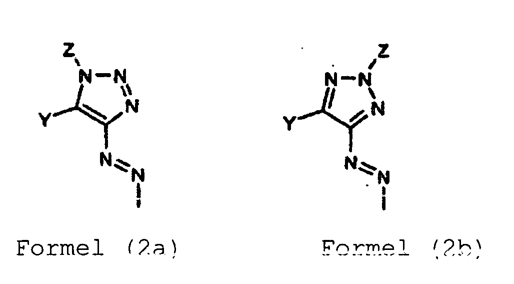 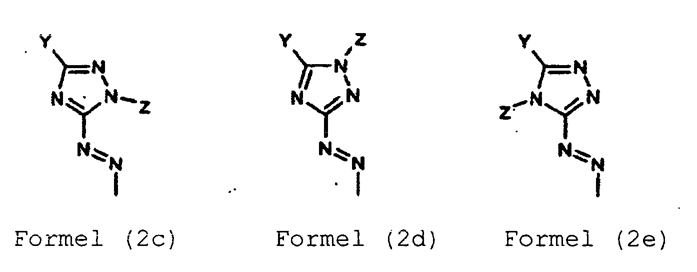 wobei die Formelglieder jeweils folgende Bedeutung haben:
Z ist H, -OH, -Br, -C1, -F, -CN, -NO₂, -PO₃H₂, -SO₃H, -CO₂H, gegebenenfalls substituiertes Phosphoramid, gegebenenfalls substituiertes Alkyl, gegebenenfalls substituiertes Alkenyl, gegebenenfalls substituiertes Alkinyl, gegebenenfalls substituiertes Aryl, gegebenenfalls substituiertes Aralkyl, -SR¹, -SO₂R¹, -SO₂NR²R³,-SOR¹, -OR¹, -C(O)R¹, -C(O)OR¹, -C(O)NR²R³, -NR²R³,-NHCOR¹ und
Y ist CF₃ oder eine der für Z definierten Gruppen; und
wobei
R¹, R² und R³ jeweils unabhängig voneinander H, gegebenenfalls substituiertes Alkyl, gegebenenfalls substituiertes Alkenyl, gegebenenfalls substituiertes Alkinyl, gegebenenfalls substituiertes Aryl oder gegebenenfalls substituiertes Aralkyl bedeuten; oder
R² und R³ zusammen mit dem sie verbindenden Stickstoffatom einen gegebenenfalls substituierten 5- oder 6-gliedrigen Ring bilden.

7. Verfahren nach einem der vorhergehenden Ansprüche, bei dem M Nickel ist.

8. Verfahren nach Anspruch 6, bei dem Z, H und Y CO₂H oder H ist.

9. Verfahren nach Anspruch 6, bei dem Z H, Y CO₂H oder H und M Nickel ist.

10. Verfahren nach Anspruch 3, 4 oder 5, bei dem M Nickel ist und die Azotriazolgruppe der Formel (2a), (2b), (2c), (2d) oder (2e): 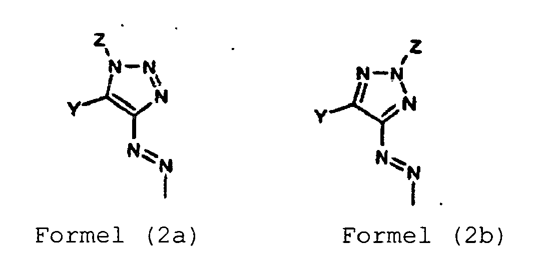 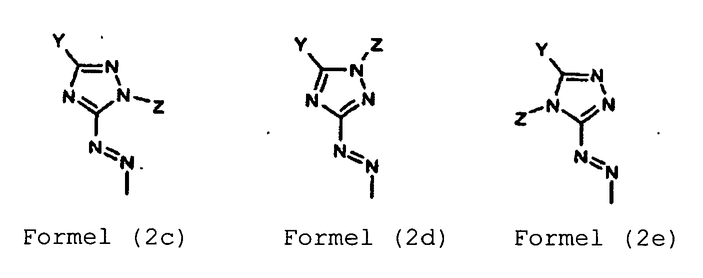 wobei Z H und Y CO₂H oder H ist, entspricht.

11. Verfahren nach einem der Ansprüche 1 bis 10, bei dem die Metallchelatverbindung kein Kupfer- oder Nickelchelat eines der Liganden a bis e oder ein Salz davon ist:

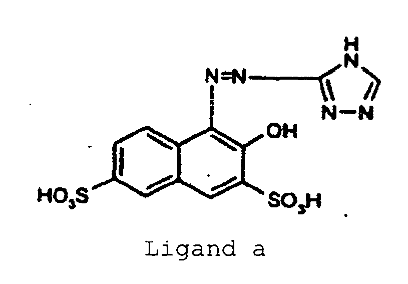

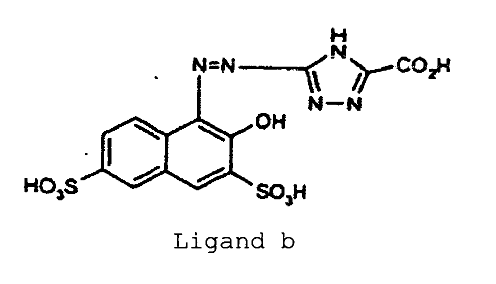

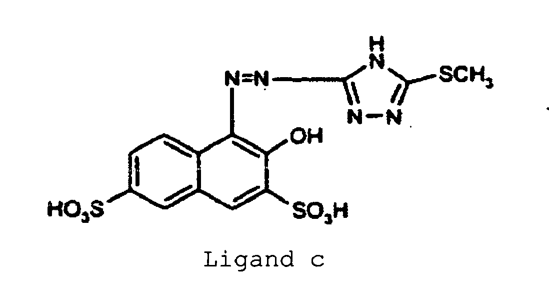

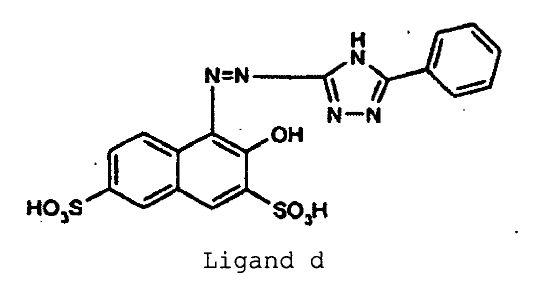

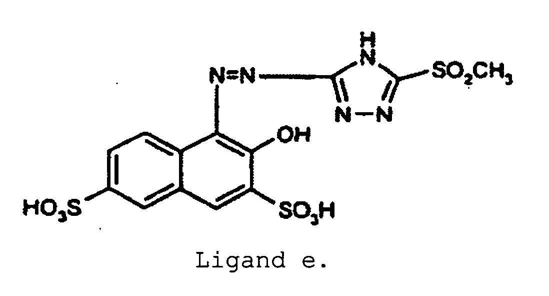

12. Verfahren nach Anspruch 1 oder 2, bei dem (p+q+a+n) 2 oder 3 ist.

13. Verfahren nach einem der vorhergehenden Ansprüche, bei dem der Farbstrahldrucker die Tinte in Form von Tröpfchen auf das Substrat aufbringt, die über eine kleine Offnung auf das Substrat geschossen werden.

14. Zusammensetzung, umfassend:
(a) mindestens eine der Metallchelatverbindungen der Formel (1) oder Salz davon: 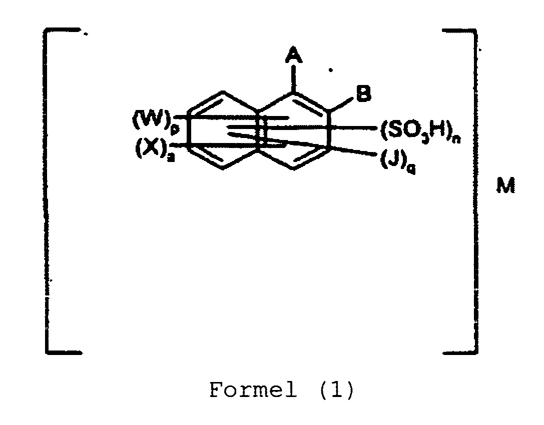 in der die Formelglieder jeweils folgende Bedeutung haben:
A und B ist zum einen OH und zum anderen eine Azotriazolgruppe;
W ist jeweils unabhängig voneinander eine Carboxy- oder Carbonamidogruppe;
X ist jeweils unabhängig voneinander ein von H verschiedener Substituent, Sulfonamido, Carboxy, Sulfo und Carbonamido;
J ist eine Sulfonamidogruppe;
M ist ein Metall oder Bor;
a, p, q und n sind jeweils unabhängig voneinander 0, 1, 2, 3 oder 4; und
(p+q+a+n) ist 0, 1, 2, 3 oder 4 und
(b) mindestens einen von der Verbindung gemäß (a) verschiedenen wasserlöslichen Xanthen-, Azo- oder Bisazofarbstoff;
vorausgesetzt, dass die Verbindung der Formel (1) kein Kupfer- oder Nickelchelat eines der Liganden a bis e oder ein Salz davon: 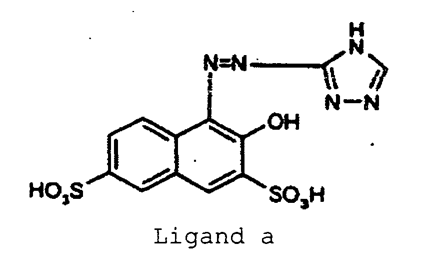 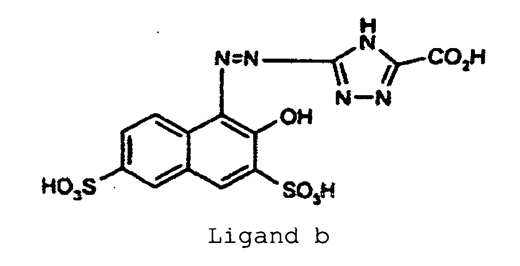 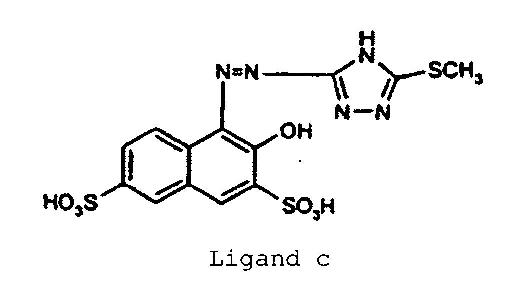 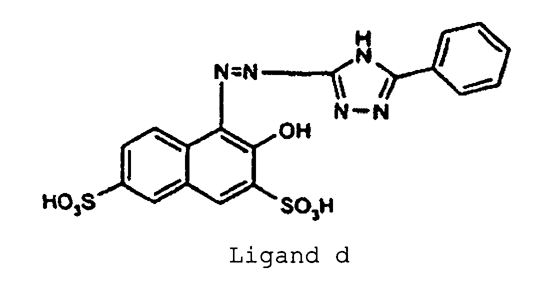 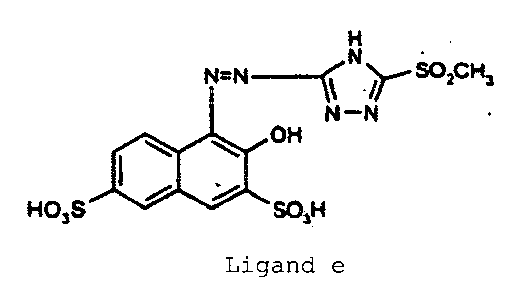 ist.

15. Zusammensetzung nach Anspruch 14, bei der es sich bei dem durch (b) **gekennzeichnet**en wasserlöslichen Farbstoff um einen wasserlöslichen Magentafarbstoff handelt.

16. Metallchelatverbindung der Formel (1) und Salzen davon: 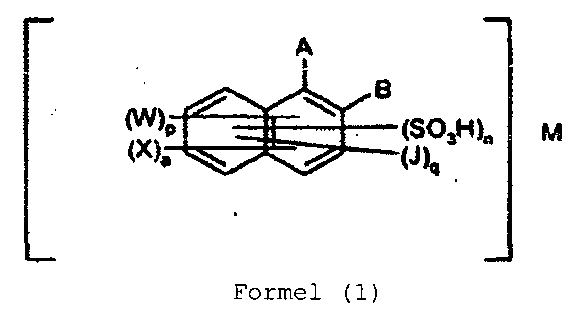 in der die Formelglieder jeweils folgende Bedeutung haben:
W ist jeweils unabhängig voneinander eine Carboxy- oder Carbonamidogruppe;
X ist jeweils unabhängig voneinander ein von H verschiedener Substituent, Sulfonamido, Carboxy, Sulfo und Carbonamido;
J ist eine Sulfonamidogruppe;
M ist ein Metall oder Bor;
a, p, q und n sind jeweils unabhängig voneinander 0, 1, 2, 3 oder 4; und
(p+q+a+n) ist 0, 1, 2, 3 oder 4,
A und B ist zum einen OH und zum anderen eine Azotriazolgruppe der Formel (2a), (2b), (2c), (2d) oder (2e): 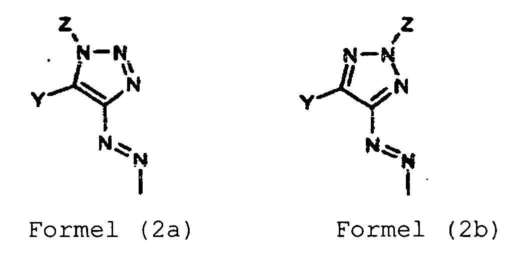 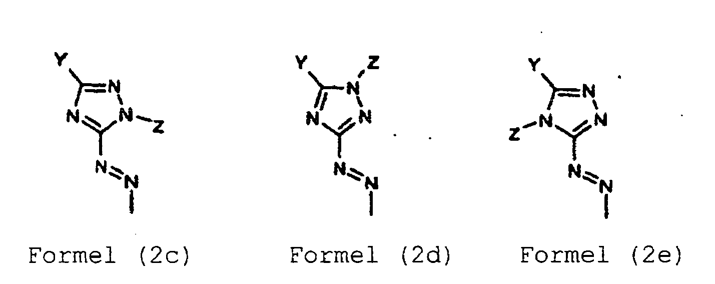 wobei
Z H und
Y CO₂H ist;
vorausgesetzt, dass die Verbindung keinem der Folgenden:
(h) einem Kupfer(II)chelat von 3-Carboxy-1,2,4-triazol-(5-azo-2)-1,8-dihydroxynaphthalin-3,6-disulfonsäure;
(i) einem Kupfer(II)chelat von 2,7-Bis-(5,3-carboxy-1,2,4-triazolazo)-1,8-dihydroxynaphthalin-3,6-disulfonsäure;
(j) einem Kupfer(II)-, Nickel(II)- oder Cobalt(II)chelat von 3-Carboxy-1,2,4-triazol-(5-azo-2)-1-hydroxy-8-aminonaphthalin-3,6-disulfonsäure;
(g) einem Kupfer(II)chelat von 3-Carboxy-1,2,4-triazol-(5-azo-1)-p-anisidid-2-hydroxy-3-napthoesäure; oder
(b) einem Kupfer(II)- oder Nickel(II)chelat von 3-Carboxy-1,2,4-triazol-(5-azo-1)-2-hydroxynaphthalin-3, 6-,disulfonsäure
entspricht.

17. Verbindung der Formel (1a) oder ein Salz davon: 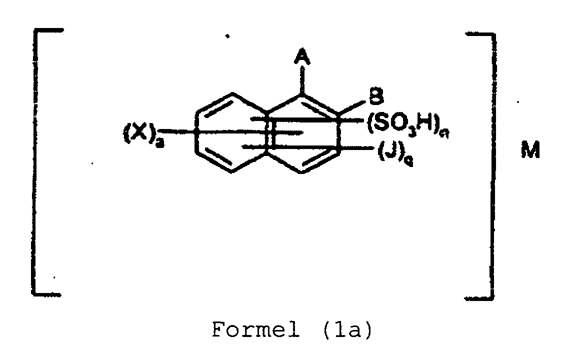 wobei die Formelglieder jeweils folgende Bedeutung haben:
n und a sind jeweils unabhängig voneinander 0, 1, 2, 3 oder 4;
q ist 1, 2, 3 oder 4;
(a+q+n) ist 1, 2, 3 oder 4;
A und B sind zum einen OH und zum anderen eine Azotriazolgruppe;
X ist jeweils unabhängig voneinander ein von H verschiedener Substituent, Sulfonamido, Carboxy, Sulfo und Carbonamido;
J ist eine Sulfonamidogruppe und
M ist ein Metall oder Bor.

18. Verbindung nach Anspruch 17 der Formel (1a-2) oder ein Salz davon: 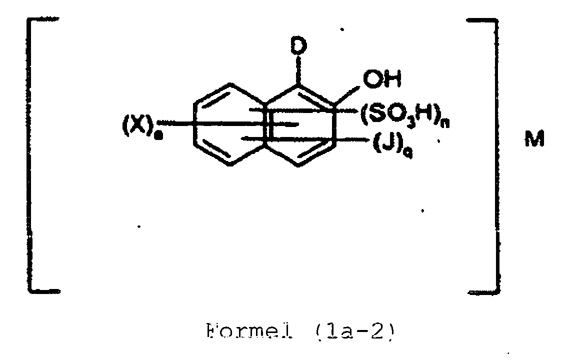 wobei
D eine Azotriazolgruppe;
q 1 oder 2;
n 1 oder 2;
a 0 oder 1;
M ein Metall ist und
X und J die in Anspruch 17 genannte Bedeutung haben.

19. Verbindung nach Anspruch 17 der Formel (1a-3) oder (1a-4) oder ein Salz davon: 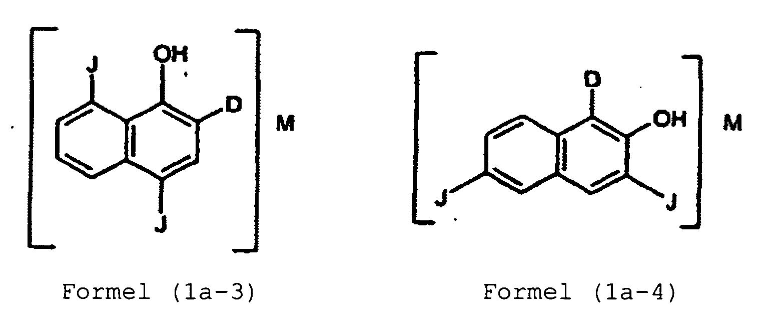 wobei
D eine Azotriazolgruppe ist und M und J die in Anspruch 17 genannte Bedeutung haben.

20. Metallchelatverbindung der Formel (1c-1) oder Salz davon: 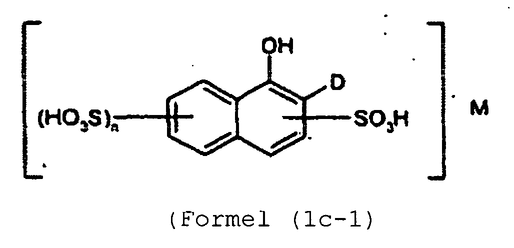 wobei
D eine Azotriazolgruppe;
n 1 oder 2 und
M Nickel ist;
ausgenommen das Nickel(II)chelat der 3-Carboxy-1,2,4-triazol-(5-azo-2)-1-hydroxy-8-aminonaphthalin-3,6-disulfonsäure.

21. Verbindung nach Anspruch 20 mit einer Sulfonsäuregruppe in 4-Stellung des Naphthylenrings und einer Sulfonsäuregruppe in 8-Stellung des Naphthylenrings, wobei D in 2-Stellung des Naphthylenrings steht.

22. Metallchelatverbindung der Formel (1c-2): 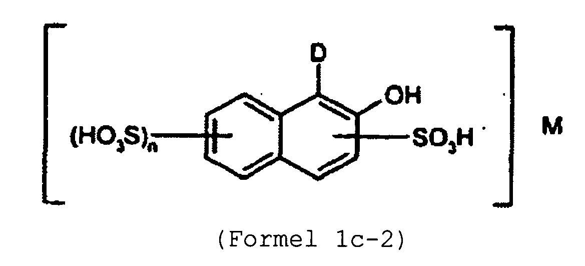 wobei
D eine Azotriazolgruppe;
n 1 oder 2 und
M Nickel ist;
vorausgesetzt, dass eine Sulfonsäuregruppe in 3-Stellung am Naphthylenring und eine Sulfonsäuregruppe in 7-Stellung am Naphthylenring steht, wobei D in 1-Stellung steht.

23. Metallchelatverbindung der Formel (1c-3) oder (1c-4) oder ein Salz davon: 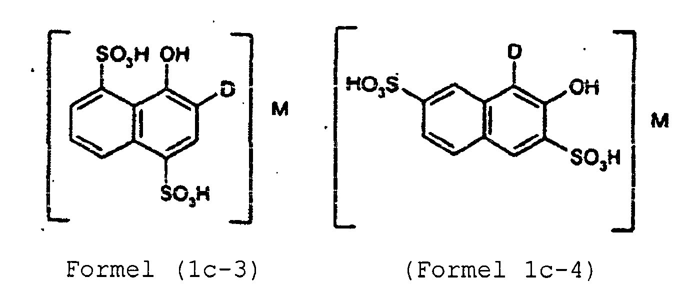 wobei M ein Metall und D eine Azotriazolgruppe der Formel (2a), (2b), (2c), (2d) oder (2e) ist: 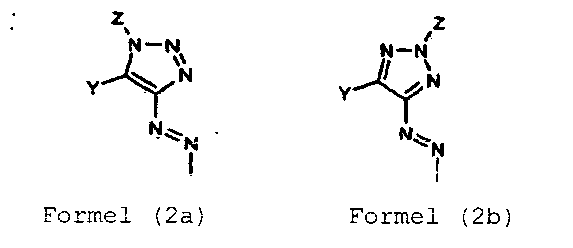 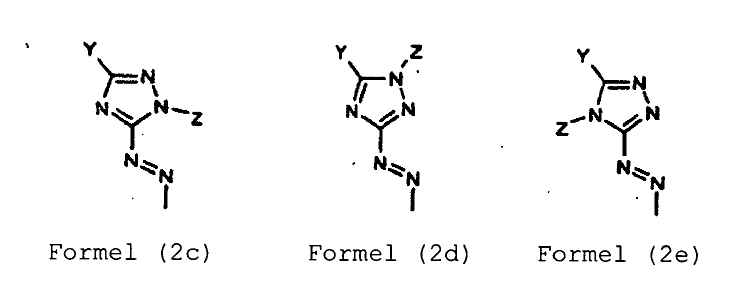 wobei Z H und Y CO₂H oder H ist.

24. Verbindung nach einem der Ansprüche 17 bis 22, bei der die Azotriazolgruppe der Formel (2a), (2b), (2c), (2d) oder (2e) entspricht: 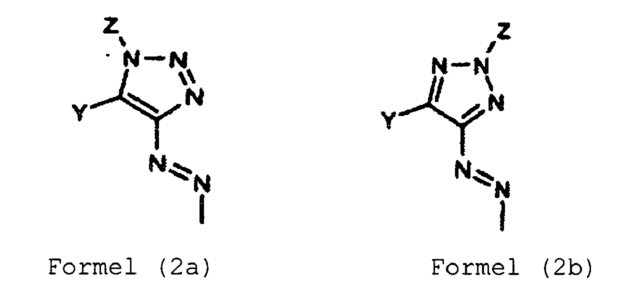 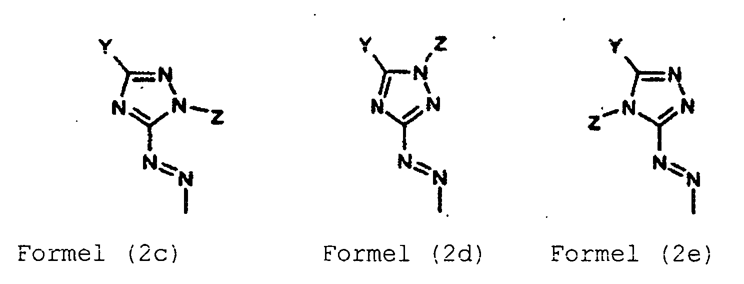 wobei Z H und Y CO₂H oder H ist.

25. Verbindung nach einem der Ansprüche 16 bis 24, bei der M Nickel ist.

26. Verbindung nach einem der Ansprüche 16 bis 25, bei der M mit dem in den eckigen Klammern stehenden Teil im Verhältnis 1:1 oder 1:2 koordinationsfähig ist.

27. Tinte, umfassend:
(a) eine Verbindung gemäß einem der Ansprüche 16 bis 26 oder eine Zusammensetzung gemäß Anspruch 15 und
(b) ein flüssiges Medium.

28. Tinte, umfassend:
(a) ein flüssiges Medium, umfassend ein nichtionisches Tensid; und
(b) eine Metallchelatverbindung der Formel (1) oder Salz davon: 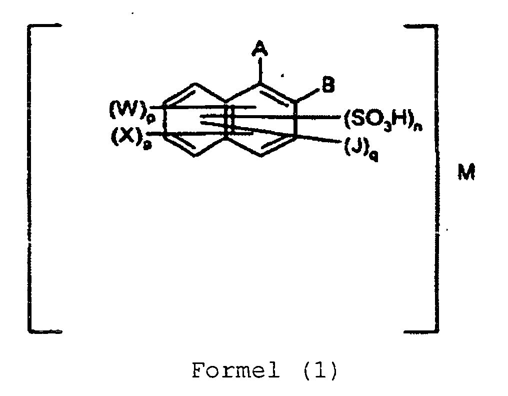 in der die Formelglieder jeweils folgende Bedeutung haben:
A und B ist zum einen OH und zum anderen eine Azotriazolgruppe;
W ist jeweils unabhängig voneinander eine Carboxy- oder Carbonamidogruppe;
X ist jeweils unabhängig voneinander ein von H verschiedener Substituent, Sulfonamido, Carboxy, Sulfo und Carbonamido;
J ist eine Sulfonamidogruppe;
M ist ein Metall oder Bor;
a, p, q und n sind jeweils unabhängig voneinander 0, 1, 2, 3 oder 4;
(p+q+a+n) sind 0, 1, 2, 3 oder 4,
vorausgesetzt, dass die Verbindung der Formel (1) kein Kupfer- oder Nickelchelat eines der Liganden a bis e oder ein Salz davon ist:

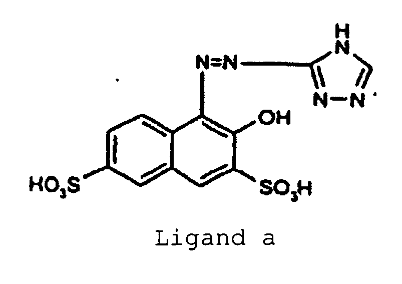

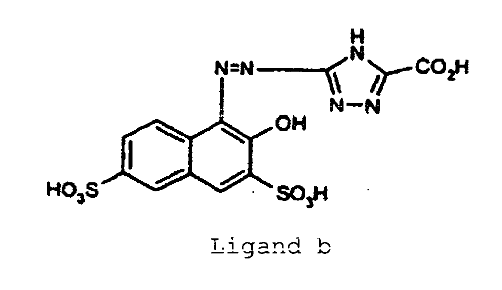

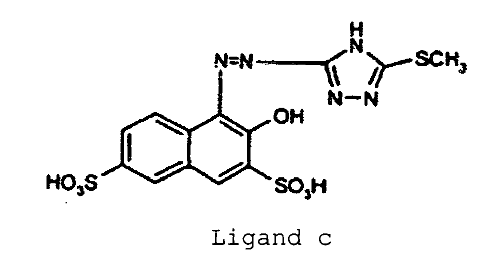

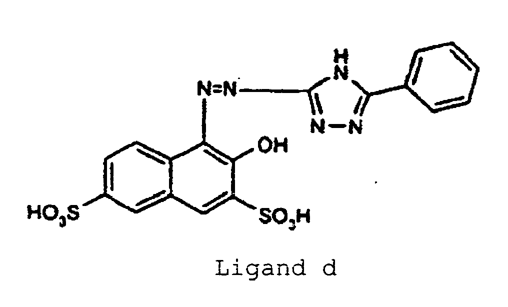

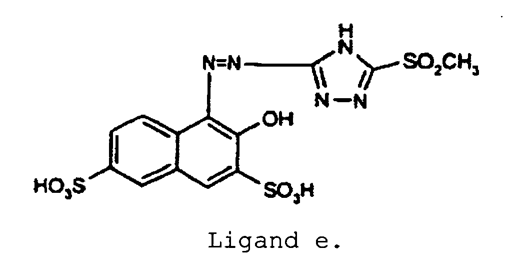

29. Tinte nach Anspruch 28, bei der die Verbindung der Formel (1) einem der Ansprüche 16 bis 26 entspricht.

30. Substrat, bedruckt mit einer Tinte gemäß Anspruch 27, 28 oder 29 oder nach dem Verfahren gemäß Anspruch 1.

31. Farbstrahldruckerpatrone, umfassend Kammer und Tinte, bei der die Tinte in der Kammer vorliegt und eine Verbindung gemäß einem der Ansprüche 16 bis 26 enthält.

32. Farbstrahldrucker, enthaltend eine Farbstrahldruckerpatrone, bei der die Farbstrahldruckerpatrone Anspruch 31 entspricht.

## Revendications

1. Procédé d'impression d'une image sur un substrat qui comprend l'application au moyen d'une imprimante à jet d'encre thermique d'une encre qui contient un composé de chélate de métal de la formule (1) ou un sel de celui-ci : 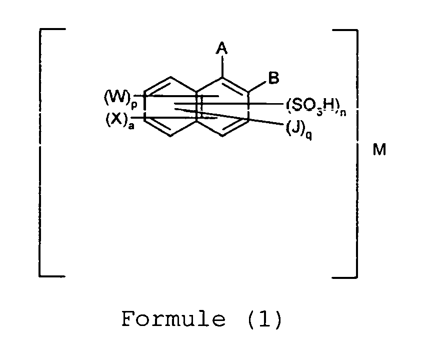 dans laquelle :
un parmi A et B représente un groupe OH et l'autre représente un groupe azotriazole ;
chaque W représente indépendamment un groupe carboxy ou carbonamido ;
chaque X représente indépendamment un substituant autre qu'un atome H, un groupe sulfonamido, carboxy, sulfo et carbonamido ;
J représente un groupe sulfonamido ;
M représente un métal ou un bore ;
a, p, q et n valent chacun indépendamment 0, 1, 2, 3 ou 4 ; et
(p+q+a+n) vaut 0, 1, 2, 3 ou 4.

2. Procédé selon la revendication 1, dans lequel :
p vaut 0, 1, 2, 3 ou 4 ;
a, q et n valent chacun indépendamment 0, 1, 2, 3 ou 4 ; et
(p+q+a+n) vaut 1, 2, 3 ou 4.

3. Procédé selon la revendication 1, dans lequel le composé est de la formule (1a) ou un sel de celui-ci : 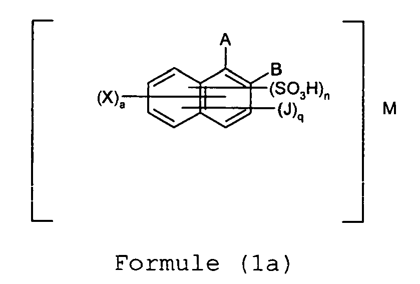 dans laquelle :
n et a valent chacun indépendamment 0, 1, 2, 3 ou 4;
q vaut 1, 2, 3 ou 4 ;
(a+q+n) vaut 1, 2, 3 ou 4 ; et
A, B, X, J et M sont tels que définis dans la revendication 1.

4. Procédé selon la revendication 1, dans lequel le composé est de la formule (1b) ou un sel de celui-ci : 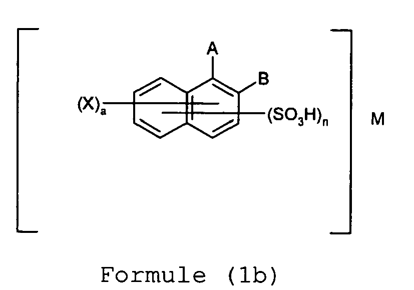 dans laquelle :
a vaut 1, 2, 3 ou 4 ;
n vaut 0, 1, 2, 3 ou 4 ;
(a + n) vaut 1, 2, 3 ou 4 ; et
A, B, X et M sont tels que définis dans la revendication 1.

5. Procédé selon la revendication 1, dans lequel le composé est de la formule (1c) ou un sel de celui-ci : 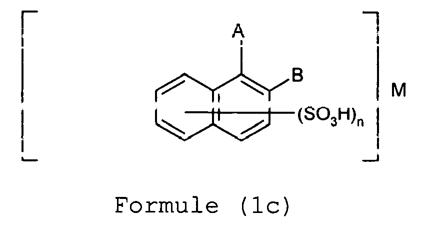 dans laquelle :
n vaut de 0 à 4 ; et
A, B et M sont tels que définis dans la revendication 1.

6. Procédé selon l'une quelconque des revendications précédentes, dans lequel le groupe azotriazole est de la formule (2a), (2b), (2c), (2d) ou (2e) : 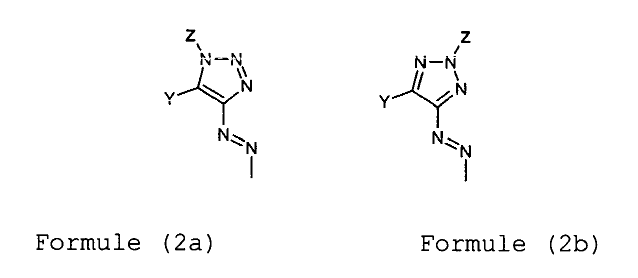 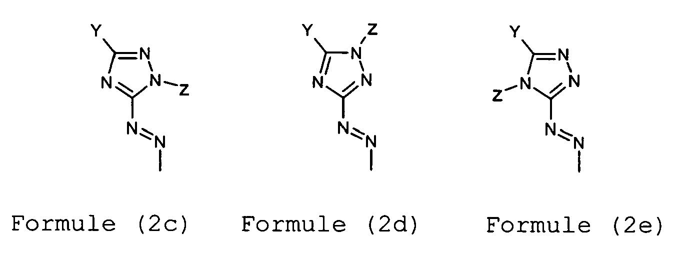 dans lesquelles :
Z représente un atome H, -Br, -Cl, -F, un groupe-OH, -CN, -NO₂, -PO₃H₂, -SO₃H, -CO₂H, un groupe phosphoramide éventuellement substitué, un groupe alkyle éventuellement substitué, un groupe alcényle éventuellement substitué, un groupe alcynyle éventuellement substitué, un groupe aryle éventuellement substitué, un groupe aralkyle éventuellement substitué, un groupe -SR¹, -SO₂R¹, -SO₂NR²R³, -SOR¹, -OR¹, -C(O)R¹, -C(O)OR¹,-C(O)NR²R³, -NR²R³, -NHCOR¹ ; et
Y représente un groupe CF₃ ou l'un quelconque des groupes définis pour Z ; et
dans laquelle :
R¹, R² et R³ représentent chacun indépendamment un atome H, un groupe alkyle éventuellement substitué, un groupe alcényle éventuellement substitué, un groupe alcynyle éventuellement substitué, un groupe aryle éventuellement substitué ou un groupe aralkyle éventuellement substitué; ou
R² et R³ pris ensemble avec l'atome d'azote auquel ils sont fixés forment un noyau à cinq ou six chaînons éventuellement substitué.

7. Procédé selon l'une quelconque des revendications précédentes, dans lequel M représente un nickel.

8. Procédé selon la revendication 6, dans lequel Z représente un atome H et Y représente un groupe CO₂H ou un atome H.

9. Procédé selon la revendication 6, dans lequel Z représente un atome H, Y représente un groupe CO₂H ou un atome H et M représente un nickel.

10. Procédé selon la revendication 3, 4 ou 5, dans lequel M représente un nickel et le groupe azotriazole est de la formule (2a), (2b), (2c), (2d) ou (2e) : 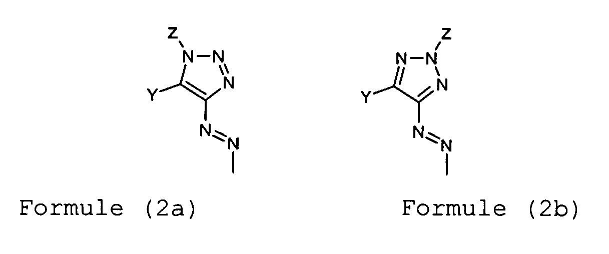 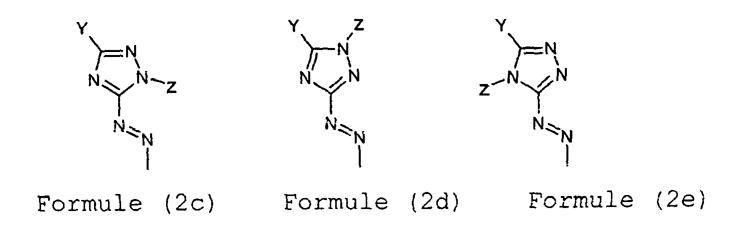 dans lesquelles Z représente un atome H et Y représente un groupe CO₂H ou un atome H.

11. Procédé selon l'une quelconque des revendications 1 à 10, dans lequel le composé de chélate de métal n'est pas un chélate de cuivre ou de nickel de l'un quelconque des ligands a à e ou l'un quelconque des sels de ceux-ci :

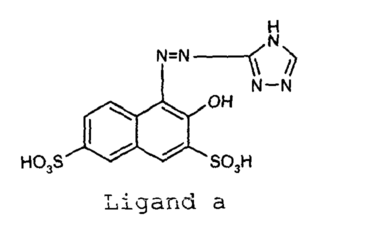

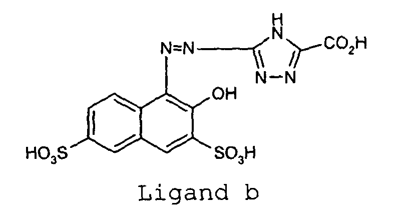

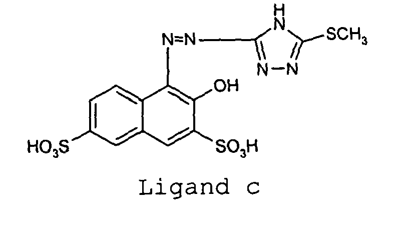

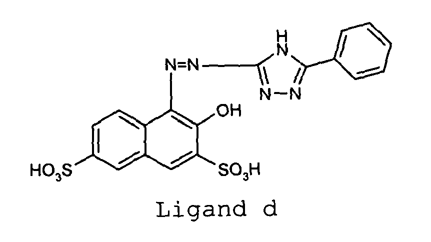

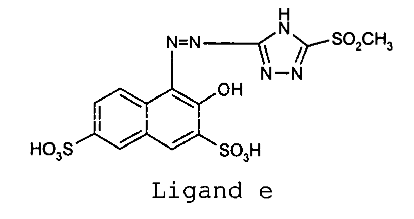

12. Procédé selon la revendication 1 ou 2, dans lequel (p+q+a+n) vaut 2 ou 3.

13. Procédé selon l'une quelconque des revendications précédentes, dans lequel l'imprimante à jet d'encre applique l'encre au substrat sous la forme de gouttelettes qui sont éjectées par un petit orifice sur le substrat.

14. Composition comprenant :
(a) un ou plusieurs composés de chélate de métal de la formule (1) ou un sel de ceux-ci : 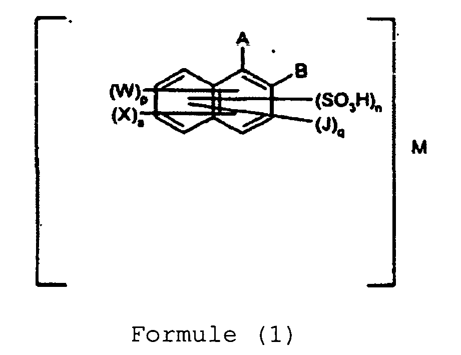 dans laquelle :
un parmi A et B représente un groupe OH et l'autre représente un groupe azotriazole ;
chaque W représente indépendamment un groupe carboxy ou carbonamido ;
chaque X représente indépendamment un substituant autre qu'un atome H, un groupe sulfonamido, carboxy, sulfo et carbonamido ;
J représente un groupe sulfonamido ;
M représente un métal ou un bore ;
a, p, q et n valent chacun indépendamment 0, 1, 2, 3 ou 4 ; et
(p+q+a+n) vaut 0, 1, 2, 3 ou 4; et
(b) un ou plusieurs colorants xanthènes, azo ou diazo solubles dans l'eau autres qu'un composé selon (a) ;
à condition que le composé de la formule (1) ne soit pas un chélate de cuivre ou de nickel de l'un quelconque des ligands a à e ou l'un quelconque des sels de ceux-ci :

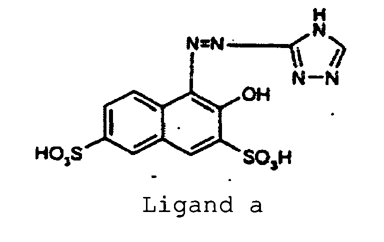

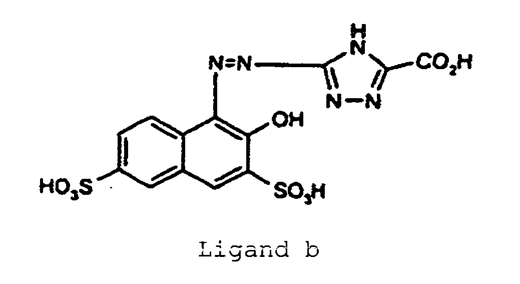

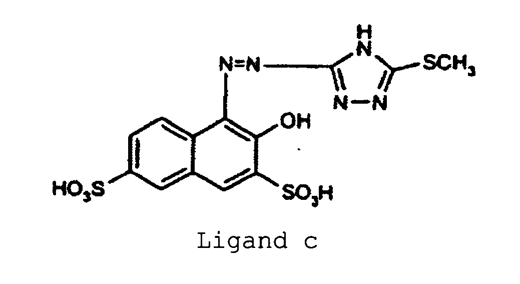

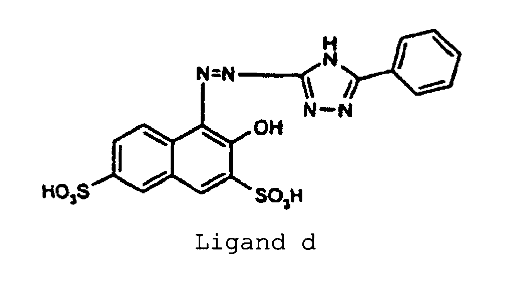

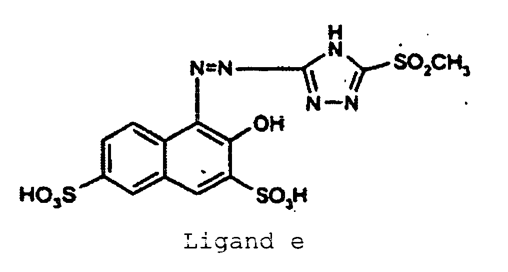

15. Composition selon la revendication 14, dans laquelle le colorant soluble dans l'eau représenté par (b) est un colorant magenta soluble dans l'eau.

16. Composé de chélate de métal de la formule (1) et les sels de celui-ci : 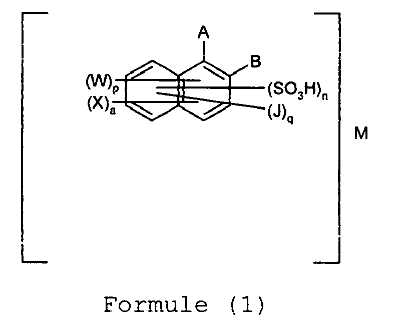 dans laquelle :
chaque W représente indépendamment un groupe carboxy ou carbonamido ;
chaque X représente indépendamment un substituant autre qu'un atome H, un groupe sulfonamido, carboxy, sulfo et carbonamido ;
J représente un groupe sulfonamido ;
M représente un métal ou un bore ;
a, p, q et n valent chacun indépendamment 0, 1, 2, 3 ou 4 ; et
(p+q+a+n) vaut 0, 1, 2, 3 ou 4;
un parmi A et B représente un groupe OH et l'autre représente un groupe azotriazole de la formule (2a), (2b), (2c), (2d) ou (2e) : 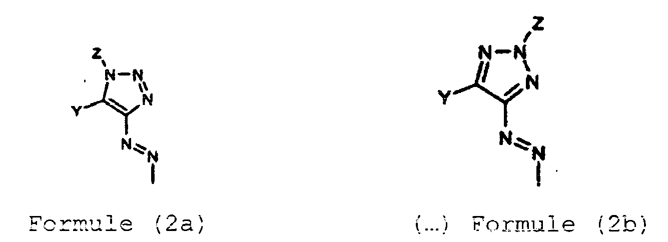 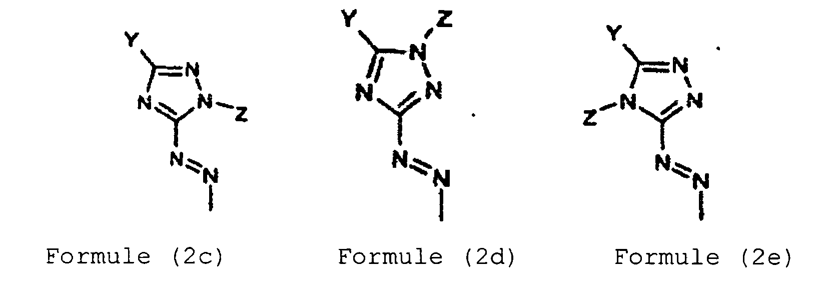
dans lesquelles :
Z représente un atome H ; et
Y représente un groupe CO₂H ;
à condition que le composé ne soit pas un des suivants :
(h) un chélate de cuivre (II) de l'acide 3-carboxy-1,2,4-triazole-(5-azo-2)-1,8-dihydroxynaphtalène-3,6-disulfonique ;
(i) un chélate de cuivre (II) de l'acide 2,7-bis-(5,3-carboxy-1,2,4-triazole-azo)-1,8-dihydroxynaphtalène-3,6-disulfonique ;
(j) un chélate de cuivre (II), de nickel (II) ou de cobalt (II) de l'acide 3-carboxy-1,2,4-triazole-(5-azo-2)-1-hydroxy-8-aminonaphtalène-3,6-disulfonique ;
(g) un chélate de cuivre (II) de l'acide 3-carboxy-1,2,4-triazole-(5-azo-1)-p-anisidide-2-hydroxy-3-naphtoïque ; ou
(b) un chélate de cuivre (II) ou de nickel (II) de l'acide 3-carboxy-1,2,4-triazole-(5-azo-1)-2-hydroxy-naphtalène-3,6-disulfonique.

17. Composé de la formule (la) ou un sel de celui-ci : 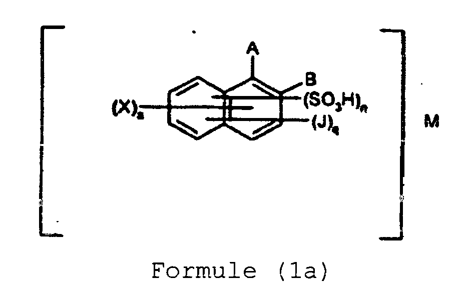 dans laquelle :
n et a valent chacun indépendamment 0, 1, 2, 3 ou 4 ;
q vaut 1, 2, 3 ou 4 ;
(a+q+n) vaut 1, 2, 3 ou 4 ;
un parmi A et B représente un groupe OH et l'autre représente un groupe azotriazole ;
chaque X représente indépendamment un substituant autre qu'un atome H, un groupe sulfonamido, carboxy, sulfo et carbonamido ;
J représente un groupe sulfonamido ; et
M représente un métal ou un bore.

18. Composé selon la revendication 17 de la formule (1a-2) ou un sel de celui-ci : 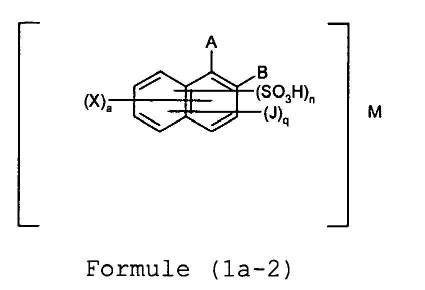 dans laquelle :
D représente un groupe azotriazole ;
q vaut 1 ou 2 ;
n vaut 1 ou 2 ;
a vaut 0 ou 1 ;
M représente un métal ; et
X et J sont tels que définis dans la revendication 17.

19. Composé selon la revendication 17 de la formule (la-3) ou (la-4) ou un sel de celui-ci : 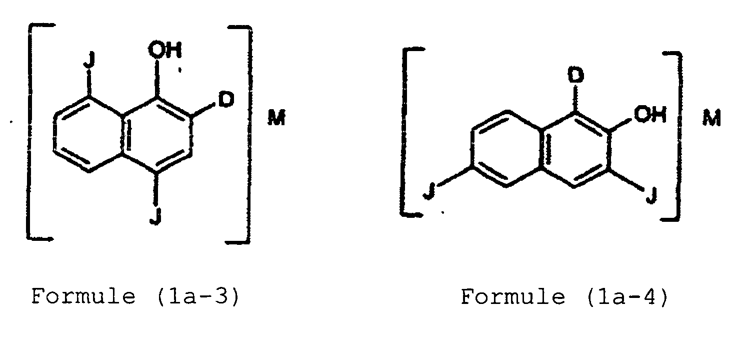 dans lesquelles :
D représente un groupe azotriazole et M et J sont tels que définis dans la revendication 17.

20. Composé de chélate de métal de la formule (1c-1) ou un sel de celui-ci : 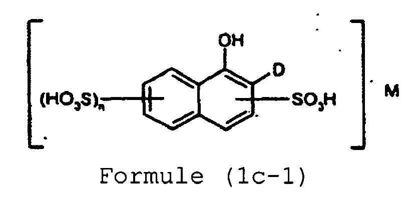 dans laquelle :
D représente un groupe azotriazole ;
n vaut 1 ou 2 ; et
M représente un atome de nickel ;
à l'exception du chélate de nickel (II) de l'acide 3-carboxy-1,2,4-triazole-(5-azo-2)-1-hydroxy-8-aminonaphtalène-3,6-disulfonique.

21. Composé selon la revendication 20, lequel possède un groupe acide sulfonique à la position 4 sur le noyau naphtylène et un groupe acide sulfonique à la position 8 sur le noyau naphtylène, par rapport à D qui est à la position 2 sur le noyau naphtylène.

22. Composé de chélate de métal de la formule (1c-2) : 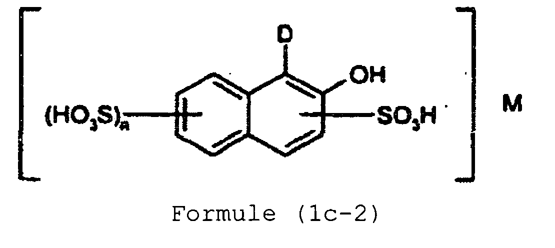 dans laquelle :
D représente un groupe azotriazole ;
n vaut 1 ou 2 ; et
M représente un atome de nickel ;
à condition qu'il y ait un groupe acide sulfonique à la position 3 sur le noyau naphtylène et un groupe acide sulfonique à la position 7 sur le noyau naphtylène, par rapport à D qui est à la position 1.

23. Composé de chélate de métal de la formule (1c-3) ou (1c-4) ou un sel de celui-ci : 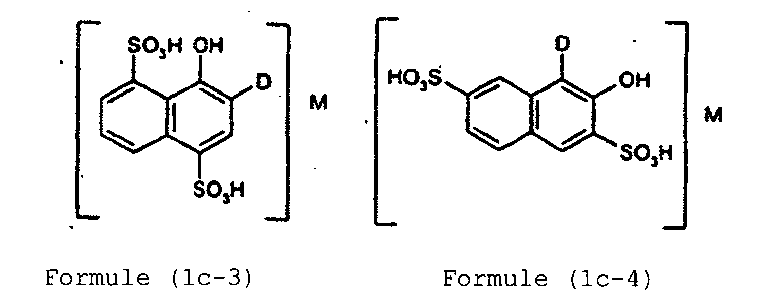 dans lesquelles M représente un métal et D représente un groupe azotriazole de la formule (2a), (2b), (2c), (2d) ou (2e) : 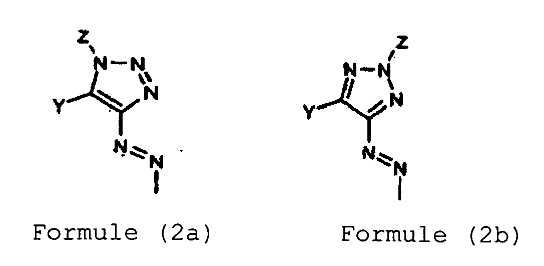 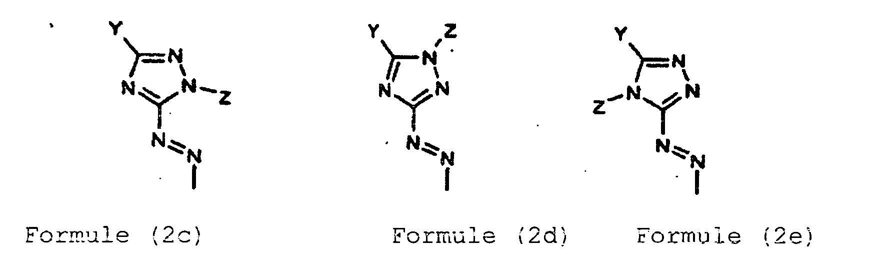 dans lesquelles Z représente un atome H et Y représente un groupe CO₂H ou un atome H.

24. Composé selon l'une quelconque des revendications 17 à 22, dans lequel le groupe azotriazole est de la formule (2a), (2b), (2c), (2d) ou (2e) : 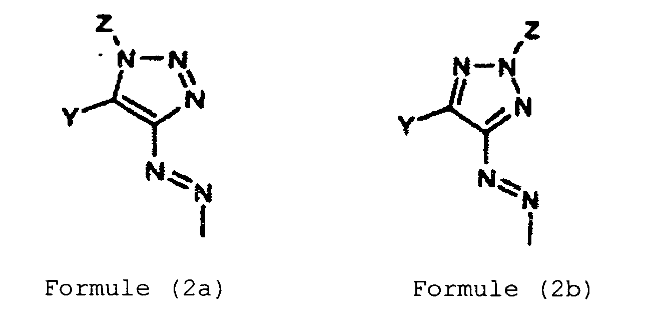 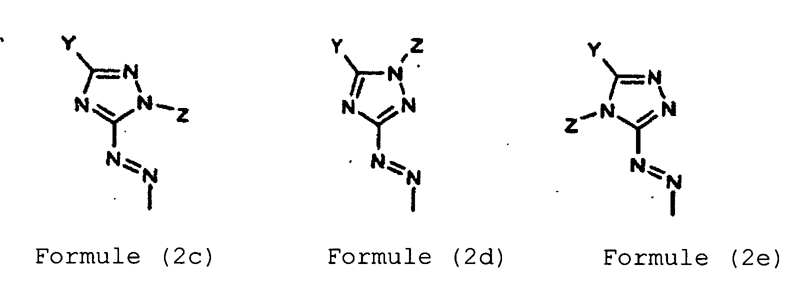 dans lesquelles Z représente un atome H et Y représente un groupe CO₂H ou un atome H.

25. Composé selon l'une quelconque des revendications 16 à 24, dans lequel M représente un atome de nickel.

26. Composé selon l'une quelconque des revendications 16 à 25, dans lequel M est capable de coordonner avec la partie entre crochets dans un rapport de 1:1 ou de 1:2.

27. Encre comprenant :
(a) un composé selon l'une quelconque des revendications 16 à 26, ou une composition selon la revendication 15 ; et
(b) un milieu liquide.

28. Encre comprenant :
(a) un milieu liquide comprenant un agent tensioactif non ionique ; et
(b) un composé de chélate de métal de la formule (1) ou un sel de celui-ci : 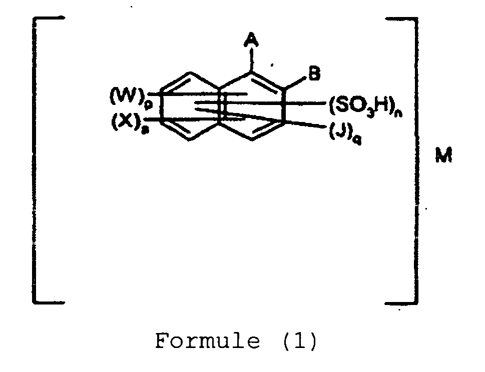
dans laquelle :
un parmi A et B représente un groupe OH et l'autre représente un groupe azotriazole ;
chaque W représente indépendamment un groupe carboxy ou carbonamido ;
chaque X représente indépendamment un substituant autre qu'un atome H, un groupe sulfonamido, carboxy, sulfo et carbonamido ;
J représente un groupe sulfonamido ;
M représente un métal ou un bore ;
a, p, q et n valent chacun indépendamment 0, 1, 2, 3 ou 4 ; et
(p+q+a+n) vaut 0, 1, 2, 3 ou 4
à condition que le composé de la formule (1) ne soit pas un chélate de cuivre ou de nickel de l'un quelconque des ligands a à e ou l'un quelconque des sels de ceux-ci :

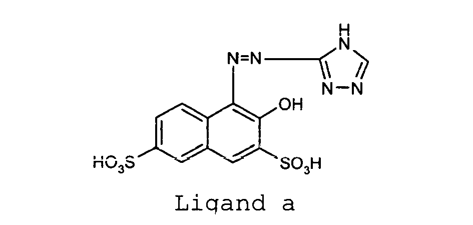

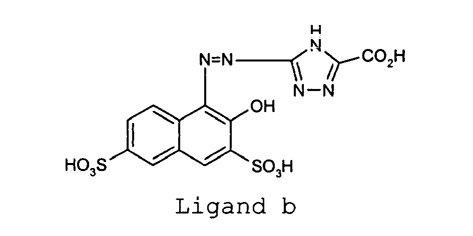

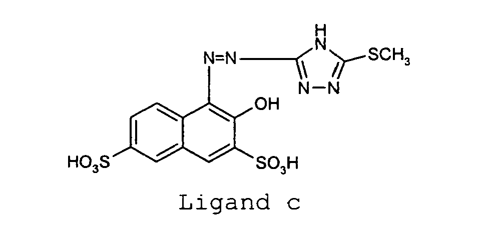

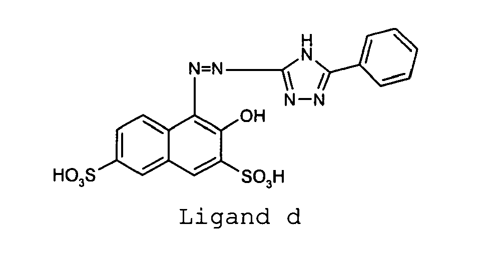

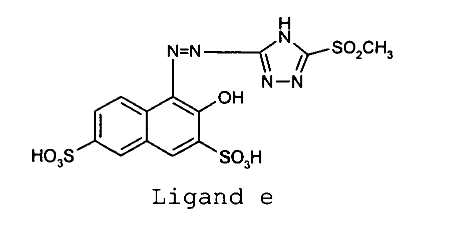

29. Encre selon la revendication 28, dans laquelle le composé de la formule (1) est tel que défini dans l'une quelconque des revendications 16 à 26.

30. Substrat imprimé avec une encre selon la revendication 27, 28 ou 29, ou au moyen du procédé selon la revendication 1.

31. Cartouche d'imprimante à jet d'encre comprenant une chambre et une encre, dans laquelle l'encre est présente dans la chambre et l'encre contient un composé selon l'une quelconque des revendications 16 à 26.

32. Imprimante à jet d'encre contenant une cartouche d'imprimante à jet d'encre, dans laquelle la cartouche d'imprimante à jet d'encre est telle que définie dans la revendication 31.
